Europäisches Patentamt

European Patent Office

Office européen des brevets

(19)

(11) Publication number : **0 480 737 A2**

(12) **EUROPEAN PATENT APPLICATION**

(21) Application number : **91309355.5**

(22) Date of filing : **10.10.91**

(51) Int. Cl.⁵ : **G01S 13/87, G01S 7/03, G01S 7/28, G01S 7/285**

(30) Priority : **10.10.90 US 595141**

(43) Date of publication of application : **15.04.92 Bulletin 92/16**

(84) Designated Contracting States : **DE FR GB IT NL**

(71) Applicant : **TEXAS INSTRUMENTS INCORPORATED**
**13500 North Central Expressway**
**Dallas Texas 75265 (US)**

(72) Inventor : **Logan, Russell H.**
**430 Fieldwood**
**Richardson, TX 75081 (US)**
Inventor : **Dittrich, Edwin W.**
**2707 Woodstream**
**McKinney, TX 75079 (US)**
Inventor : **Birleson, Stanley V.**
**Route 1, Box 748**
**Quinlan, TX 75474 (US)**
Inventor : **Heilmeier, George H.**
**7120 Tophill Circle**
**Dallas, TX 75248 (US)**

(74) Representative : **Blanco White, Henry Nicholas et al**
**ABEL & IMRAY Northumberland House**
**303-306 High Holborn**
**London WC1V 7LH (GB)**

(54) **Digital radar system and method.**

(57) A digital radar system (10) digitally encodes inputs and outputs associated with radar signals. Digital radar system (10) comprises bandpass filter (22), analog-to-digital converter (26), and digital beamforming processor (36). Fiber optics manifold (30) distributes signals within digital radar system (10). Digital beam steering processor and synchronizer (40) processes and generates synchronizing signals. Transmitter/receiver modules (14) synthesize independent radar signals and communicate radar signals to digital radar system (10). Preselection and preamplifying circuitry (20) preselects and preamplifies a certain aspect of the radar signals. Hilbert transform (28) communicates with converter (26) to transform digital signals to digital complex sample signals. Baseband transform filter (32) transforms digital complex sample signals to baseband complex sample signals. Low pass filter (34) filters and communicates filtered sample signals to beamforming processor (36).

FIG. 1

EP 0 480 737 A2

## TECHNICAL FIELD OF THE INVENTION

The present invention relates in general to a digital radar system and method, and more particularly to a system and method for digitally encoding radar system operation and control inputs and outputs.

## BACKGROUND OF THE INVENTION

Since its initial conception and deployment in World War II, radar has served as a principal technology for airborne surveillance, detection, and ranging. Throughout these years radar technologies have continued to mature. The availability of coherent circuits, the rapid evolution of solid state circuits and devices, and the increased use of digital electronics have greatly expanded the capabilities of radars.

The continued development of the new generation radar systems using advanced technologies, however, is limited by conventional antennas that use analog beamformers. One limitation is that radar systems with analog beamformers are not compatible with conformal surfaces that a particular system may need to use (e.g., as a part of an advanced weapons system profile). Moreover, the new generation of systems encumbered by the limitation of analog beamformers require larger power apertures that push air conditioning installation capacity, prime power availability, and cooling capability of these systems beyond practical limits. These limitations of analog beamforming antennas will become even more pronounced as radar system technologies progress.

Advanced technologies for military applications must also consider the changing threat to which a radar system must respond. For example, enemy deployment of very low observable (VLO) bombers, fighters, and cruise missiles will shorten detection ranges and reduce reaction time of present day military air defense systems to the extent that they will become ineffectual. Larger antennas, higher transmit powers, reduced RF losses, lower noise figures, and more processing gain can regain some of the performance reduction that VLO threats cause. Active element, solid state phased array technologies are sufficiently mature today so that military radar manufacturers can field highly efficient, high powered radars to counter the near-term threat. However, extending detection ranges by using larger antennas and more transmit power becomes impractical at some point. At that point, military radar systems will require additional techniques to counter the far-term military threat.

The most apparent need of future radar systems is the detection and targeting of stealth-enabled vehicles in an extremely hostile ECM environment. Other than the obvious requirement for the highest possible loop gain, there are several core attributes that any radar system satisfying this need must possess. Coherence and stability requirements of such systems challenge the state-of-the-art. The systems must provide adaptive beamforming and adaptive nulling for optimum performance against ECM. Management of the radar aperture for best performance against multiple targets is yet another core attribute that future radars must possess.

There is a need for a radar system with the ability to detect and target stealth-enabled vehicles in an extremely hostile environment. There is a need for a radar system that provides coherent and stable operation not available in analog radar systems. A need exists for a radar system providing adaptive beamforming and nulling not compatible with conventional analog beamforming radar systems. Furthermore, a need exists for a radar system with stealth detection capability.

Conventional antennas with analog beamformers limit the performance of currently deployed military radar systems. Additional limitations of conventional radar systems that affect military applications include the fact that as target radar cross section (RCS) levels decrease, radar-jamming systems require less jamming power to be effective. This problem drives conventional jammer nulling techniques beyond practical limits. Furthermore, long-range target searching over wide angular sectors is incompatible with very narrow beamwidths. To a large extent, this is because the required "burn pulses" that these techniques require drastically restrict coherent dwell times. Moreover, cooperative bi-static techniques which depend on a number of receive beams to cover the area of search uncertainty are not practical with analog techniques. Present radars do not have multiple receive beams to reduce radar on-time and, thereby, minimize the threat that enemy anti-radar missile systems impose. Furthermore, for very high frequency radars (high GHz or even terahertz) the analog beamforming techniques cannot avoid large signal distribution losses and inconvenient distribution and summing manifolds. Thus, there is a need for a radar system that overcomes these limitations to respond to the far-term military threat.

Known radar systems based on conventional designs confront more needs than their system architectures can satisfy. For example, countering the VLO problem will likely require a dozen new major radar development programs for the U.S. military services over the next decade; an extremely costly effort. The typical radar development cycle of four to six years simply cannot keep pace with the fast tempo spiral that new radar systems and their counters create. Thus, there is the need for a different approach to radar systems design that adopts a standard architectural definition for all the key components common to all radar systems. By establishing a common system architecture that includes a direct digital synthesizer and applies digital techniques in a much more pervasive manner, radar systems design and engineering efforts can respond to proliferating system needs. Thus, there is a need for a radar system that employs digital techniques to system design and engineering problems.

## SUMMARY OF THE INVENTION

According to one aspect of the present invention, there is provided a digital radar system for digitally encoding inputs and outputs associated with radar signals. The system comprises a transmit/receive module for transmitting and receiving the radar signals. An analog-to-digital converter communicates with the transmit/receive module to immediately convert between analog and digital signals. A digital beamforming processor communicates with the converter to form multiple beams associated with the radar signals. Additionally, a fiber optics manifold distributes the signals within the digital radar system.

Another aspect of the present invention includes a digital radar system wherein digitally encoded signals provide radar output phase, amplitude, timing and frequency control, and digitally encoded signals represent radar return signals. According to this aspect of the invention, at least one transmit/receive module communicates a predetermined aspect of the radar signals. An analog-to-digital converter directly communicates with the transmit/receive module to convert between analog and digital signals. A digital beamforming processor communicates with the converter to form multiple beam signals associated with the radar signals. Additionally, a digital beam steering processor and synchronizer processes a plurality of beam steering signals and generates a plurality of synchronizing signals. In this aspect, a fiber optics manifold distributes the synchronizing signals within the system.

A technical advantage of the invention is that it provides a radar system which can respond to the rapidly proliferating military needs for improved radar sensors. The digital radar system architecture of the present invention provides a robust systems-engineering approach to true, simultaneous, multiple-beam search/track with adaptive nulling of jamming signals. The present Invention provides improved performance against VLO targets in a scenario of one-against-many, where survivability demands passive/active and cooperative bi-static operation. Improved features of an all-digital architecture include enhanced ability to perform counter VLO sensing, cued search operations, adaptive nulling programming and operation, multiple beam surveillance, octave bandwidth sensing, tailored waveform generation and propagation, raid assessment analysis, noncooperative target identification, bi-static operations for various applications, generation/passive switching, distributed arrays for improved focusing and sensing, conformal arrays for enhanced system integration, simplified interconnection with existing and future platforms, and the elimination of RF/IF manifolds.

Another technical advantage is that the digital radar system of the present invention removes the complexity barrier of analog implementation and provides supple functional diversity inherent in digital techniques.

Another technical advantage of the present invention is that it provides for multiple independent receive beams as opposed to single and separate transmit and receive beams. Converting from analog-to-digital signals upon initial amplification of the received analog signals greatly simplifies the system architecture and eliminates the need that an analog system has for multiple coherent signal sources.

Yet another technical advantage of the present invention is that it provides a common architecture to satisfy radar system coherence and stability requirements. The programmable common architecture of the present invention also satisfies the need for diversity of timing, wave shapes and frequency agility among highly coherent selections. Furthermore, the present invention provides a flexible/programmable digital beam steering computer based on a common architecture to manage the radar for optimal performance against multiple targets.

Still another technical advantage of the digital radar system of the present invention is that it offers inherent redundancy of system sensing by an array of parallel receive and processing channels. A digital radar system, therefore, can be much more robust in terms of redundancy and graceful degradation features.

A further technical advantage of the present invention is the significant benefit of a shorter system development cycle. The comprehensive effort to provide a unified design approach, based on common architecture, that the present invention promotes may save expenditure of valuable resources by preventing replication of circuit, device, and software implementations that serve only uniquely configured systems. The digital radar techniques of the present invention can serve as essential core elements of common architecture components for future radar systems.

## BRIEF DESCRIPTION OF THE DRAWINGS

The invention, as well as modes of use and further advantages, is best understood by reference to the following description of illustrative embodiments when read in conjunction with the accompanying drawings.

FIGURE 1 is a schematic block diagram of a preferred embodiment of the present invention showing the technologies that the digital system radar employs by detailing one channel of a typical digital radar receiver;

FIGURE 2 is a schematic block diagram of a preferred embodiment of the present invention comprising a two-dimensional fully digital beamforming array;

FIGURE 3 is a schematic block diagram of a hybrid system using analog beamforming in one plane and digital beamforming in the other plane;

FIGURE 4 shows an alternative embodiment of the present invention incorporating a switch matrix between subarrays and the digital beamforming processing to permit dedication of subarrays for different radar functions within a single digital radar system;

FIGURES 5a-d exhibit certain aspects of a conventional analog beamforming array that the digital radar system of the present system overcomes; and

FIGURE 6 demonstrates the use of the digital radar system of the present invention for an advanced radar system surveillance application to a target space.

## DETAILED DESCRIPTION OF THE INVENTION

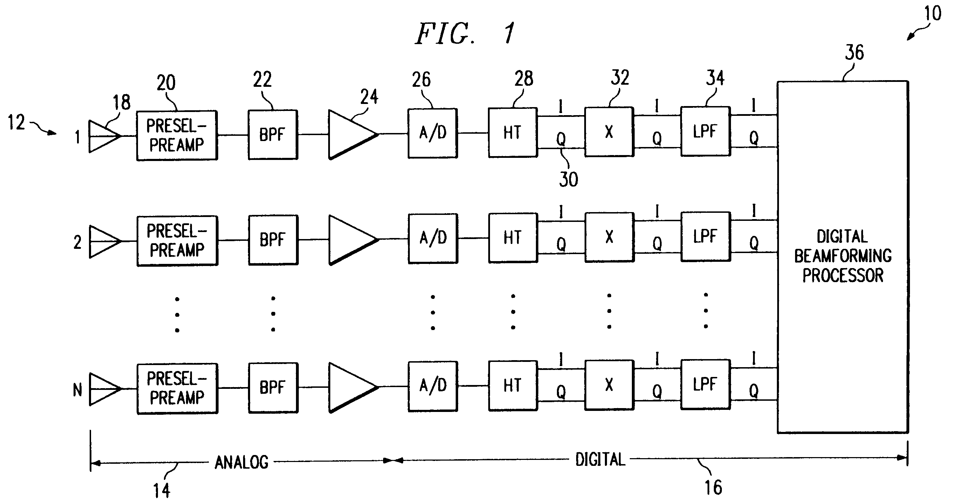

The preferred embodiment of the present invention is best understood by referring to FIGUREs 1-6 of the drawings, like numerals being used for like and corresponding parts of the various drawings.

FIGURE 1 is a schematic block diagram of a preferred embodiment of the present invention showing the technologies that digital radar system 10 employs by detailing the receive path of multiple independent channels 12. Each of these channels 12 comprises an analog transmit/receive module 14 and a digital portion 16. Each analog portion 14 of each channel comprises an antenna 18 that receives radar signals and directs them to preselect preamplifier 20. Preselect preamplifier 20 sends the received signals to bandpass filter 22, which directs a portion of the signals to amplifier 24. Amplifier 24 provides an input to analog-to-digital converter 26. Analog-to-digital converter 26 sends digital signals to Hilbert transform filter 28. Hilbert transform filter 28 sends a transformed set of complex I and Q signals via manifold 30 to baseband transform filter 32. Baseband transform filter 32 outputs a complex baseband signal to low pass filter 34, which provides filtered complex signals to digital beamforming processor 36.

A/D converter 26 may, in some versions, output I and Q digitized quadrature channels directly to the subsequent processors, without using a Hilbert transform filter and baseband transform filter.

In the preferred embodiment of the present invention, analog transmit/receive module 14 comprises an L-band transmitter/receiver of a frequency not greater than approximately, 2 GHz. In this architecture, the analog portion 14 should reduce the required sample rate for the analog-to-digital converter 26 to approximately 500 MHz or less. Preselect preamplifier 20 can be one of a number of preamplifiers that are presently available. The amplifiers, however, may require adaptation to fit the architecture of the digital radar system 10 of the present invention. Bandpass filter 22 applies a bandpass sampling approach. For this approach, bandpass filter 22 must provide good out-of-band rejection and good shape factors for the filter skirts. Other characteristics of the bandpass filter 22 are a function of the selected digital radar system 10 architecture. Bandpass filters using present microwave technology can provide the desired performance for this purpose. Amplifier 24 amplifies the output of bandpass filter 22 and may be any one of a number of transistor amplifiers capable of amplifying in the output bandwidth from bandpass filter 22.

Analog-to-digital converter 26 converts analog data at a rate sufficient for use by digital beamforming processor 36. Texas Instruments Incorporated, Dallas, Texas has developed a GaAs analog-to-digital converter (ADC) that satisfies the performance criteria set by beamforming processor 36. The preferred embodiment of the present invention uses GaAs circuitry which operates at a frequency of 2 MHz, and yields in 500 kHz I and Q data rate with a 400 kHz signal bandwidth. The specifications of that ADC are found at Appendix A to this application which is attached hereto.

By performing the analog-to-digital conversion function at the antenna element or subarray, less dynamic range is necessary than that required after the system forms the radar beam. As A/D converters increase in speed and performance capabilities using more advanced architectures, such converters are contemplated as within the scope of this. The A/D converter may, in some versions, output the I and Q digitized quadrature channels directly to the subsequent processors, without requiring a Hilbert transform and baseband transform filter.

Alter analog-to-digital conversion, in the preferred embodiment, Hilbert transform filter 28 converts the digital data to complex I and Q samples by using a Hilbert transform operation. The sample rate of this filter is the same as the analog-to-digital sample rate for ADC 26. For example, in the receive channel ol the present invention, Hilbert transform filter 28 sample frequency may need to be as high as 500 MHz.

After conversion to complex I and Q samples at Hilbert transform filter 28, and translation to baseband at baseband transform filter 32, the complex signal passes through digital low pass filter 34. Low pass filter 34 permits sampling at the required Nyquist rate for radar signal bandwidth. For most airborne radar applications, this sample rate will be 5 MHz or less. Either silicon ECL technology or GaAs technology can be used to implement filters at these clock frequencies. GaAs technology, however, provides for the best system performance for the speed-power product considerations of the present invention. The low pass filter only needs to operate at 1/4 the analog-to-digital sample rate, and GaAs technology can efficiently achieve the required speeds. The same filter structure that Hilbert transform filter 28 uses can be used for the low pass filter function.

After the I and Q signals are available at baseband from baseband transform filter 32, the system provides a signal path from all of the receive channels 12 to beamforming processor 36 and interconnects massively parallel processors within digital beamforming processor 36. Optical communications manifold 30 is immune to EMI/RFI, compatible with current and projected sample rates, reconfigurable, expandable, highly reliable, and fault tolerant. The preferred embodiment has a 25 MHz bandwidth and 54 dB dynamic range and outputs data at rates of up to 30 Gb/s. Optical manifold 30 can accommodate the intercommunications requirements of digital beamforming processor 36. Manifold 30 comprises optical detectors and emitters, fiber array mass termination and integration bundles, and may include one or more deformable mirror device spatial light modulators that Texas Instruments manufactures. These technologies are integrated for the purpose of the present invention.

U.S. Patent Nos. 4,596,992 and 4,710,732 to L.J. Hornbeck and 4,856,863 to J.B. Sampsell, all assigned to Texas Instruments, Incorporated, Dallas, Texas disclose spatial light modulators with essentially linear arrays or pixels including one or more deflectable beams which can be electronically controlled. Those U.S. Patents have related disclosures which are incorporated herein by reference. They disclose an optical interconnection network that uses a reflective spatial light modulator with optical fibers for input/output and imaging lenses. The optical networks possible through the use of the spatial light modulators of those U.S. Patents can achieve the performance levels that the digital radar system of the present invention requires.

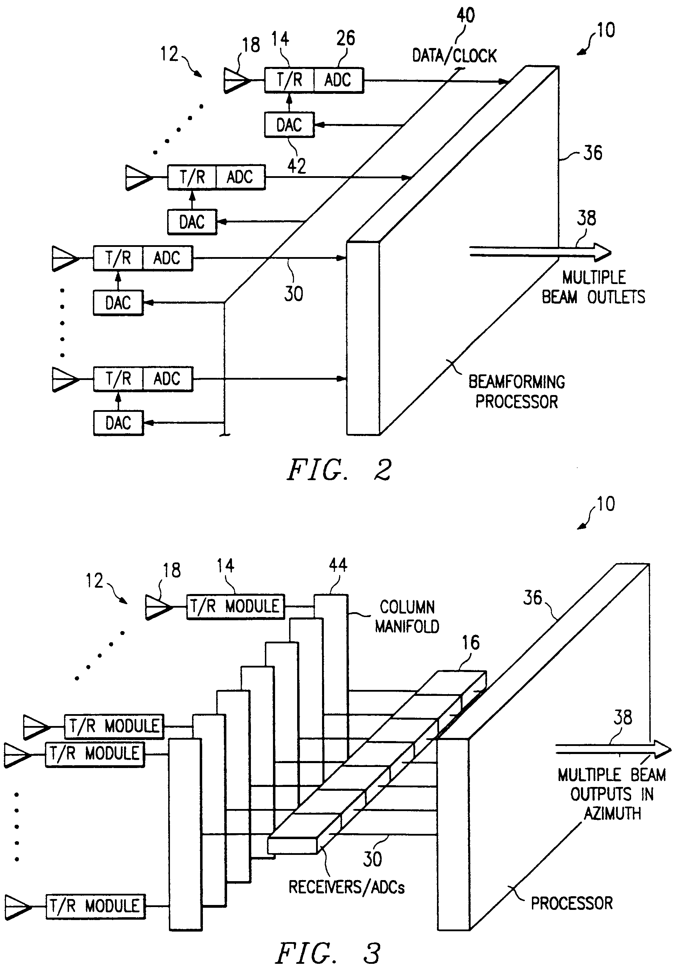

Digital beamforming processor 36 receives the final I and Q baseband signals from each of parallel receive channels. Digital beamforming processor 36, combines these signals to form multiple simultaneous independent beams 38 (see FIGURE 2). A beam-steering computer can generate weight vectors and apply these vectors directly to the beamformer 36. Alternatively, an adaptive beam controller can modify these vectors which provide real-time adaptive nulling to reduce undesired side lobe signals. The output 38 of the digital beamformer 36 can then be utilized with various techniques to enhance radar system operation and control.

The function of the digital beamformer processor 36 is to weight and sum the system 10 transmit/receive module 18 signals. A special purpose processor is the best choice, since the required operations are simple multiples, and processor 36 must operate at a high rate of speed, corresponding to the signal bandwidth. "Design Definition for a Digital Beamforming Processor," RADC-TR-88-86, April 1988 (NTIS No. AD 196983) describes a typical digital beamforming processor for use in a preferred embodiment of the present invention. The description of that publication is found at Appendix B to this application, which is attached hereto. That beamforming processor was developed by Texas Instruments Incorporated, Dallas, Texas and provides a 64-channel complex input, 9 bit, 25 MHz bandwidth processing capability. The beamformer of digital beamforming processor 36 is implemented in a CMOS device that uses 1.2 $\mu$m application specific integrated circuit (ASIC) chips designed for 50 MHz clock speeds.

Digital beamforming processor 36 comprises parallel processors that form simultaneous, independent output beams. The preferred digital beamforming processor 36 allows flexibility with respect to the number of beams formed. Alternatively, digital beamforming processor 36 can multiplex more beams with a proportionally reduced bandwidth. Multiplexing in this manner reduces the line count, but increases the required signal bandwidth. Data rates for the typical 64-channel processor described above are input of 30 Gb/s and output of 3 Gb/s. The processor performance level is up to $25 \times 10^9$ operations per second. This high computational capacity is achieved with a systolic processor architecture used on the quadratic residue number system (QRNS). This theoretical approach is highly efficient for multiplication and addition, and uses integer arithmetic to avoid round-off errors.

Digital beamforming processors having similar computational and data processing capabilities may be used and still be within the scope of the present invention. The particular processing capabilities, however, will be a function of the intended use of the digital radar system.

Having explained the details of a receive channel for the digital radar system 10 of the present invention, the following discussion illustrates particular system applications in the form of digital radar system 10 array configurations.

FIGURE 2 is a schematic block diagram of a preferred embodiment of the present invention that comprises a two-dimensional fully digital radar system 10. Each channel 12 of digital radar system 10 comprises antenna 18, which transmits and receives radar signals via analog transmit/receive portion 14. Analog portion 14 directs its input to analog-to-digital converter 26. Analog-to-digital converter 26 sends its output via manifold 30 to beamforming processor 36. Beamforming processor 36 generates multiple beam outputs 38 that comprise radar signal information for use by a beam steering computer and other system components. Data/clock bus 40 directs radar transmit signals via manifold 30 to digital-to-analog synthesizers 42. Digital-to-analog synthesizers 42 synthesize digital signals from manifold 30 to generate analog signals that control analog transmit-/receive modules 14. Transmit/receive modules 14 send radar transmissions via antennae 18 for each channel 12.

In this configuration of the digital radar system 10 of the present invention, the system designer has ultimate control of independent transmit and receive beams. Also, the complete radar system 10 is digital, except for the very front-end analog transmit and receive functions and the supply of DC power. In the present application of this configuration, the transmit and receive functions use the L-band radar frequency spectrum. The present embodiment can employ this frequency spectrum, because such a system requires a relatively small number of array elements. For example, a potential application of this configuration may be an L-band wing or side-mounted array in an AEW aircraft. On the other hand, higher frequency radars are also feasible where the aperture can be divided into meaningful subarrays, such as in the case of an X-band fire control radar with multiple beams in one plane.

FIGURE 3 is a schematic block diagram of a hybrid system using analog beamforming in one plane and digital beamforming in the other plane. For the digital radar system 10, each channel 12 includes antenna 18, which communicates radar signals to and from transmit/receive module 14. A plurality of transmit/receive modules 14 connect to a single column manifold 44. Each column manifold 44 provides a digital communications path for the digital portion 16 of the system 10 which comprises necessary receivers and analog-to-digital converters. From the receivers/analog-to-digital converter portion 16, digital signals travel via manifold 30 to beamforming processor 36. Beamforming processor 36 generates multiple beam outputs in azimuth 38.

The configuration of FIGURE 3 provides a simplification in digital radar system 10 architecture that a system designer can make and still be within the context of the digital radar system of the present invention. This type of alternative embodiment may make such a system even more practical for current and future military use. The alternative embodiment of FIGURE 3 uses analog beamforming in one plane and digital beamforming in the other plane. Such a system has potential application as a long range search radar where most of the search function is done in the azimuth plane.

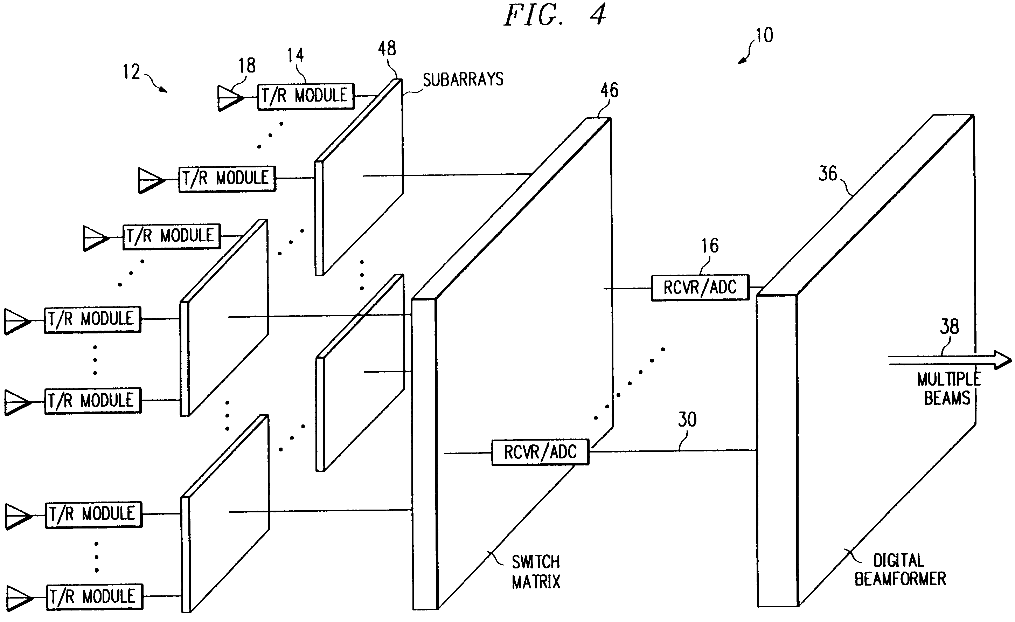

FIGURE 4 shows an alternative embodiment of digital radar system 10 of the present invention that incorporates a switch matrix 46 between subarrays 48 and digital beamforming processor 36 to permit dedication of subarrays 48 for different radar functions within a single digital radar system 10. For the digital radar system 10 of this embodiment, each of the channels 12 includes antenna 18 which communicates radar signals with transmit/receive module 14. A plurality of transmit/receive modules 14 connect to a subarray 48. Subarrays 48 collectively tie to switch matrix 46. Switch matrix 46 communicates with the digital portion 16 of system 16 which comprises receivers and the analog-to-digital converters. From digital portion 16, digital signals travel via manifold 30 to and from beamforming processor 36. Beamforming processor 36 communicates with digital portion 16 and generates multiple beams 38 to which a beam steering computer can respond.

With the introduction of a switch matrix 46 between subarrays 48 and the digital beamforming processor 36 each of subarrays 48 may be dedicated, for example, to a different radar function. Additionally, the subarrays could be excited in such a way as to form shaped beams for a specific mission requirement. It is within the scope of the present invention for a reconfigurable array such as that of switch matrix 46 and subarray 48 to perform simultaneous functions such as radar, ESM, and possibly ECM.

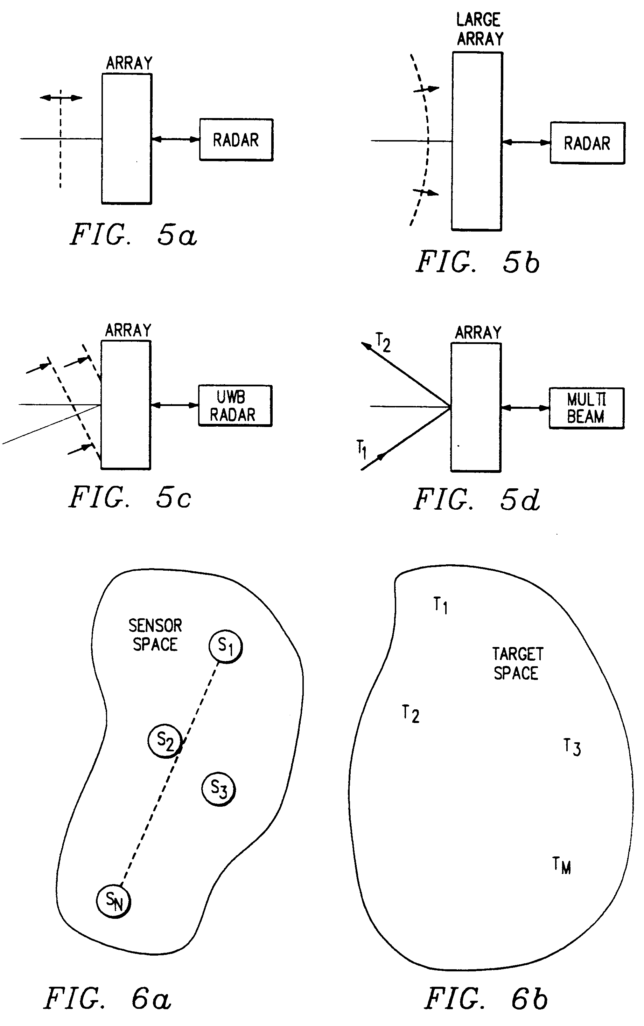

FIGURES 5a-d exhibit the problems of a conventional radar system that the digital beamforming array of the present invention solves. As these FIGUREs illustrate, multiple independent receive beam capability is a central benefit of the digital radar system of the present invention. FIGURE 5a shows a conventional radar system and phased array. They operate with a received signal that is basically a plane wave. This conventional system can detect the direction of arrival and phase of the plane wave.

Unfortunately, as FIGURE 5b shows, if the radar system uses a very large array or if the target is close to the array, the radar signal actually has a spherical wavefront. The spherical wavefront begins to defocus the signal in the array. This is particularly true if the conventional array comprises fixed phase shifters, where all of them are alike for each of the elements in the array.

FIGURE 5c shows that the problem becomes even worse when the conventional system uses an ultra-wide band radar where the time resolution is one foot or one inch, for example. In such an instance, the time resolution is shorter than the fill time of the array and the problem of array defocusing again appears. There are currently no known analog radar arrays having a simple arrangement of fixed lumped phased shifters that can handle these problems.

The problem is compounded further, as FIGURE 5d illustrates, when there exist multiple interfering targets that an operator desires to null out. In that circumstance, there is a problem of how to put a null simultaneously in both directions. Although this is not an impossible problem using an analog array, it is a cumbersome one using conventional analog techniques. For example, according to conventional techniques, if the operator desires to null two targets, he must have at his disposal two separate receive channels. Using these two channels, he operates in each of these receive channels a feedback circuit that puts a null in the direction of one of the targets the operator desires to null. Using conventional techniques, however, every time the feedback circuit directs a null through the feedback circuit it interferes with either the null in that direction or where the main beam should be. In essence, using conventional analog technology, a compromise exists between nulling out an interfering target and receiving on the main beam. This problem is yet more complex when there exist targets of interest that are in close, and targets that are out far. Thus, using conventional analog techniques there are serious operational limitations.

The digital radar system of the present invention overcomes many of these problems. For example, using the systems of FIGURES 1 through 4 to digitize these arrays and communicate between the arrays and a digital data base, it is possible to parallel process a great deal of information. Within the digital domain, it is possible to focus and control the beamforming properties of each antennae within the array. By dividing receive and transmit time periods into sufficiently accurate and small divisions, the digital radar system 10 of the present invention can process and control radar signal information of close in targets, ultra-wide high resolution signals, and solve the nulling problems that an analog system cannot easily accommodate. With the digital signal processing and digital database capabilities of a system embodying the present invention, a radar operator has access to simultaneous and parallel transmit and receive beams and a system that can easily handle a complicated radar threat environment.

FIGURE 6 further demonstrates the advantages of converting to the digital domain that the digital radar system of the present invention makes possible for advanced system surveillance. FIGURE 6 shows a plurality of independent sensors $S_1$, $S_2$, $S_3$, . . ., $S_N$ that permeate a sensor space to provide surveillance of a target space comprising targets $T_1$, $T_2$, $T_3$, . . ., $T_M$. For example, each one of the sensors, $S_i$, may be an entire radar or just elements of a larger radar system. Alternatively, sensors, $S_i$, may be, for example, elements spaced on an airplane at some random points. Moreover, these two spaces might not be independent. For example, they might be interspersed with a portion of the sensors near the targets, or vice versa. Each one of the sensors, $S_i$, receives data from the targets, $T_i$, in the target space. Using this type of configuration, the digital radar system of the present invention has application in the use of bi-static receivers operating passively in cooperation with a remote illuminator. Working within the digital domain of the present invention, it is even possible to extract polarization data for target radar analysis surveillance. The following examples show how the digital radar of the present invention can materially affect operational capabilities.

In air-to-air radar searching, a performance improvement of 2 to 3 dB can be achieved with only four or five receive beams by reducing the effect of burn pulses and the beam shape loss. Burn pulses are required in airborne pulse doppler range ambiguous waveforms so that clutter from all of the range ambiguities is available for processing. When a waveform parameter is changed, such as the pulse repetition frequency or the transmitted frequency, or the beam position is changed, pulses must be burned. These burn pulses are not used in coherent integration for the detection process and, therefore, waste prime radar system power. It can be shown that use of only four or five receive beams can reduce the prime power for a given target detection requirement by as much as 30 percent. When many beam positions are required to cover an angular search sector over a given search time interval, burn pulses can actually cause cumulative detection range to decrease with increased antenna size.

By spoiling the transmit beam and using multiple receive beams, longer coherent dwells are possible at each beam position. This added coherent integration compensates for the reduced power density at the target and reduces the fewer of dwells required to cover a given sector. Having fewer dwells means that burn pulses are also needed fewer times, reducing their effect. In search situations, a beam shape loss exists because there is no guarantee that the target will be at the peak of beam. Processing multiple overlapping beams reduces this loss by ensuring that the target will always be located near the peak of a receive beam. This level of air-to-air search improvement is possible using the digital radar system of the present invention.

For a cued radar search, a broadened transmit beam covered by multiple high gain receive beams will minimize a fire control radar's on-time when searching a sector cued by an automatic early warning radar system. As the enemy deploys air-to-air anti-radar missile systems, the impact of reduced radar on-time can substantially improve survivability. The digital radar system of the present invention, therefore, reduces system susceptibility and enhances radar survivability in cued search operations.

Independently forming high gain receive beams in the direction of interference from sources such as standoff jammers and sidelobe discrete can enhance antenna nulling effectiveness. This type of adaptive nulling does not rely on "real time" adaptive loops for stabilization. Instead, such a system can store data for subsequent processing after the radar ceases to radiate. Operating in the digital domain that the digital radar system of the present invention provides makes possible this type of adaptive nulling.

The digital radar system of the present invention also has application in the use of wide-band electronically steered arrays. Large phase steered arrays have bandwidth limitations due to the array fill time in forming a beam scanned away from the array nominal. A common method for increasing an array's bandwidth is to provide analog time delay steering using a lens feed or switched line lengths at the subarray level. The digital radar system of the present invention can form multiple wide-band receive beams by simply applying digital time delays within the beamforming process to thereby reduce antenna complexity. The simplicity of digital delays that remain constant for wide bandwidth signals will allow use of many tailored waveforms. Within the digital domain, the digital radar system of the present invention can easily and effectively generate such delays.

Although the invention has been described with reference to the above specific embodiments, this description is not meant to be construed in a limiting sense. Various modifications of the disclosed embodiment, as well as alternative embodiments of the invention will become apparent to persons skilled in the art upon reference to the above description. It is therefore contemplated that the appended claims will cover such modifications that fall within the true scope of the invention.

# APPENDIX A
## HIGH SPEED ANALOG-TO-DIGITAL CONVERTER

Analog-to-digital converter (ADC) sampling rate requirements are currently driven by the sensor design trends in radar, electronic warfare, and communications systems to move the analog-to-digital interface continually closer to the source. In this direct RF or IF encoding scenario, more of the system will be implemented with digital technology, providing simpler, more flexible, more producible systems. For example, current ADC technology dictates the use of multiple channels with redundant memory and/or signal processing hardware to achieve wide bandwidth in digital receivers. Performance is often limited by the ability to calibrate the gain, offset, and time alignment of the ADC channels. With direct RF or IF encoding, wide bandwidth can be obtained with less hardware by eliminating down-conversions to baseband and multiple channels of memory. In many applications, digital signal processing techniques can be used with an oversampling ADC to increase the dynamic range if the high sampling rate ADC has excellent dynamic linearity.

To meet the demands for high speed ADCs, Texas Instruments has undertaken the development of GaAs ADCs with sampling speeds exceeding 1 Gsps. The effort is being funded through a DARPA Analog-to-Digital Converter Contract (No. N00014-87-C-0314) and internal IR&D programs. The DARPA contract is a three year effort which started in 1987 to develop a GaAs ADC technology to fabricate 5-bit 2.5 Gsps, 8-bit 1.5 Gsps and 14-bit 20 Msps ADCs. Table 1 shows the original projected performance for the high speed ADCs.

Under the DARPA ADC contract, Texas Instruments developed a new GaAs planar HBT process which also integrates junction field effect transistors (JFETs) for applications requiring high impedances. This new BIJFET (BIpolar-JFET) technology utilizes a unique overgrowth epitaxial process which permits scaling of the HBTs far below that practical for the more conventional mesa HBT process. The BIJFET process results in silicon-like planar topology which is in sharp contract with other GaAs HBT mesa transistor approaches and solves the problems associated with producing high yielding VLSI chips.

In addition to developing a new planar BIJFET process for the DARPA ADC program, Texas Instruments subcontracted with Hughes Radar Division for the ADC design and testing

Table 1. Projected High-Speed ADC Performance

| PARAMETER | PERFORMANCE |
|---|---|
| Resolution | Selectable 5- or 8-Bits |
| Sample Rate | 2.5 Gsps at 5-Bits |
|  | 1.5 Gsps at 8-Bits |
| Quantization Error | ±1/2 LSB |
| Aperture Jitter | 2 ps rms |
| Analog Input Level (Full Scale) | ±0.512 Volts |
| Analog Bandwidth | >2.5 GHz |
| Input Impedance | 50 Ohms |
| Output Coding | TBD |
| Output Logic Levels | 100K ECL or Low-Level Differential Programmable |
| Data Valid or E.O.C. Pulse | Logic Low for Valid Data |
|  | Data Valid for 600 pS |
| SNR | 47 Db, 8-Bit Mode, $F_s/2$ |
| Harmonic Distortion | -68 dBc (f = 900 Mhz) |
| Monotonicity | Guaranteed |
| Missing Codes | None |
| Operational Ambient Temperature | -100°C to 200°C |
| Radiation Hardness Total Dose | $10^8$ RAD (GaAs) |
| Radiation Hardness Dose Rate | $10^{12}$ RAD/sec |
| Single-event Error Rate for Adams 90% Environment | TBD |
| Neutron Flux | $10^{15}$ Neutrons/cm$^2$(E > 100 keV) |
| Power Dissipation | ~5 Watts |

since they were recognized as one of the industry leaders. The TI/Hughes team has designed and fabricated two versions of a 5-bit ADC. The first design took a conservative approach utilizing HBTs with 7 x 7 $\mu m^2$ emitters. While it was recognized that these transistors could not meet the 2.5 Gsps sampling speed, this conservative approach improved the chances that the first pass ADC design would yield to allow the design to be checked out as well as to acquire more complete models for both the HBTs and the ADC.

The first pass design was fabricated in 1988 with a best lot yield of 16% and a best wafer yield of 20%. The 100 x 140 mil$^2$ ADC chip contained 800 HBTs and dissipated 3 watts. Two 5-bit ADC chips were mounted in a special designed hybrid packages and tested at clock frequencies up to 400 MHz. Signal-to-noise ratio (SNR) performance for the 5-bit ADC was

26.3 dB (4.1 effective bits) with a sample rate of 400 MHz and an input video rate of 100.001 MHz, which compares favorably with the theoretical SNR of 31.9. These parts performed well at the 100°C maximum test temperature as expected.

After carefully characterizing these chips, specific capacitances were identified that were limiting the frequency response. The HBTs were scaled to have $5 \times 5 \ \mu m^2$ emitters and process modifications were implemented to reduce the parasitic capacitances. The 5-bit ADC was redesigned with the new HBTs and minor design modifications were introduced to reduce the ADC error for the input voltages near zero for improved SNRs. This new design was been fabricated with a best wafer yield of 16%. Representative functional die were mounted in a customer thin-film test hybrid and subsequently evaluated. A threefold increase in clocking speed from 400 Msps to 1.2 Gsps was attained with the $5 \times 5 \ \mu m^2$ emitter-scaled design. Signal-to-noise (SNR) performance for the 5-bit ADC was 28.0 dB (4.4 effective bits) and 23.1 dB (3.5 effective bits) with a sample rate of 1.2 GHz and an input video rate of 120.001 MHz and 300.001 MHz, respectively.

APPENDIX B

DTIC FILE COPY

RADC-TR-88-86
Final Technical Report
April 1988

AD-A196 983

# DESIGN DEFINITION FOR A DIGITAL BEAMFORMING PROCESSOR

**Texas Instruments Incorporated**

J. Leland Langston, Dr. Shashikant Sanzgiri, Karl Hinman,
Kevin Kelsner, and Domingo Garcia

*APPROVED FOR PUBLIC RELEASE; DISTRIBUTION UNLIMITED.*

DTIC
ELECTE
JUL 2 5 1988
E

ROME AIR DEVELOPMENT CENTER
Air Force Systems Command
Griffiss Air Force Base, NY 13441-5700

88

This report has been reviewed by the RADC Public Affairs Office (PA) and is releasable to the National Technical Information Service (NTIS). At NTIS it will be releasable to the general public, including foreign nations.

RADC-TR-88-86 has been reviewed and is approved for publication.

APPROVED: *M. Steyskal*

HANS STEYSKAL
Project Engineer

APPROVED: *John Schindler*

JOHN K. SCHINDLER
Acting Director of Electromagnetics

FOR THE COMMANDER: *John A. Ritz*

JOHN A. RITZ
Directorate of Plans & Programs

If your address has changed or if you wish to be removed from the RADC mailing list, or if the addressee is no longer employed by your organization, please notify RADC (EEAA) Hanscom AFB MA 01731-5000. This will assist us in maintaining a current mailing list.

Do not return copies of this report unless contractual obligations or notices on a specific document require that it be returned.

UNCLASSIFIED
SECURITY CLASSIFICATION OF THIS PAGE

## REPORT DOCUMENTATION PAGE

Form Approved
OMB No 0704-0188

| 1a. REPORT SECURITY CLASSIFICATION | 1b. RESTRICTIVE MARKINGS |
|---|---|
| UNCLASSIFIED | N/A |
| 2a. SECURITY CLASSIFICATION AUTHORITY | 3. DISTRIBUTION/AVAILABILITY OF REPORT |
| N/A | Approved for public release; |
| 2b. DECLASSIFICATION/DOWNGRADING SCHEDULE | distribution unlimited. |
| N/A | |
| 4. PERFORMING ORGANIZATION REPORT NUMBER(S) | 5. MONITORING ORGANIZATION REPORT NUMBER(S) |
| N/A | RADC-TR-88-86 |

| 6a. NAME OF PERFORMING ORGANIZATION | 6b. OFFICE SYMBOL (If applicable) | 7a. NAME OF MONITORING ORGANIZATION |
|---|---|---|
| Texas Instruments Incorporated | | Rome Air Development Center (EEAA) |
| 6c. ADDRESS (City, State, and ZIP Code) | | 7b. ADDRESS (City, State, and ZIP Code) |
| Defense Systems & Electronics Group PO Box 660246 Dallas TX 75266 | | Hanscom AFB MA 01731-5000 |
| 8a. NAME OF FUNDING/SPONSORING ORGANIZATION | 8b. OFFICE SYMBOL (If applicable) | 9. PROCUREMENT INSTRUMENT IDENTIFICATION NUMBER |
| Rome Air Development Center | EEAA | F19628-87-C-0016 |

| 8c. ADDRESS (City, State, and ZIP Code) | 10. SOURCE OF FUNDING NUMBERS | | | |
|---|---|---|---|---|
| Hanscom AFB MA 01731-5000 | PROGRAM ELEMENT NO. | PROJECT NO. | TASK NO | WORK UNIT ACCESSION NO |
| | 627027 | 4600 | 14 | 1F |

11. TITLE (Include Security Classification)
DESIGN DEFINITION FOR A DIGITAL BEAMFORMING PROCESSOR

12. PERSONAL AUTHOR(S)
J. Leland Langston, Dr. Shashikant Sanzgiri, Karl Hinman, Kevin Keisner, Domingo Garcia

| 13a. TYPE OF REPORT | 13b. TIME COVERED | 14. DATE OF REPORT (Year, Month, Day) | 15. PAGE COUNT |
|---|---|---|---|
| Final | FROM Jan 87 TO Nov 87 | April 1988 | 134 |

16. SUPPLEMENTARY NOTATION
N/A

| 17. COSATI CODES | | | 18. SUBJECT TERMS (Continue on reverse if necessary and identify by block number) |
|---|---|---|---|
| FIELD | GROUP | SUB-GROUP | beamforming system application specific |
| 09 | 05 | | brassboard system integrated circuits |
| | | | very large scale integrated circuit (ASIC) (over) |

19. ABSTRACT (Continue on reverse if necessary and identify by block number)
Very large scale integrated-circuit technology now makes large bandwidth digital beamforming array antennas practical. Algorithms and architectures were investigated for the implementation of a processor capable of producing large bandwidth multiple output beams for both near and far-term applications. DFT and FFT algorithms in element space and beam space were investigated. Structures for dedicated algorithm execution with highly pipelined, systolic hardware were examined. Arithmetic execution alternatives were considered. The impact of channel errors were investigated and methods of calibrating the beamformer to compensate for these errors were developed. The effects of quantization errors were investigated and processor dynamic range requirements were assessed. The capabilities of Si and GaAs technologies were assessed. The implementation of a processor chip set using Application Specific Integrated Circuits (ASIC) was investigated. A recommended brassboard demonstration system design was derived.

| 20. DISTRIBUTION/AVAILABILITY OF ABSTRACT | 21. ABSTRACT SECURITY CLASSIFICATION |
|---|---|
| ☐ UNCLASSIFIED/UNLIMITED ☒ SAME AS RPT ☐ DTIC USERS | UNCLASSIFIED |
| 22a. NAME OF RESPONSIBLE INDIVIDUAL | 22b. TELEPHONE (Include Area Code) | 22c. OFFICE SYMBOL |
| Hans Sprauekal | (617) 377-2052 | RADC (EEAA) |

DD Form 1473, JUN 86          Previous editions are obsolete          SECURITY CLASSIFICATION OF THIS PAGE

UNCLASSIFIED

UNCLASSIFIED

Block 18.  Subject Terms (Cont'd)

DFT algorithm     systolic hardware
FFT algorithm     Si and GaAs technologies

Accession For
NTIS  GRA&I
DTIC TAB
Unannounced
Justification

By
Distribution/
Availability Codes
Avail and/or
Dist | Special

A-1

DTIC
COPY
INSPECTED

UNCLASSIFIED

15

## SUMMARY

Phase I of the Digital Beamformer Program consisted of the study and design definition of the state-of-the-art capabilities for beamforming systems and a design recommendation for the development, test, and demonstration of a brassboard system during Phase II.

Digital beamformer algorithms and system architecture were investigated. Architectures were developed for discrete Fourier transform (DFT) algorithm beamforming directly in the element space of the antenna, and both DFT and fast Fourier transform (FFT) algorithm beam space derivation followed by DFT beam combining. Processor architectures capable of producing multiple, high bandwidth output beams using large antenna arrays were also investigated for both near-term and far-term beamforming applications. Structures for dedicated algorithm execution with highly pipelined, systolic hardware were examined. Arithmetic execution using conventional binary data representation is compared to the use of Quadratic Residue Number System (QRNS) data representation. The impact of channel errors were investigated and methods of calibrating the beamformer to compensate for these errors were developed. The effects of quantization errors were investigated and processor dynamic range requirements were assessed.

The implementation of a processor chip set using Application Specific Integrated Circuits (ASIC) was investigated. The capabilities of silicon and gallium arsenide technologies were assessed. A recommended brassboard demonstration system design was derived. Preliminary chip vendor evaluations were obtained for implementation of the chip set. Module design and beamformer system control were examined. System interface and control issues were identified. Modularity to facilitate growth to satisfy far-term goals was addressed. A development and test plan for the Phase II brassboard demonstration system was defined.

The use of DFT methods implemented with QRNS arithmetic is recommended for the brassboard. The architecture is capable of meeting far-term system performance goals with current silicon based technology. Further development of associated subsystems, such as the RF front end and A/D converters, as well as the digital adaptive beam controller processor, will permit the practical implementation of real-time digital beamforming systems.

EP 0 480 737 A2

## PREFACE

This report contributes to the understanding of the hardware design issues encountered in current and future design of digital beamforming processors. The advance of digital technology now allows levels of circuit integration to be achieved which make the implementation of practical digital beamforming systems possible. The approach taken in this effort has been to optimize the beamformer performance in terms of throughput achieved per amount of hardware required. Particular effort was taken to remove the need for real-time "in-line" calibration in the systems design by "off-line" calibration of the beamformer steering vectors. Optimization of the arithmetic system is achieved by using QRNS arithmetic for the processing hardware. The levels of circuit integration now achievable permit the exploitation of QRNS arithmetic to optimize the digital beamformer performance.

The algorithm and system architecture studies for digital beamforming provide the basis for the design of hardware to meet the requirements of near-term and far-term systems. The processor architecture study is directed toward optimal system implementation. The feasibility of the approach can be tested by a laboratory demonstration system.

Appreciation is expressed to Dr. Hans Steyskal and Mr. Jeffery Herd of the Electronic System Division of the Air Force Systems Command for their efforts in directing the Digital Beamformer Program.

Appreciation is extended to people from the array antenna design engineering and digital signal processing engineering groups. Algorithm and system architecture studies were done by array antenna design personnel, Dr. Shashikant Sanzgiri and Mr. Kevin Keisner. The processor implementation study tasks were executed by digital signal processing engineering personnel. Mr. Domingo Garcia developed the module design and layout, as well as the built-in-test. Use of QRNS arithmetic in dedicated signal processing applications has been pursued by Texas Instruments for some time as a strong candidate for optimization of processing hardware requirements. Mr. Leland Langston and Mr. Karl Hinman were the primary contributors in this area, as well as the chip design. Teaming of these people on the Digital Beamformer Phase I Program permitted the exploration of digital beamforming implementation with considerable expertise.

Our thanks go to Mr. F. Richard Burt and Mrs. La Joyce Doran, data managers, and Mr. Billy von Kalow, illustrator, for the final report preparations from rough drafts and sketches.

17

EP 0 480 737 A2

## TABLE OF CONTENTS

| Para | Title | Page |
|------|-------|------|
| 1. | INTRODUCTION | 7 |
| 1.1 | Background | 7 |
| 1.2 | Objectives | 8 |
| 1.3 | Approach | 8 |
| 2. | STUDY TASKS AND RESULTS | 11 |
| 2.1 | Digital Beamformer Algorithms | 11 |
| 2.1.1 | Discrete Fourier Transform Processing | 11 |
| 2.1.2 | Fast Fourier Transform Algorithm | 15 |
| 2.1.3 | DFT vs FFT Trade Study | 18 |
| 2.1.3.1 | Hardware Complexity | 18 |
| 2.1.3.2 | Throughput Rate | 19 |
| 2.1.3.3 | Expendability | 19 |
| 2.1.4 | Recommendation | 19 |
| 2.2 | Digital Beamformer Processor Architectures | 20 |
| 2.2.1 | Full Adaptivity in the Element Space Domain | 20 |
| 2.2.2 | Partial Adaptivity in the Element Space Domain | 22 |
| 2.2.3 | Beam Space Nulling Architecture | 24 |
| 2.2.4 | Combined Element Space/Beam Space Beamformer | 26 |
| 2.2.5 | Recommendation | 28 |
| 2.3 | Digital Beamformer Processor Architectures | 28 |
| 2.3.1 | Programmable Processor Architecture | 28 |
| 2.3.2 | Dedicated Processor Architecture | 29 |
| 2.3.3 | Dedicated Processor Algorithm Selection | 29 |
| 2.3.4 | Processor Arithmetic Implementation | 30 |
| 2.3.5 | Processor Pipelining Considerations | 31 |
| 2.3.6 | Hardware Multiplexing Issues | 32 |
| 2.3.7 | Processor Architecture Selection | 33 |
| 2.4 | Channel Error Correction and Calibration | 34 |
| 2.4.1 | Channel Error Compensation at Center Frequency | 34 |
| 2.4.2 | Recommendation for Frequency Independent Error Correction | 42 |
| 2.4.3 | Frequency Dependent Error Correction | 44 |
| 2.4.4 | Recommendation for Frequency Dependent Error Correction | 47 |
| 2.5 | Impact of Quantization Errors and Finite Word Lengths | 47 |
| 2.5.1 | Impact on Sidelobe Levels | 47 |
| 2.5.2 | Impact on Dynamic Range | 52 |
| 2.5.3 | Impact on Null Depth | 52 |
| 2.5.3.1 | Signal Quantization Effects | 52 |
| 2.5.3.2 | Weight Quantization Effects | 53 |
| 2.5.3.3 | Combined Signal and Weight Quantization and Channel Nonuniformity Errors | 54 |

EP 0 480 737 A2

TABLE OF CONTENTS (continued)

| Para | Title | Page |
|---|---|---|
| 2.6 | Processor Chip Implementation Tradeoff | 56 |
| 2.6.1 | Introduction | 56 |
| 2.6.2 | Estimation Methodology | 57 |
| 2.6.3 | RNS Component Evaluation | 57 |
| 2.6.4 | Conventional Arithmetic Multiplication and Addition | 58 |
| 2.6.5 | QRNS and Conventional Beamformer Comparisons | 59 |
| 2.7 | Chip Vendor Selection | 61 |
| 2.8 | System Interface and Test Issues | 62 |
| 2.9 | Modularity and Far-term Goals | 63 |
| 2.9.1 | Digital Beamforming for 256-Element Linear Array | 64 |
| 2.9.2 | Digital Beamforming for 64 x 8 Element Planar Array | 67 |
| 2.9.3 | Digital Beamforming for 64 x 64 Element Beamformer | 68 |
| 2.10 | Gallium Arsenide Beamforming Design | 69 |
| 2.10.1 | Processor Design | 69 |
| 2.10.2 | Comparison with Silicon Design | 74 |
| 3. | RECOMMENDED BRASSBOARD DESIGN | 75 |
| 3.1 | System Architecture | 75 |
| 3.2 | Silicon Beamformer Chip Logic Design | 76 |
| 3.3 | Chip Packaging | 83 |
| 3.4 | Module Design | 84 |
| 3.5 | System Interface and Control | 95 |
| 3.6 | Built-in Test | 95 |
| 3.7 | VAX Interface | 96 |
| 3.8 | Hardware Tests | 96 |
| 4. | BRASSBOARD DEVELOPMENT AND TEST PLAN | 98 |
| 4.1 | Chip Development | 98 |
| 4.2 | Module Development | 98 |
| 4.3 | Software Development | 100 |
| 4.4 | Test Plan | 101 |
| 4.4.1 | Built-in-Test | 101 |
| 4.4.2 | Chip Tests | 102 |
| 4.4.3 | Module Tests | 102 |
| 4.4.4 | Test and Verification | 103 |
| 4.4.5 | Processor Performance Verification | 103 |
| 4.4.6 | Acceptance Tests | 103 |
| 4.5 | Development Schedule | 104 |
| 5. | CONCLUSIONS | 106 |

EP 0 480 737 A2

## TABLE OF CONTENTS (continued)

| Para | Title | Page |
|---|---|---|
| | APPENDIX A - QRNS Component Design and Modeling | 107 |
| | REFERENCES | 128 |

## LIST OF ILLUSTRATIONS

| Figure | Title | Page |
|---|---|---|
| 2-1 | DFT Implementation | 13 |
| 2-2 | FFT-Based Digital Beamforming | 17 |
| 2-3 | Element Space Fully Adaptive Nulling | 21 |
| 2-4 | Element Space Partial Adaptive Nulling | 23 |
| 2-5 | Beam Space Adaptive Nulling | 25 |
| 2-6 | Element Space and Beam Space Adaptive Nulling | 27 |
| 2-7 | In-Line Calibration of Channel Errors | 36 |
| 2-8 | Off-Line Calibration of Beam Controller | 38 |
| 2-9 | Adapted Pattern without Calibration | 40 |
| 2-10 | Adapted Pattern with Calibration | 41 |
| 2-11 | Off-Line Calibration of Beam Steering Vectors | 43 |
| 2-12 | Frequency Dependent Error Compensation Using In-Line FFT Approach | 46 |
| 2-13 | Frequency Dependent Error Compensation Using In-line FIR Filters | 48 |
| 2-14 | Error Free Pattern for 64 Element Array | 50 |
| 2-15 | 64-Element Array Pattern | 51 |
| 2-16 | Adapted Array Pattern for Jammers | 55 |
| 2-17 | Example of 8-Way DFT Manifold | 65 |
| 2-18 | 256-Element Linear Array Beamformer Architecture | 66 |
| 2-19 | Beamformer Architecture Planar Arrays | 67 |
| 2-20 | 256-Element GaAs Processor Module | 72 |
| 3-1 | Complex Integer to Complex QRNS Converter Chip | 78 |
| 3-2 | RNS Four Channel Beamweight Combiner Chip | 81 |
| 3-3 | Beamformer Hardware Modules | 85 |
| 3-4 | Processor Module Block Diagram | 87 |
| 3-5 | Brassboard Processor Module | 88 |
| 3-6 | Recomposition Module Block Diagram | 90 |
| 3-7 | Brassboard Recomposition Module | 91 |
| 3-8 | Controller Module Block Diagram | 93 |
| 3-9 | Brassboard Controller Module | 94 |
| 3-10 | System Test Box Block Diagram | 97 |
| 4-1 | Program Schedule | 105 |

LIST OF TABLES

| Table | Title | Page |
|-------|-------|------|
| 2-1 | Types of Output Beams | 11 |
| 2-2 | 64-Element DFT Beamformer, Si Technology | 14 |
| 2-3 | 64-Element DFT Beamformer, GaAs Technology | 15 |
| 2-4 | 64-Element FFT Beamformer Throughput | 18 |
| 2-5 | Null Depth as a Function of Bandwidth and RMS Value of Frequency Dependent Errors | 44 |
| 2-6 | Contribution of Various Errors to the RMS Sidelobe. | 49 |
| 2-7 | Weight Quantization on RMS Sidelobe Level | 49 |
| 2-8 | Thermal, Quantization, and Round-Off Error | 52 |
| 2-9 | Impact of Signal Quantization on Null Depths | 53 |
| 2-10 | Degradation in Cancellation Ratio due to Weight | 54 |
| 2-11 | Impact of Weight Quantization on Null Depth | 54 |
| 2-12 | Beamformer Basic Building Block Gate Counts | 60 |
| 2-13 | QRNS Conversion Component Gate Counts (6 Delays) | 61 |
| 2-14 | Characteristics for 256 Element Linear Array | 67 |
| 2-15 | Characteristics for 64 x 8 Planar Array | 68 |
| 2-16 | Characteristics for 64 x 64 Planar Array | 69 |
| 2-17 | GaAs vs Si Comparisons for the 1990s | 74 |

## SECTION 1

## INTRODUCTION

### 1.1 BACKGROUND

Communications and radar systems require antenna systems which provide both directional beams and null-steering capability. Communications systems require directional beams in order to provide antenna gain, reduce succeptibility to jamming and interception, reduce sensitivity to multipath signals, and to determine angle of arrival/source position. Radar systems require directional beams in order to accomplish their intended function, i.e., target detection and location.

Early systems relied on parabolic reflectors to provide beamforming to achieve directionality. However, the requirements for high-speed beam scanning and flexible scan patterns led to the development of phased array antennas for radars and satellite communications systems. The beams were formed in these systems by using analog techniques to adjust the phase of the signals from multiple dipole antennas and receivers (transmitters). This approach is currently used in many systems and one of the objectives for the MIMIC program is to develop an integrated phased arrray system based on analog phase shifters. By using digitally-controlled analog phase shifters, the beamformers can be controlled digitally.

However, there are many problems associated with analog phase shifters which limit the accuracy with which the phase and amplitude of the signals can be controlled. Although the inherent errors can be compensated for sufficiently well to permit many practical implementations, this results in a significant cost increase in the hardware. The accuracy of an all-digital beamformer and the potential for relatively low-cost digital hardware make digital beamformers attractive. However, only recently has the digital technology advanced sufficiently to make digital beamformers practical.

In addition to providing beam steering, phased array antennas also permit beam nulling to be accomplished. Adaptive null-steering arrays have been deployed which use completely analog techniques to place nulls at selected spatial angles to reduce interferrence from jammers or other undesired sources. However, the desire to implement a digital adaptive null-forming processor as part of the beam controller function has been a goal for several years. Once again the digital technology has only recently advanced to permit the implementation of such a processor for a real-time system.

The digital beamformer is an ideal partner for a digital adaptive null-forming beam controller. In an all-digital system, the beam controller would generate digital weight vectors which would be provided to the digital beamformer to produce a precise directional beam with low sidelobes and with deep nulls in the direction of undesired signals. In addition, the beamformer would provide multiple, independent simultaneous beams.

There is one restriction, however, with digital beamformers, which is that they can currently operate only in a receive mode. This is not a major restriction, since it is the receive function which is most critical in most systems. For example, a radar requires the most accuracy for beam control in the receive mode and a communication systems requires adaptive nulling only for the receiver.

Hence the advantages of an all-digital beamformer have been recognized for some time. Digital technology has recently advanced sufficiently to consider implementing a real-time digital beamformer. The Digital Beamformer Processor program was defined by RADC to evaluate the feasibility of digital beamformer technology.

## 1.2 OBJECTIVES

There are two broad objectives for the Digital Beamformer program. The first one is to study and evaluate various approaches for implementing a digital beamforming processor. The second one is to design a brassboard digital beamforming processor based on near-term silicon technology.

The first objective includes a study of algorithms, processor architectures and semiconductor technology (including Gallium Arsenide) to determine the optimal design approach. These were accomplished during Phase I and the results are tabulated in this report. In addition, a set of chips for implementing the processor in silicon were defined in sufficient detail to determine the feasability of fabricating the chips, and the results of this effort are also included in this report. A recommended brassboard design is the result of the Phase I effort.

The second objective, i.e., the detail design and implementation of a brassboard digital beamforming processor, will be accomplished during Phase II.

## 1.3 APPROACH

The approach for executing Phase I of this program consisted of two primary thrusts. The first was to evaluate the

performance and hardware complexity associated with various algorithms. The second was to evaluate advantages and disadvantages of various processor architectures for digital beamforming. The best candidates for meeting near-term goals and far-term goals were selected. A brassboard processor was designed based on the near-term architecture selected. The risks in meeting near-term goals were determined and the risks and obstacles associated with growth to meet far-term objectives were identified.

Specific study tasks included evaluation of various digital beamfroming algorithms, study of various digital beamformer architectures which accommodate adaptive nulling, channel error correction schemes, impact of quantization errors on nulling performance and the modularity of DFT beamformers. The advantages and feasability of both silicon and gallium arsenide implementations of the digital beamforming processor were studied. Architectures optimized for solving the problem with the respective technologies were identified.

Discrete Fourier Transform (DFT) and Fast Fourier Transform (FFT) algorithms were evaluated for digital beamformers. Element space and beam space techniques were evaluated in terms of overall hardware requirements and suitability for adaptive nulling using digital beam controllers. Computer simulations were used to evaluate the performance of the different algorithms in the presence of limited input signal word widths, limited weight accuracies and channel errors. Performance in terms of null depths and sidelobe levels were used to compare approaches. The hardware required for implementing real-time systems, particularly the digital beamformer hardware, was studied for the various algorithms. The results from all of these trade-off studies were then used to formulate processor architectures best suited for meeting near-term goals and best promise of growth to meet far-term goals.

The processor architecture for executing the selected algorithms was studied to determine the most efficient and fastest approach for implementing a practical digital beamforming processor. Issues included:

    a.   integer vs. floating point arithmetic.

    b.   programmable processors vs. dedicated application-specific processors.

    c.   conventional complex integer arithmetic vs. quadratic residue number system arithmetic.

    d.   multiplexed vs. dedicated hardware and dynamic range (number of bits required in the processor).

As the study evolved, the relationship between the algorithm study tasks and the architecture study tasks were carefully evaluated. As the preferred approach became clear, the study then concentrated on optimizing the selected algorithms and architecture. In particular, the final stages of the study concentrated on optimizing the DFT algorithms and the QRNS integer arithmetic processor. The gate structures for each part of the processor were optimized to obtain maximum throughput and minimum gate counts. A seperate study for optimizing the architecture for a gallium arsenide processor design was conducted.

During the study and evaluation of various approaches for implementing the calibration and error compensation operations, a new approach for performing this task was developed. The equations for implementing the procedure were developed and computer simulations were used to verify performance. The system architecture was modified to accommodate the more efficient calibration procedures.

A brassboard system which meets the near-term goals for a digital beamformer was designed based on the algorithms and architecture defined in the earlier study tasks. A detailed plan for developing the chips, modules, system, computer interfaces, and software was defined. Several vendors who can produce the required processor chips were identified and the expected performance of a breadboard system based on these chips was determined. The results of these tasks are presented in the remainder of this report.

SECTION 2

STUDY TASKS AND RESULTS

## 2.1 DIGITAL BEAMFORMER ALGORITHMS

The objective of this task was to select a digital beamforming algorithm applicable for linear array structures. As part of this task the Discrete Fourier Transform (DFT) and the Fast Fourier Transform (FFT) algorithms were investigated and their impact on the beamformer architecture was studied. The specific types of output beams considered for this study are shown in Table 2-1.

Table 2-1.  Types of Output Beams

- Weighted DFT beams

- Unweighted FFT beams

- Weighted FFT beams.

2.1.1 <u>Discrete Fourier Transform (DFT) Processing</u> - In DFT processing, the input signal vector (representing a snapshot of the signal outputs from the array elements at a given instant in time) is processed to form a beam at any desired angle. By multiplying different steering vectors (in the dot product sense) with the same input signal vector, a set of beams can be formed over any desired range of angles. A beamformer is associated with each beam and the weights for each beamformer can be selected independently. The DFT processing algorithm is expressed in the following mathematical form :

$$Y(\theta_i) = \sum_{n=1}^{N} X_n(k) \, W_{cn} \, W_n(\theta_i) \qquad (2-1)$$

where

$X_n(k)$ = $k^{th}$ sample from $n^{th}$ array element
$W_{cn}$ = calibration weights
$W_n(\theta_i)$ = weights from beam control unit for forming beam at angle $\theta_i$

The DFT implementation for generating M simultaneous beams from N antenna elements is shown in Figure 2-1. Each complex weight multiplication shown in the figure corresponds to four real multiplies and two adds. The weight vector in each beamformer is computed by an external beam controller. The number of real multiplies required for M simultaneous beams is $4*N*M$ and the number of real adds required is $2*N*M$. The processing can be done sequentially in a pipeline fashion, i.e.. during each clock period, a single mathematical operation is performed on each element of the input signal vector and the results are then transferred to the next stage for further processing. This maximizes the throughput rate of the processor.

If the processing speed can be significantly increased, then the hardware can be multiplexed to multiply each sample by multiple weights to generate multiple beams. The number of beams which can be generated during a sample time period is determined by the time it takes to perform one complex multiply. If a complex multiply operation and a data transfer operation can be performed in much less time than the sampling period, then several beams can be computed with the same hardware. The maximum number of beams that can be computed in a multiplexed system is given by:

$$\text{Number of multiplexed beams} = \text{int } \frac{Ts}{Tm} \qquad (2-2)$$

where Ts is the signal sampling period and Tm is the time required for a complex multiply. For example, if Ts is 1000 nanoseconds and Tm is 100 nanoseconds, then the maximum number of multiplexed beams that can be generated in one set of beamformers is 10.

If M sets of parallel processing hardware are available. then the total number of simultaneous beams which can be formed is given by:

$$\text{Total number of beams} = M \cdot \text{int } \frac{Ts}{Tm} \qquad (2-3)$$

The number of simultaneous beams which can be formed is, therefore, a function of the sampling frequency, the throughput capacity of the processor, and the number of sets of processor hardware.

Figure 2-1. DFT Implementation to Generate M Simultaneous Beams

The throughput rates for silicon based DFT processors are shown as a function of the number of sets of hardware are shown in Table 2-2.

TABLE 2-2. THROUGHPUT RATE AND HARDWARE REQUIREMENTS
FOR 64-ELEMENT DFT BEAMFORMER, Si TECHNOLOGY

| No. of Sets of Hdwr | Number of Beams as a Function of Sample Rate | | Throughput in Real Multiples/Sec |
|---|---|---|---|
| | 10 MHz | 1 MHZ | 20 MHz Clock |
| 1 | 2 | 20 | $5.12 \times 10^9$ |
| 4 | 8 | 80 | $2.048 \times 10^{10}$ |
| 16 | 32 | 320 | $8.192 \times 10^{10}$ |
| 64 | 128 | 1280 | $3.2768 \times 10^{11}$ |

For a digital beamformer, the throughput rate can also be defined in terms of the number of beams which can be computed for every sampling period. Current silicon technology supports a 20-MHz clock rate for instruction execution for each stage in the pipeline. Table 2-2 indicates that four sets of hardware permits 80 weighted beams to be formed when the input sampling rate is 1 MHz.

For the far term application of digital beamformers, GaAs-based processors can be considered. In the near future, this technology may support a 1-GHz clock rate. Table 2-3 shows throughput rates based on the GaAs technology. As shown, a single beamformer will be able to provide 100 beams for an input sampling rate of 10 MHz. The processor throughput, in terms of real multiplies per second, is 256 GIGOPS.

TABLE 2-3.  THROUGHPUT RATE AND HARDWARE REQUIREMENTS
FOR 64-ELEMENT DFT BEAMFORMERS, GaAs TECHNOLOGY

| No. of Sets of Hdwr | Number of Beams as a Function of Sample Rate | | Total Number of Real Multiplications/Second |
|---|---|---|---|
| | 10 MHz | 1 MHZ | 1 GHz Clock |
| 1 | 100 | 1000 | $2.56 \times 10^{11}$ |
| 4 | 400 | 4000 | $1.024 \times 10^{12}$ |
| 16 | 1600 | 16000 | $4.096 \times 10^{12}$ |
| 64 | 6400 | 64000 | $1.6384 \times 10^{13}$ |

2.1.2 Fast Fourier Transform (FFT) Algorithm - The Fourier transform relationship between the weighted signal samples and the array response is given by :

$$Y(\theta_i) = X_n(k) \ (W_{cn} \ W_{on}) \ e \ ^{-j2\pi \ n\theta \ i/N} \qquad (2-4)$$

where

$$\theta_i = \sin^{-1} (i \ \lambda/Nd)$$
$$W_{on} = \text{Illumination taper (same for all beams)}$$

The FFT processing is similar to multiple beamforming using a Butler matrix. With FFT processing, a set of overlapped beams are formed. This processing requires about $2*N*\log(N)$ real multipliers and hence much less hardware than is required for N-beam DFT beamforming. Because of the fixed nature of these output beams, individual beam control requires the following :

- Interpolation between beams to fine steer the beam

- Linear combination of output beams to synthesize a shaped
  beam or a low sidelobe pattern

- Linear combination of a selected set of beams to create nulls in the direction of the interfering sources.

The FFT processor, therefore, requires a set of beam space combiners to generate weighted independent output beams. The need for separate beam space combiners can offset the advantages of reduced hardware requirements for FFT processor. Figure 2-2 shows the implementation of a FFT based processor. The digitized

signals from the antenna elements are fed to the FFT processor which generates N simultaneous beams. Selected sets of these output beams are then fed to post processors for fine beam steering, adaptive nulling or shaped beamforming.

A practical system utilizing an FFT processor would consist of a set of unweighted output beams, a low sidelobe sum beam and a low sidelobe difference beam. The unweighted output beams could be used for target searching over a wide spatial region. They can also be used as the auxiliary beams for adpative sidelobe or mainbeam nulling. The low sidelobe sum and difference patterns would be formed by the linear combination of the weighted component beams. The linear combiner has essentially the same complexity as the the beamformer used in the DFT algorithm.

The throughput rate of an FFT-based beamformer for a 64-element array, using near term silicon and far-term GaAs based technologies, is shown in Table 2-4. The throughput rate shown is for weighted beams using post-processors. The table also shows the hardware requirements for an FFT-based processor. It is assumed that each post-processor performs linear combinations of all 64 FFT beams.

31

Figure 2-2. FFT-Based Digital Beamforming

TABLE 2-4.   THROUGHPUT IN OPERATION PERIOD
FOR 64-ELEMENT FFT BEAMFORMERS

Number of Beams by Sample Rate

Silicon Technology    GaAs Technology

| Post Processors | 10 MHz | 1 MHz | 10 MHz | 1 MHz | No. of Real Multiplies/Second 20 MHz Clock |
|---|---|---|---|---|---|
| 1 | 2 | 20 | 100 | 1000 | $2.098 \times 10^{10}$ |
| 2 | 4 | 40 | 200 | 2000 | $2.560 \times 10^{10}$ |
| 4 | 8 | 80 | 400 | 4000 | $3.584 \times 10^{10}$ |
| 16 | 32 | 320 | 1600 | 16000 | $9.328 \times 10^{10}$ |

2.1.3 DFT Versus FFT Trade Study - the impact of DFT and FFT algorithms on areas such as hardware complexity, throughput rate, and expandability are summarized here.

2.1.3.1 Hardware Complexity - From the results in the Tables 2-2 and 2-4, it is evident that the FFT beamformer has no significant hardware advantage over the DFT beamformer if the number of differently weighted beams is the same. This comparison is based only on the number of real multiplies required to implement the beamformer. There are however, additional processors required in the FFT approach to control the data transfer between different sections (FFT section, beam select network and the weighted beam summers). For a small number of simultaneous beams, the DFT approach is simpler to implement because each of the units is identical and there is no need for a separate processor to handle the data transfers.

According to Tables 2-2 and 2-4, the hardware requirements for digital beamforming to demonstrate two weighted beams (low sidelobe sum and difference beams) at a 10-MHz sampling rate are four times less for the DFT processor than for the FFT processor. With no additional hardware complexity, the DFT approach using a single beamformer can provide weighted beams if the sampling rate is reduced to 1 MHz. These beams can be used to demonstrate adaptive nulling in the beam space.

2.1.3.2 Throughput Rate - The two major considerations in determining the throughput rate are the multiplication speed with present and projected technologies and the processor architecture to yield the desired set of beams. Tables 2-2, 2-3, and 2-4 compare the throughput rate and the number of complex multiplies required for various processor architectures. The results show that for a small number of weighted output beams, both the throughput rate and the number of multipliers required are comparable for DFT and FFT processors.

2.1.3.3 Expandability - There are two possible reasons to expand the beamformer in the future. One reason can be the need to merge the number of elements in the linear array to yield improved spatial resolution. The second can result from a need to have larger numbers of simultaneous output beams.

If the number of elements should need to be increased, then the beamformer modification can be handled more readily with the DFT approach than with the FFT approach. However, if a larger number of weighted beams are desired, both approaches require the same level of complexity since, in each case, this would be tantamount to adding additional beamformers; for the DFT approach this beamformer combines the elemental signals whereas for the FFT approach the beamformer combines the component beams.

2.1.4 Recommendation - Based on the trade study, the DFT algorithm is recommended for the digital beamformer for the following reasons:

- It allows generation of an arbitrarily shaped beam at any arbitrary angle

- The algorithm is easy to implement

- The processor based on this algorithm is modular in nature

- The algorithm is compatible with integer arithmetic processing

- The algorithm is compatible with the adaptive nulling in element space

34

- Partial adaptive nulling in the element space or beam space domain can be demonstrated with some changes in the data flow paths

- For a small number of weighted output beams, the throughput rate and hardware complexity are comparable to the FFT algorithm

- The DFT algorithm allows multiplexed beamforming for each beamformer if the processor clock rate is much faster than the input signal sampling rate.

## 2.2 DIGITAL BEAMFORMER PROCESSOR ARCHITECTURES

The objective of this task was to investigate architectures suitable for demonstrating digital beamforming using the DFT algorithm. Four different architectures have been developed. Each architecture is configured to demonstrate adaptive nulling by using one of the following approaches:

- Full adaptivity in the element space domain

- Partial adaptivity in the element space domain

- Adaptivity in the beam space domain

- Adaptivity in both the element and beam space domain.

Each of these four architectures is described.

2.2.1 <u>Full Adaptivity in the Element Space Domain</u> — The digital beamforming architecture (Figure 2-3) which allows generation of multiple simultaneous beams and also allows full degrees of freedom for adaptive interference rejection. Full adaptivity implies the number of degrees of freedom equals the number of elements in the array.

As shown in Figure 2-3, four separate beamformers are provided. Each beamformer consists of a register which can store eight different weight vectors. These weight vectors are updated by the beam controller. Depending upon the sampling rate of the input signal, a number of sequential beams can be generated from each beamformer. Beamforming weight multiplexing will allow calculation of 32 beams during a sampling period.

35

Figure 2-3. Digital Beamforming Architecture for Element Space Fully Adaptive Nulling

An important part of the digital beamformer is the calibration for the receiver channel errors. In the architecture shown in the Figure 2-3 this calibration is applied to the quiescent (steering) weight vectors rather than to the digitized input signals. The rationale for providing calibration in this manner is explained in the paragraph 2.4. This calibration procedure will allow demonstration of high quality beams in both nonadaptive and adaptive modes of operation.

This architecture will allow demonstration of the following features of the digital beamforming:

● Low sidelobe patterns by compensating for the channel errors

● Variable number of output beams

● Independent adaptive interference control for each beam

● Demonstration of multiple target tracking in the presence of interfering sources.

The architecture described above will meet the statement of work requirements. However, the following additional architectures are included in this report because they have the advantage of reducing the size of the covariance matrices used in the adaptive weight calculation. (Although the beam controller is not part of the beamformer, it was felt appropriate to address these requirements from a system perspective.)

2.2.2 Partial Adaptivity in the Element Space Domain — The adaptive nulling can be demonstrated using a selected number of element outputs as auxiliary elements for the nulling algorithm. The number of auxiliary elements can be far less than the number of elements in the array but at least one greater than the number of interfering signals to be nulled. The advantage of doing this is that the size of the covariance matrix, which is determined by the number of auxiliary elements, is reduced. This allows faster computation of the adaptive weights and imposes less hardware requirements for the adaptive array processor.

Shown in Figure 2-4 is an architecture for element space nulling using partial adaptive beamforming. The architecture is essentially the same as the one shown in Figure 2-3 for full adaptive beamforming, the difference being an additional buffer is required to store element channel signals and to switch outputs from a preselected number of elements to the beam

Figure 2-4. Digital Beamforming Architecture for
Element Space Partial Adaptive Nulling

controller. For partial adaptive nulling, the full array output with quiescent weights is treated as a primary antenna output. This primary antenna output is treated like one of the element outputs in the adaptive algorithm. For the partial adaptive array, the beam controller calculates weights using the following sample matrix inverse algorithm:

$$w = R_{yy}^{-1} r \qquad (2-5)$$

where w is an M+1 element vector, M being the number of elements selected for adaptive beamforming, $R_{yy}$ is an (M+1)x(M+1) covariance matrix and r is a steering vector of dimension M+1 with all elements equal to zero except the first one which is equal to 1. In the algorithm, the primary antenna output is treated as coming from element No. 1. Although the beam controller computes an M +1 element weight vector (M < N), it can output a full N element weight vector given by :

$$W = W_o - D w \qquad (2-6)$$

where D is a matrix which maps the selected (auxiliary) M element weight vector to an N element vector, having zeroes for those elements not used for adaptive beamforming. $W_o$ is a calibrated steering vector chosen to provide desired sidelobe characteristics to the quiescent pattern.

All features of digital beamforming can be demonstrated with this architecture. This architecture has flexibility in that both the partial and full adaptivity can be demonstrated as the beam controller processing capability is improved to handle large size arrays.

2.2.3 **Beam Space Nulling Architecture** – Another approach to reducing the size of the matrices for adaptive weight computation is to do the nulling in the beam space domain. In beam space nulling, only a selected set of beams in the vicinity of the interfering signal directions are selected for interference suppression. The selected beams are called the component beams. These component beam outputs along with the desired beam outputs are linearly combined in a beam space combiner. The algorithm to generate the weights is the same as used for the element space adaptive nulling.

The beamformer architecture for performing adaptive nulling in the beam space domain is shown in Figure 2-5. The configuration consists of three separate beamformers (vector dot

Figure 2-5.   Digital Beamforming Architecture for
Beam Space Adaptive Nulling

product processors). Two beamformers are used to generate a set of multiple beams. At a 1000-nanosecond sampling interval, for example, a total of 16 beams are generated. These beam outputs are stored in a buffer. All, or a selected set, of these beams are passed on to the beam controller for generating the adaptive weights. One of these beams is designated as the main beam to be protected against interfering sources. The beam controller computes the weight vector in a manner similar to that shown for the partial adaptive nulling in the element space domain. This weight vector is applied to the the beam space combiner. With a single beam space combiner, a single weighted beam can be demonstrated for a 10-MHz input signal sampling rate or eight sequential weighted beams for a sampling rate of 1 MHz.

2.2.4 <u>Combined Element Space/Beam Space Beamformer</u> - It is desirable to have the capability to demonstrate both the element space and beam space domain nulling algorithms as a digital beamforming test bed. Figure 2-6 illustrates a configuration which allows both element space and beam space nulling demonstrations without changing or reconfiguring the hardware. The configuration is similar to that shown in Figure 2-5 for beam space nulling and Figure 2-4 for partial adaptive element space nulling. However, in this architecture a switching network is provided so that the beam controller accepts data either from the element space side or from the beam space side.

For element space nulling using full adaptivity, all element channel signals are directed to the beam controller. The beam controller computes a set of weight vectors which are then transferred to the element space combiners. The set of weight vectors given to the beam space combiner form an identity matrix. This results in the output beams being the same as the input beams. For the architecture shown in the Figure 2-6, one weighted output beam can be demonstrated for 10-MHz input signal sampling rate or eight weighted beams at 1-MHz sampling rate.

For element space nulling using partial adaptivity, a selected set of element signals are directed to the beam controller. Two steering vectors are given to the beam controller: one vector that sets the desired sidelobes for the quiescent beam and the other which is used in the adaptive weight computation as shown in Equation (2-5). Again the weight vector is directed to one of the element space combiners.

For beam space nulling, the weight vectors given to the beamformers are the quiescent weights designed to generate

Figure 2-6. Digital Beamforming Architecture Allowing Both Element Space and Beam Space Adaptive Nulling

scanned beams with or without low sidelobes. The component beam outputs are directed to the beam controller. The beam controller generates the weight vectors using an equation similar to that shown in Equation (2-5). These weight vectors are directed to the beam space combiner.

2.2.5 Recommendation – The full element space adaptive beamformer architecture is recommended as a baseline configuration for Phase II. However, an architecture which allows both element space and beam space combining with adaptive beamforming provides the versatility needed for a digital beamforming testbed. The adaptation of this architecture, however, will require a careful look at the whole system design and assessment of the future needs for the test bed.

## 2.3 DIGITAL BEAMFORMER PROCESSOR ARCHITECTURE

2.3.1 Programmable Processor Architecture – Traditional processing architectures are based upon a single processing element that executes a stored program which manipulates data in a random access memory space. The memory space, both for the stored program and for the data, make up the largest part of the system. Since there is only a single processor, communication with the memories is done is a serial manner. The overall throughput achievable by such an architecture is limited by the clock speed of the processor and the access times of the memories. This permits great flexibility in system operation in that the program can execute any operations needed, storing intermediate results within as large a random access memory as needed by the particular algorithm execution. The architecture, however, is throughput limited. Memory locations are only accessed occasionally by a processor that is in continuous operation.

The processing throughput required for the digital beamformer system is far beyond what can be obtained from a single processor. Thus a scheme for using multiple processing elements in parallel is required. Extension of the traditional processing architecture to a system with multiple processing elements could provide the necessary throughput. Each processor could independently execute part of the algorithm, with a controlling processor to coordinate the activity and combine the final results. The individual processors could each have local memories and, as well, have access to a global memory where final results would be stored. However, all local processors must contend for access to the global memory. This architecture still permits a great deal of flexibility, but system control and

coordination requirements still limit the number of processors which can be reasonably used in this type of architecture.

2.3.2 Dedicated Processor Architecture – Another type of architecture is needed to achieve the throughput required for digital beamforming. Since the algorithms which must be executed are known, the architecture does not need the programmable flexibility of traditional computers. Indeed, the program may be hardwired so that each processing element does not require an instruction to execute, but instead always performs the same instruction. The beamforming algorithm is then being controlled by the data flow through the system. Random access to memory elements is no longer required. Each processor is provided inputs from fixed locations while results are sent to another fixed location; another processor can then perform operation faster on it. This scheme requires only local interconnections between the processors and the memory elements, and avoids contention for memory locations. Each processor is kept busy, constantly computing local results. This type of architecture has been referred to in the literature as a systolic array processor. A general systolic array processor still may permit some flexibility by not hardwiring the instructions for each processor, but then an instruction memory for each processor is still necessary and the overall coordination of the system for execution of any particular algorithm must be maintained.

Given that only the execution of a particular algorithm is desired, the systolic architecture may be referred to as a dedicated hardware implementation of the algorithm. The memory for the system consists of local storage registers that hold results for use by the next processing element, and local data registers that hold coefficients that are associated with a particular processing element. The local storage registers serve as pipeline registers. The throughput of the system is limited only by the number of processing elements used in the system. The pipeline registers permit each processor to be continually engaged in computation. The total number of pipeline stages that must be passed through from raw data inputs to final data output is the pipeline delay for the systolic array. The system is simultaneously executing a number of independent iterations of the algorithm equal to the pipeline delay.

2.3.3 Dedicated Processor Algorithm Selection – For the beamformer program, two algorithms for beamforming are to be considered. These are the direct DFT type beamforming using element space processing, and the FFT type beam space processing followed by limited DFT combining. While the FFT algorithm

44

execution permits a considerable savings in the number of multiplications required for the beam space processing, the need for further combination of these results to produce the final output beams mitigates this advantage. Loss of capability must be endured when using the FFT approach, if the approach is to maintain a computational advantage in the number of multiplications required. For further details of the study of beam space and element space tradeoffs refer to paragraph 2.1.

Assuming that only the DFT beamforming algorithm is to be implemented with systolic pipelined dedicated hardware, the next questions to be addressed are the numerical accuracy and arithmetic implementation of this hardware. The numerical accuracy needed for the beamformer is a function of the applications, but general requirements have been delineated by the statement of work. The arithmetic implementation method may be selected to provide the optimum performance for a given amount of hardware needed.

The use of floating point arithmetic and fixed point arithmetic have both been considered. Fixed point arithmetic may be integer arithmetic internal to the algorithm with no round off errors except appropriate scaling of input and output data. Use of truncation internal to the algorithm may also be used by scaling appropriately at each algorithm step, but also thereby encountering roundoff error accumulation in the calculations. Floating point arithmetic also encounters roundoff error accumulation but provides much greater intrinsic dynamic range.

For beamforming, the dynamic range provided by the hardware, determines the simultaneous ability of the hardware to process both near range and far range input signals to the system. However, this dynamic range is maintained only by the mantissa portion of the floating point arithmetic system. The intrinsic dynamic range above does not help, since weak signals are lost due to roundoff errors when strong signals set the input signal gain levels at the input to the digital processing system. The DFT beamforming algorithm consists of essentially only the implementation of a complex vector dot product, and as such does not require a large intrinsic dynamic range. However, maintenance of the working near/far dynamic range is desired; therefore, a minimum of roundoff error accumulation is required.

2.3.4 *Processor Arithmetic Implementation* — Given that dedicated hardware implementation of the DFT beamforming algorithm is desired, the next question is what arithmetic for this implementation is best. Since the algorithm does not require cascading of multiplications, either a fixed point or pure integer implementation is acceptable. Furthermore, since the dynamic range for the complex vector dot product is limited, an integer implementation with no round off errors is attractive.

This type of arithmetic lends itself to a very efficient implementation by the use of Quadratic Residue Number System (QRNS) arithmetic. For comparison of the implementation of beamformer system chips using QRNS arithmetic and conventional binary integer arithmetic refer to paragraph 2.6.

The use of QRNS arithmetic as compared to conventional arithmetic permits higher clock speeds to be attained in the hardware implementation for comparable technologies. For systems of sufficient dynamic range, the QRNS system also will require less hardware. For either near-term or far-term beamformer systems, the QRNS arithmetic implementation provides an attractive solution. In a traditional processor environment, QRNS arithmetic presents several drawbacks.

To use QRNS arithmetic, all inputs must be converted into QRNS representation. The overhead associated with this conversion is approximately equivalent to a conventional multiply operation. Similarly, conversion of final outputs back to conventional binary representation is normally required. The overhead for this conversion is of the order of about three conventional operations. Operations in QRNS arithmetic are integer operations, so that cascading of multiplies results in a rapid growth of the output dynamic range. Gain in efficiency by using QRNS arithmetic requires that many operations be executed in the QRNS system for each associated input and output conversion. Thus, QPNS arithmetic is advantageous when a hardware intensive implementation is needed for an algorithm that requires many noncascaded multiply operations before an output is obtained.

Any algorithm requiring vector dot products may satisfy the need for many operations performed in the QRNS system for each input and output conversion. For the beamformer, since all inputs are in parallel, multiple beams must be formed from the same inputs in order to alleviate the overhead for the input conversions. The number of input channels must be reasonably large to alleviate the overhead for the output conversions. Both of these properties are present in the beamformer system requirements.

2.3.5 Processor Pipelining Considerations — Another architectural consideration in the implementation of a hardware intensive arithmetic processor design is the use of pipelining within the arithmetic operations themselves as opposed to the pipelining discussed to this point which involves the use of pipeline stages only between arithmetic operations. There are two ways in which internal operational pipelining may be performed. If a convenient intermediate state exists within the operation, a pipeline register may capture the lines representing this state and essentially halve the logic delay incurred, by

doubling the number of pipeline stages. The resulting structure may be capable of supporting twice the clock rate, thus doubling the system throughput at only the expense of the additional pipeline registers.

Alternativel., the inputs to an arithmetic operation may be delayed on a bit-to-bit basis to systolize the input data. That is, the least significant bit of an input data word is not delayed, the next significant bit is delayed by one pipeline stage, then the third bit by two stages, and so on. This scheme allows the use cf ripple carry addition arithmetic without incurring any delay for this ripple, since each stage of the addition is performed only after the carry from the last stage becomes available. The scheme could be employed on a n-bit basis as well, by delaying the next significant n-bits in each pipeline stage. This scheme, however, does not lend itself readily to implementation of multiplication circuitry, since the carry ripple into a given bit position of the final output is dependent upon carry bits generated from all of the input word bit positions. Multiplication would thus have to be implemented using successive additions with this architecture and timing between operations would become cumbersome. Although this scheme may present the highest permissible clock rate, its implementation would become increasingly unwieldy as word widths increase. Additionally, developing and testing such a time skewed data system would prove to be a quite formidable task.

QRNS arithmetic lends itself more readily to internal operational pipelining of both of the above types than does conventional arithmetic. Since QRNS arithmetic consists of forming modulo arithmetic residues, it does present convenient intermediate states within the numerical calculations. In modulo addition it is convenient to first form the binary sum of the inputs and pipeline the result. Also, the need to fix up the binary result in the event the modulus is overflowed can be stored in the pipeline as well. Then in the next stage a fix up binary addition is performed and the proper result (fixed up or not fixed up) is selected. Modulo multiplication presents similar intermediate stage results that may allow for internal arithmetic pipelining as well. Implementation of QRNS multiplication by use of modulo logarithms, is efficiently accomplished using a scheme with three pipeline stages internal to a multiplication operation.

2.3.6 **Hardware Multiplexing Issues** - Another general architectural issue is that of multiplexing the hardware. This multiplexing may be done for any one of several reasons. First, if the hardware is incapable of supporting the input data bandwidth, then multiple hardware systems could process subbands

to support the higher bandwidth. This is not a desirable choice since it leads to enormous amounts of hardware, which must be coordinated together in producing the high bandwidth outputs. The opposite situation is desired. The clock rate capability of the processor should be higher than the desired bandwidth to permit multiple output teams to be produced from the same hardware.

Another alternative would be to reduce the amount of required hardware for producing a given beam by altering the implementation of the vector dot product to a serial multiply/accumulate operation instead of the parallel multiply and add tree operations. This choice implies a processing clock speed that is much higher than that of the input data, even for the far term goals. This limitation of this architecture is necessary, since the bandwidth available is restricted by serial operation. The other choice above, to produce multiple output beams of lower bandwidth by multiplexing, is compatible with producing a single output beam with maximum bandwidth, using the same hardware.

GaAs technology may allow both types of multiplexing simultaneously. The clock speed may support the formation of multiple beams even with an architecture based upon serial execution of a multiply/accumulate operation for the individual beamforming. The number of coefficient registers required in using this approach, however, may become prohibitive. Paragraph 2.10 presents a GaAs system design with a length 16 multiply/accumulate operation for a 100-MHz input signal sample rate. Multiplexing this for 10-MHz input signal samples would imply a coefficient register of depth 160 words.

2.3.7 <u>Processor Architecture Selection</u> – The above paragraphs have qualitatively defined several architectural options for the implementation of the digital beamformer system. First, a choice between DFT and FFT algorithm usage identifies the DFT implementation as providing maximum beamformer capability with little, if any hardware advantage realizable even with a reduced capability FFT approach. Given a hardware intensive DFT implementation of a complex vector dot product for the beamforming processing, a choice of arithmetic implementation can be selected. The use of conventional arithmetic restricts the achievable clock rates and hence bandwidth achievable for the digital beamformer. The choice of QRNS arithmetic is recommended by the superior bandwidth capabilities as well as the favorable hardware growth for far term systems. Quantitative comparisons of these two choices are made in paragraph 2.6.

Examination, of all of the architectural issues in the implementation of a generic beamforming system is seen to be a

difficult task due to the great range of requirements that may be needed for specific applications. The approach taken for architectural study for the digital beamformer Phase I program has been to examine architecture with maximum bandwidth capability, but to allow multiplexing to produce multiple beams of lesser bandwidth to facilitate the demonstration of brassboard capabilities.

## 2.4 CHANNEL ERROR CORRECTION AND CALIBRATION

The objective of this task was to evaluate the methods for calibrating and correcting the errors in the receive channels of the array and to analyze their impact on the beamformer design.

The calibration of the array was considered for the following two situations:

- Small level of frequency dependent errors over the bandwidth of interest

- Large level of frequency dependent errors over the bandwidth of interest

For small error levels, the calibration can be considered only at the center frequency of the signal bandwidth. For large frequency dependent errors, frequency dependent calibration need to be considered for demonstrating desired null depths. The impact on the beamformer design for each of these schemes is described below.

2.4.1 Channel Error Compensation at Center Frequency - An estimation of channel errors involves injection of RF signal in each element path with equal amplitude and phase using a calibration manifold and measuring the amplitude and phase of the digitized signal. The differences in the amplitudes and phases between channels constitutes channel errors. These errors can be represented as diagonal matrix, the inverse of which then represents an error calibration matrix, C.

The calibration of the input signals to correct for the channel errors is the direct approach for digital beamformer design. This approach called the "in-line " calibration approach is illustrated in Figure 2-7. This approach provides calibrated signals to both the beamformer and to the adaptive array processor (beam controller). In-line calibration requires incorporation of a complex multiply chip in each element channel to perform the multiplication of the input signal with the calibration weight. For the QRNS multiply chip, this would require that the calibrated signals be converted back to the regular binary format before feeding to the beam controller, unless the beam controller is also a QRNS processor.

Additionally, the pins required to get the samples out would raise the pin count for these chips to an unacceptable level. Implementing the complex multiply chips using binary format do not present a technical problem. However, the requirement of an additional chip can make the implementation of digital beamformer unattractive from a cost standpoint. Additionally, the speed at which this chip would operate would limit the overall system speed and bandwidth to less than half of that achievable with the QRNS beamformer chips.

Figure 2-7.   In-Line Calibration of Channel Errors

An alternate "off-line" approach would be to calibrate the signals going into the beam controller and also to calibrate the weight vector going into the beamformer. The placement of the calibration weights for this case is shown in the Figure 2-8. The advantage of this scheme is that the multiply operations are done at slower rate. since the input signals going into the beam controller do not have to be sampled at Nyquist rate. Also the updates in the weight vector being output from the beam controller can occur at a slower rate. The slower speed requirement for the calibration weight multipliers therefore makes this approach an attractive one. However, one still has to provide multiplier chips in two different areas. Also certain algorithms may require the input signals going into the beam controller to be sampled at the Nyquist rate. In this case the approach may loose its attractiveness.

Another "off-line" approach involves calibrating only the steering or training vector given to the beam controller. The basis for this approach is given below. It is assumed for the derivation that the beam controller processor uses Sample Matrix Inverse algorithm to perform adaptive nulling. However, the same arguments are applicable for other algorithms as well.

The output of the digital beamformer is a discrete time sampled series represented by $y(t)$. The received input signals are represented by $x_i(t)$ for the ith antenna element, and the beam weights are represented by $w_i(t)$ for the ith processing channel. Collecting test signals and weights as components of N-dimensional vectors $x(t)$ and $w(t)$, the output of the beamformer is expressed as

$$y(t) = x^T(t)w(t) \qquad (2-7)$$

Consider the least squares solution for the weight vector based upon k input data samples

$$w_{ls}(k) = [X^T(k)X(k)]^{-1}s \qquad (2-8)$$

where $X(k)$ is a k by N matrix of k received signal vector samples, and s is the beam steering vector for a particular output beam.

Figure 2-8. Off-Line Calibration of Beam Controller Input Signals and Output Weight Vectors

52

Substituting Equation (2-8) in Equation (2-7) produces the least squares solution for the output $y(t)$ as

$$y(t) = x^T(t)[X^T(k)X(k)]^{-1}s \qquad (2-9)$$

Calibration of the input signals is represented by multiplication of the input signal vectors $x(t)$ by a diagonal matrix $C$ containing the calibration coefficients along the diagonal to produce calibrated input signal vectors $x_c(t)$ expressed as

$$x_c(t) = C\, x(t) \qquad (2-10)$$

Likewise the matrix of k calibrated input signal vectors becomes

$$X_c(k) = X(k)C \qquad (2-11)$$

$C$ appears on the right side of $X(k)$ because the $x(t)$ are column vectors and $X(k)$ consists of k rows of the transposed vectors $x^T(k)$. Now the least squares solution for the weight vector based upon k calibrated input data samples becomes

$$w_{cls}(k) = [C\, X^T(k)X(k)C]^{-1}s \qquad (2-12)$$

Now taking the inverse through the brackets produces

$$w_{cls}(k) = C^{-1}[X^T(k)X(k)]^{-1}C^{-1}s \qquad (2-13)$$

Finally, the output when using calibrated inputs becomes

$$y_c(t) = [C\, x(t)]^T\, w_{cls}(k) \qquad (2-14)$$

Substituting Equation (2-13) into Equation (2-14) and simplifying yields

$$y_c(t) = x^T(t)[X^T(k)X(k)]^{-1}C^{-1}s \qquad (2-15)$$

Now by comparing the resulting output Equations (2-15) and (2-9), it is observed that the only difference is that the steering vector $s$ must be premultiplied by the inverse of the calibration matrix, $C^{-1}$.

The above analysis has been verified through simulations. The adapted pattern without any calibration is shown in Figure 2-9. Figure 2-10 shows the adapted pattern when the steering vector used in the adaptive weight computation was multiplied by the inverse of the calibration vector. For these figures a linear Taylor taper with 30 dB peak sidelobes was used in the simulations.

This off-line calibration method removes not only the need for calibrating the input signals before they are passed to the beamformer, but also allows noncalibrated input signals to be

EP 0 480 737 A2

Figure 2-9. Adapted Pattern without Calibration: Channel
Errors of 1 dB rms Amplitude and 10 Degrees rms Phase

54

Figure 2-10. Adapted Pattern with Calibration: Channel
Errors of 1 dB rms Amplitude and 10 Degrees rms Phase

used in the beam controller processor. Figure 2-11 illustrates the modified digital beamforming system necessary to accomplish this method of off-line calibration. Only the beam steering vectors need to receive inputs from the calibration subsystem. The calibration is then accomplished by modifying the beam steering vectors to account for the channel errors. This indirect approach requires no additional hardware, since th' calibration weights are essentially constants that change only at a very slow rate and the beam steering vectors are antenna system constants that are applied to direct the multiple beams as desired for system operation. Thus the beam steering vectors can be calibrated off-line and then still be applied to direct the multiple beams as before. Two modes of operation are necessary according to whether the adaptive beam controller is being used or not.

When the system is operated in an open loop manner without the adaptive beam controller this method becomes equivalent to the off-line beam weight calibration method. The beam steering vectors are the beam weight vectors in this case and the associative property of the multiplication permits the calibration of these beam weights instead of the input signals. In this mode the calibration matrix, C, multiplies the beam weight vector, for example in beam scanning operation. The requirement to accomplish the calibration within 10 microseconds is removed, however, since the beam steering vectors are the beamformer system constants that only need altered when the calibration weights change.

When the beam controller adaptive nulling processor is present the calibration of the beam steering vectors must be altered from that used above. This may require that two sets of calibrated beam steering vectors be stored when the system operation is required to change between the two modes rapidly. The multiplication of the beam steering vectors by the inverse covariance matrix in the beam controller requires that the inverse of the calibration matrix, $C^{-1}$, be applied to the beam steering vectors instead of applying the calibration weights directly as in the open loop operation mode above (Equation 2-15).

2.4.2 <u>Recommendation for Frequency Independent Error Correction</u> - Testing of the off-line beam steering vector calibration method has been performed by making appropriate modifications to the digital beamformer simulation model developed earlier. The results from the simulation have indicated no difficulties are encountered in using this calibration technique. The simplicity of implementation of this technique makes it the recommended method for performing the calibration function.

Figure, 2-11.   Off-Line Calibration of Beam Steering Vectors

2.4.3 Frequency Dependent Error Correction - The frequency dependent errors are unavoidable in the digital beamforming systems. These errors stem from the incorporation of recievers in each of the element channels. The multiple down-conversion processes and attendant filtering operations inevitably introduce errors between channels which vary as a function of frequency over the bandwidth of interest.

Analysis similar to that given by Mayhan in [1] was used to compute the null depths in the array patterns for a jamming signal of different bandwidths and different standard deviations of the frequency dependent channel errors. These results are tabulated in Table 2-5. The results indicate that 2 dB rms amplitude error and 20 degrees rms phase error across a 1-percent bandwidth may be tolerated in the demonstration of greater than 50-dB null depths in the array pattern.

TABLE 2-5.  NULL DEPTH AS A FUNCTION OF BANDWIDTH AND
RMS VALUE OF FREQUENCY DEPENDENT ERRORS

| Frequency Error | | 0% Bandwidth | 1% Bandwidth | 10% Bandwidth |
|---|---|---|---|---|
| Amplitude (dB) | Phase (Deg) | Average Null Depth | Average Null Depth | Average Null Depth |
| 0.0 | 0 | −85.11 | −82.12 | −59.22 |
| 0.5 | 5 | −84.81 | −81.90 | −59.06 |
| 1.0 | 10 | −83.96 | −81.28 | −58.62 |
| 1.5 | 15 | −82.66 | −80.31 | −57.98 |
| 2.0 | 20 | −81.07 | −79.07 | −57.25 |

If the actual implementation errors far exceed those given above and if better than 50-dB null depths are to be achieved, then compensation for frequency dependent errors is needed. Two approaches were considered for the frequency dependent error compensation. They are:

• Frequency domain correction

• Time domain correction

The frequency domain correction involves performing FFT of the time domain samples in each element channel as shown in the Figure 2-12. The frequency domain samples are then multiplied by the calibration weights calculated to correct for the channel errors at corresponding frequencies. The frequency corrected samples are then inverse transformed and passed on to the digital beamformer. The advantage of this approach is that excellent

frequency dependent error compensation can be achieved. The disadvantage is the need for two FFT operations in each channel.

The time domain correction involves use of finite impulse response (FIR) filters in each channel. The weights in this filter are selected to equalize the frequency response of each channel. This equalization can be done either by "a priori" measurements of the errors in the channels or in an adaptive manner. Figure 2-13 shows implementation of the frequency dependent channel correction using FIR filters in each channel. This digital filter may consist of many taps. The implementation of such digital filters is best done using RNS hardware. The use of RNS arithmetic for both digital filter and beamforming makes the application of this frequency dependent error correction quite attractive. The disadvantage of the digital filter approach is the large number of taps which will be required for correcting frequency dependent errors.

Figure 2-12. Frequency Dependent Error Compensation
Using In-Line FFT Approach

2.4.4 Recommendation for Frequency Dependent Error Correction - For near-term demonstration of the digital beamforming it is recommended that only frequency independent error correction be applied. For long-term application of digital beamforming, either frequency domain or time domain filtering schemes are recommended for frequency dependent error correction. For a digital beamformer based upon RNS arithmetic, the FIR filter design approach is recommended. For a beamformer using conventional arithmetic processor, the FFT approach is recommended. All word widths include a sign bit.

2.5 IMPACT OF QUANTIZATION ERRORS AND FINITE WORD LENGTHS

The objective of this analysis task was to investigate the impact of signal and weight quantization errors on the sidelobe levels, dynamic range and the nulling performance of the digital beamforming array. The impact on these errors on the beamforming performance is discussed first, followed by simulations for a 64-element array.

2.5.1 Impact on Sidelobe Levels - The signal and weight quantizations and the round-off errors caused by finite word lengths in the multiply operation, contribute to the random amplitude and phase errors in the beamforming process. These random errors in turn add a random component to the ideal radiation pattern. The rms value of this random component relative to the peak of the beam is referred to as the rms sidelobe level. Table 2-6 gives relationships between various error sources and their contribution to the rms sidelobe level of the array pattern.

Figure 2-13. Frequency Dependent Error Compensation Using
In-Line FIR Filters to Equalize Frequency Response of All Channels

### Table 2-6. Contribution of Various Errors to the RMS Sidelobe Level

| Source | Parameter | Contribution |
|---|---|---|
| Signal Quantization | word length $(b_s)$ | $\dfrac{2}{3}\dfrac{2^{-2b_s}}{N \cdot N_a}$ |
| Weight Quantization | word length $(b_w)$ | $\dfrac{2}{3}\dfrac{2^{-2b_w}}{N \cdot N_b}$ |
| Gain/Phase Mismatch | rms amplitude error $(\Delta)$ <br> rms phase error $(\delta^2)$ | $\dfrac{1}{4}\dfrac{(\delta^2 + \Delta^2)}{N \cdot N_a}$ |
| Truncation After Multiplication | word length $(b_m)$ | $\dfrac{4}{3}\dfrac{2^{-2b_m}}{N \cdot N_b}$ |

$$N_a = \frac{\left|\sum\limits_{n=1}^{N} W_n\right|^2}{N \cdot \sum\limits_{n=1}^{N} |W_n|^2}$$

$W_n$ = complex weight for the $n$th antenna element

$N$ = number of elements in the array

$$N_b = \frac{\left|\sum\limits_{n=1}^{N} W_n\right|^2}{N^2}$$

Table 2-7 shows the impact of signal and weight quantization on the rms sidelobe level of a 64-element array with a 40-dB Taylor taper. The combined effect of 9-bit signal quantization and 8-bit weight quantization on the rms sidelobe level is less that 3 dB. A comparison of the computed 64-element array pattern with and without quantization errors is given in the Figures 2-14 and 2-15.

### TABLE 2-7. EFFECTS OF WEIGHT QUANTIZATION ON RMS SIDELOBE LEVEL OF 64 ELEMENT ARRAY

| No. of Bits | RMS Sidelobe Level |
|---|---|
| 8 | -76.4363 |
| 9 | -82.4569 |
| 10 | -88.4775 |
| 11 | -94.4981 |
| 12 | -100.5187 |

Figure 2-14. Error Free Pattern for 64 Element Array:
Hamming Weighting

64

Figure 2-15. 64-Element Array Pattern with 9-Bit Signal
Quantization and 8-Bit Weight Quantization

2.5.2 Impact on Dynamic Range - The dynamic range is related to the digital word lengths used in the signal representation and is stated in terms of the maximum difference that can be detected in the power level of high and low amplitude signals incident on the array. The quantization and round-off errors combined with the thermal noise determine the minimum detectable signal. The particular representation of the digital number system (fixed point, floating point, etc.) determine the largest signal level that can be handled.

Table 2-8 shows the effects of the thermal noise, quantization and round-off errors on the dynamic range of the digital beamformer, as a function of the number of bits used for the representation of the signal at the input and output of the beamformer. The quantization level is considered to be equal to the rms voltage level of the thermal noise. The dynamic range is related to the word length $(b_s)$ by

$$\text{Dynamic range (dB)} = 10 \log_{10} \left( \frac{N}{10} \, 2^{2b_s} \right) \qquad (2-16)$$

where N is the number of elements in the array.

TABLE 2-8. EFFECTS OF THERMAL, QUANTIZATION, AND ROUND-OFF
ERROR ON THE DYNAMIC RANGE OF 64 ELEMENT ARRAY

| No. of Bits | Dynamic Range (dB) |
|---|---|
| 8 | 56.22659 |
| 9 | 62.24719 |
| 10 | 68.26779 |
| 11 | 74.28839 |
| 12 | 80.30899 |

2.5.3 Impact on Null Depth

2.5.3.1 Signal Quantization Effects - Computer simulations were performed to analyze the impact of signal quantization on the null depth performance. For this analysis, an interfering signal, 40 dB above thermal noise was considered incident on the array at an angle of -8 degrees from the boresight. The quiescent array weighting was used to yield a -30-dB peak sidelobe level. Except for the signal quantization, the array implementation was considered perfect. The impact of signal quantization on the null depth for a 64-element array is shown in Table 2-9. A degradation of 10 dB is observed going from a 12-bit to a 9-bit representation for the input signals. The results in Table 2-9 show that the 9-bit quantization of the input signal will meet the 50-dB null depth requirement.

TABLE 2-9.  IMPACT OF SIGNAL QUANTIZATION ON NULL DEPTHS

| No. of Bits | Null Depths (dB) |
|---|---|
| 8 | − 69.48 |
| 9 | − 75.44 |
| 10 | − 81.49 |
| 12 | − 85.15 |
| Analog | −109.94 |

2.5.3.2 <u>Weight Quantization Effects</u> − The antenna pattern null depths are influenced by the precision with which the weights are computed and the digital word length used to set the weights in the beamformer. The analysis of the null depth degradation caused by finite bit representation of the weights is dependent upon the specific algorithm used for adaptive nulling and on the jammer scenarios. A worst case analysis performed by Nitzberg [9] for the case of Sample Matrix Inverse algorithm was adapted here to evaluate the impact of finite word length on the null depth. The results are given in the Table 2-10. The degradation is given for two different values of cancellation ratio. The cancellation ratio is the ratio of the jamming powers at the array output before and after adaptation. The cancellation ratio of 30 dB is typical for jammers close to the main beam and 20 dB for jammers in the far out sidelobe region. This worst case analysis indicates the need for 9-bit to 10-bit word length for the weight values.

Computer simulations were also run to quantify the effects of weight quantization on the null depth. Table 2-11 shows the impact of weight quantization on the null depth. The degradation in the null depth going from 12-bit word length to 8-bit word length for the weights is seen to be 24 dB. However, even with 8-bit weight word length the null depth is better than 50 dB.

TABLE 2-10. DEGRADATION IN CANCELLATION RATIO
DUE TO WEIGHT QUANTIZATION

| No. of Bits | Degradation (dB) | |
|---|---|---|
| | CR = 30 | CR = 20 dB |
| 8 | 13.39120 | 4.890204 |
| 9 | 7.929750 | 1.820816 |
| 10 | 3.621210 | 0.531585 |
| 11 | 1.223865 | 0.139119 |
| 12 | 0.339784 | 0.035199 |

TABLE 2-11. IMPACT OF WEIGHT QUANTIZATION ON NULL DEPTH
(Jammer at -8 degrees)

| No. of Bits | Null Depth |
|---|---|
| 8 | - 82.78 |
| 10 | - 82.62 |
| 12 | -118.78 |
| Analog | -109.94 |

2.5.3.3 Combined Signal and Weight Quantization and Channel Nonuniformity Errors — Simulations were run for several multiple jammer cases. Figure 2-16 shows the adapted array pattern for eight interfering signals. For this simulation, the signal was quantized to 9 bits, weight to 8 bits and the channel errors were 1 dB rms in amplitude and 10 degrees rms in phase. It is seen from this figure that the null depths for all jammer cases exceeded 60 dB.

Both the analysis and simulation results have shown that the signal quantization of 9 bits and weight quantization of 8 bits will support the 50-dB null depths for the adapted patterns. The computations done in the beamformer using QRNS arithmetic, effectively represent the precision of a 25.5-bit word length, and no round off takes place in the arithmetic operations. The impact of the compuatational accuracy on the null depths or on the sidelobes is therefore negligible.

JAMMERS AT  −10  −8  −7.5  −7  1.5  5  10  15

Figure 2-16.  Adapted Array Pattern for Jammers at
−10, −8, −7.5, −7, 1.5, 5, 10, and 15 Degrees with:
±1.0 dB rms amplitude and 10 Degrees rms Phase Errors between
Channels, 9-Bit Signal Quantization and 8-Bit Weight Quantization

## 2.6 PROCESSOR CHIP IMPLEMENTATION TRADEOFF

2.6.1 <u>Introduction</u> - To achieve the maximum bandwidth processing goal of the SOW requires an architecture with dedicated algorithm processing. A systolic implementation of the DFT element space beamforming method is recommended. Each processing node continually executes the same function with systolic data flow between processing nodes. With separate I and Q channel processing, the achievable system bandwidth is essentially equal to the achievable processing clock speed. Each beam weight coefficient for a particular beam is applied on each clock cycle to produce an output beam for that cycle which appears at the output several pipeline delay stages later.

The hardware may be multiplexed to produce more beams, each with a smaller bandwidth. Given that a smaller bandwidth than the maximum achievable is sufficient permits an architecture which multiplexes the processing to reduce the hardware required. By sacrificing more of the dedicated processing performance the hardware can be made more programmable. The design of system chips for a dedicated processing system as opposed to a programmable processing system is considerably different. The chip implementation trade off studies performed for the digital beamformer program assume a dedicated processing architecture of the DFT beamforming algorithm type. Chip implementations are examined for both near term and far term system goals.

Two goals from the SOW produce severe restrictions upon digital implementations. First the signal bandwidth requirements, especially for the far term require digital implementation that strain the technological capabilities of digital clock speeds. Second the sheer number of input channels and output beams required necessitate a large amount of hardware with an inordinately large amount of interconnection. These factors require the beamformer architecture to consist of many modules, each with large numbers of input and output pins. Restrictions on the practical number of module input and output pins, especially for standard boards make demands on the architectural layout of the beamformer system chips. Far term solutions to these problems can overcome these difficulties without affecting chip design and module layout. Thus chip implementation tradeoffs will be made without consideration for near term module layout restrictions.

A primary architectural consideration involves the arithmetic used by the beamformer system. The effectiveness of digital beamforming when implemented with RNS or with conventional arithmetic has been examined. The effectiveness of these designs has been determined by the amount of hardware required and the achievable throughput attained by the opposing implementations. The use of custom cell performance ASIC gate arrays for either implementation is assumed. Since the

EP 0 480 737 A2

architecture involves a large number of pipeline registers, a cell structure that is optimized to include standard cell implementation of DFFs is the proper measure for these components. This implies a gate count of five gates for each DFF, whereas gate array technology without standard cell DFFs takes seven gates for each DFF. The implementations are evaluated by determining the total gate counts and the total nominal gate delays required by the opposing implementations. The system requirements for chip layout and module construction are also examined.

2.6.2 Estimation Methodology – Gate counts are determined by the ASIC cell count required for the particular gate structures used. In general, the cells required for a particular gate is one less than the number of inputs, unless the number of inputs is divisible by 4 in which case the number of cells required is two less than the number of inputs. For example, a two-input NAND requires one ASIC cell, a three-input or a four-input NAND requires two ASIC cells, a six-input NAND requires five ASIC cells and a eight-input NAND requires six ASIC cells.

Actual delay performance analysis requires simulation of the electrical characteristics of the design in the implementation medium. This amount of effort is not appropriate for this analysis and instead a simplified delay analysis method is employed.

NAND gates with two, three or four inputs implemented in ASIC have essentially the same delay for the same implementation geometry sizes. This will be considered as one nominal delay. NAND gates with more than four inputs incur essentially twice the delay in ASIC cell implementations available and are thus considered as having an effective two nominal delay. Combination gates such as two two-input AND gates into a two-input NOR gate, as well as exclusive OR and exclusive NOR gates each consist of two levels of logic and although slightly faster than two nominal delays, are considered as two nominal delay gates for the delay analysis. Gates with high fanout also incur greater delay and to account for this gates with high fanouts are evaluated as two nominal delay gates where appropriate. The use of NOR gates in CMOS ASIC cells produce poorer delay results than do NAND gates and as such NOR gates are avoided in any critical pathways.

2.6.3 RNS Component Evaluation – The QRNS rings of 5, 13, 17, 29, 37, 41, 53, and 61 have been evaluated for use in the above components. Larger moduli may also be used, but the complexity level becomes less advantageous. For systems requiring larger dynamic range than can be attained by these moduli, the use of non-quadratic RNS moduli with complex RNS or

71

CRNS arithmetic instead of QRNS can also be used. A system with mixed QRNS and CRNS usage is permitted by the independence of the parallel RNS arithmetic channels. The use of CRNS components for the beamformer system has not been considered for the baseline component development. Far-term system design with CRNS components mixed with QRNS components does not provide the design with as easy modular expandability, however the'r inclusion is necessary to maintain the advantage of RNS throughput without increased complexity. Detailed examination of CRNS components has not been included in the scope of the Phase I Digital Beamformer Design effort.

The dynamic range provided with the eight QRNS rings is sufficient for the near-term and far-term goals from the SOW. For the baseline system the first 6 rings provide an effective binary integer processing range of approximately 25.5 bits. This is seen from $5*13*17*29*37*41 = 2^{25.5}$. Including the last two rings expands the effective binary integer processing range to approximately 37.2 bits. The dynamic range required for the DFT beamforming algorithm when using complex integer processing is 25 bits for the near term assuming 9-bit coefficients, 9-bit data, 64 I channels and 44 Q channels. For the far-term with 14-bit coefficients, 14-bit data, 256 I channels, and 256 Q channels the DFT dynamic range is 37 bits. Near-term and far-term system comparisons of QRNS and conventional complex integer arithmetic will be made using 9 x 9 and 14 x 14 multipliers in the conventional implementations. The size of the multipliers in the QRNS implementation is restricted by the requirement to not exceed the total processing range with the computed output, and by the bit width accuracy of the inputs provided.

Components of the QRNS beamformer include RNS format and QRNS transform components to convert input data from binary representation to QRNS format. The vector dot product is executed with the QRNS multiplication and QRNS addition components. Finally, reconversion to binary representation requires the QRNS inverse transform and binary reformat components.

Gate counts for critical gate delay paths of six gate delays are given in Appendix A. Using these components gate counts for the QRNS beamformer systems for near-term and far-term comparisons are determined. A particular chip implementation option is given in Section 3 based upon the six near-term moduli. This implementation uses a minimum number of chip types to minimize near-term chip development NRE.

A different chip set would be required to realize the advantages of reduced pin counts for the chips that are possible because of the independent QRNS rings. By partitioning the QRNS system with different rings on different chips the pins needed for that chip include only the inputs for the ring on that chip. This reduces input word width requirements to only 6. However,

the large number of parallel input channels required by the beamformer remain a problem. With only one ring per chip, more channels must be input to the same chip to not increase the number of chips in the system, which again results in chips with large I/O pin requirements.

2.6.4 <u>Conventional Arithmetic Multiplication and Addition</u> – Gate counts and number of gate delays in the critical path for conventional multipliers have been provided by the ASIC development division of TI. For a 16 x 16 multiply, 2200 gates are required for a 30 delay implementation. For a 12 x 12 multiply, 1470 gates produce a 24 delay implementation. An 8 x 8 multiply using 890 gates requires 18 gate delays. For the beamformer comparisons 9 x 9 and 14 x 14 multipliers are needed, for the near term and far term systems, respectively. By interpolation using the above implementations, gate counts and delays for the 9 x 9 multiplication are 1000 gates with 19 delays, and for the 14 x 14 multiplication are 1700 gates with 27 delays.

Adder implementations for the beamformer comparisons consist of 25 x 25 and 37 x 37 for the near-term and far-term systems respectively. A combination of 4-bit fast carry lookahead with ripple carry between sections can be employed to achieve the 19 and 27 delay counts with the minimum number of gates. This requires about 300 gates for the 25 x 25 adder and 450 gates for the 37 x 37 adder.

2.6.5 <u>QRNS and Conventional Beamformer Comparisons</u> – Using the gate counts as determined above and in Appendix A comparisons for implementing a digital beamformer have been made. These comparisons have assumed a systolic pipelined DFT beamformer implementation. Both nonmultiplexed and multiplexed beamformers are considered. Gate counts for registers for the pipelining and for tap weight application and loading have been included at five gates for each register bit. This is consistent with custom cell implementation of the chips that would be appropriate for far term system applications.

The near term QRNS beamformer uses moduli 5, 13, 17, 29, 37, and 41 to achieve a dynamic range of 25 bits. The far term QRNS beamformer uses moduli 5, 13, 17, 29, 37, 41, 53 and 61 to achieve a dynamic range of 37 bits. Conventional arithmetic implementations with identical dynamic ranges are compared to the QRNS implementations.

As a basis for the comparisons, a single complex multiply combined with a single complex addition is used to define the basic building block. To implement the DFT beamformer, one such basic building block is needed for each channel of each beamformer. The gates for the pipelining registers are included in the gate counts for the building blocks. Additional gates for the coefficient register files are included 'n the multiplexed implementations. Multiplexing is assumed to be to a level of 8 for generating the comparisons, although other multiplexing levels could be implemented as well. The QRNS implementations also include conversion into and out of the QRNS representation. The overhead for these conversions slightly reduces the advantage of QRNS.

Table 2-12 shows the approximate gates required for the basic building blocks of the different systems. The QRNS systems all have a critical path of 6 gate delays while the conventional near-term system has 19 gate delays and the conventional far-term system has 27 gate delays. These throughput criteria are combined with the gate counts to produce gate count, throughput product complexities for comparison. The QRNS complexities are expressed as a fraction of the conventional products.

TABLE 2-12. BEAMFORMER BASIC BUILDING BLOCK GATE COUNTS

BLOCK: COMPLEX MULTIPLY AND ACCUMULATE WITH REGISTERS

|  | QRNS NO - MUX | CONV NO - MUX | QRNS MULTIPLEXED | CONV MULTIPLEXED |
|---|---|---|---|---|
| NEAR TERM | | | | |
| GATES | 4400 | 6200 | 6600 | 6900 |
| DELAY | 6 | 19 | 6 | 19 |
| COMPLEXITY | 0.22 | 1.0 | 0.30 | 1.0 |
| FAR TERM | | | | |
| GATES | 7000 | 10200 | 10000 | 11100 |
| DELAY | 6 | 27 | 6 | 27 |
| COMPLEXITY | 0.15 | 1.0 | 0.20 | 1.0 |

Table 2-13 gives approximate gate counts for the QRNS conversion components. The QRNS to binary conversions are rough estimates. The recommended QRNS brassboard system includes a binary to QRNS conversion chip for each channel of each beamformer. This organization was chosen to simplify interconnection difficulties. Far term module development will allow sharing of these converters over at least eight beamformers. Theoretically, only one input converter is required for each channel no matter how many beams are formed. If the final system is to operate only in a multiplexed mode, then the number of input converters needed is further divided by the multiplexing level.

One output converter is always required for each beamformer. However, this overhead is divided by the number of antenna elements since each basic block corresponds to one antenna element. The overhead for the output converters is therefore less than the input converters, since no interconnection difficulties are encountered for these components.

TABLE 2-13. QRNS CONVERSION COMPONENT GATE COUNTS (6 DELAY)

| | BINARY TO QRNS CONVERSION | QRNS TO BINARY CONVERSION |
|---|---|---|
| NEAR TERM | 6500 | 40000 |
| FAR TERM | 10300 | 60CJO |

Combining the QRNS conversion components into the complexity comparisons produces a complexity ratio of 0.63 for the QRNS brassboard system multiplexed implementation. If only one converter were used at each element for all 4 beamformers then the complexity ratio would be 0.41. If the system were to be used only in the multiplexed mode then one converter could supply inputs for 8 elements for all 4 beamformers. This would produce a complexity ratio of 0.34, which is nearly equal to the maximum achievable of 0.30 found in Table 2-12 for the near term multiplexed system without conversion components considered.

For a far term system, with no multiplexing so that maximum throughput is achieved, and with each input converter supplying converted inputs to eight different beamformers the complexity ratio is 0.20, or a 5 to 1 advantage for the QRNS implementation. This assumes only 64 antenna elements. With 256 elements the complexity ratio is 0.18 for the nonmultiplexed far term system, and 0.23 for the multiplexed far term system.

## 2.7 CHIP VENDOR SELECTION

A preliminary ASIC development RFQ for the digital beamformer brassboard system was prepared during the Phase I effort, and quotes were solicited for seven ASIC vendors. Information was also sought about the maximum clock rates achievable for the baseline component designs from each of the vendors. The replies to the RFQ indicate that 4 of these vendors are capable of supplying the ASIC chips needed for the Phase II development effort. The costs for the chip development and the necessary number of deliverable chips remain approximately the same as was estimated for the program in the original proposal. However, the system utility has been expanded by the multiplexing capability and by the expected throughput performance in comparison to the original proposal.

Selection of the actual vendor for the development of the ASIC chips will be made early in Phase II after solicitation of best and final offers for the ASIC chips. Finalization of the beamformer system design and the chip partitioning shall be completed prior to this solicitation.

Some of the vendors indicated that the masks used in the generation of the chips would not be deliverable since they contain information considered proprietary by the vendor. However, magnetic tapes containing the cell interconnections can be generated from the design without the inclusion of any vendor proprietary information.

Preliminary analysis of critical paths for the brassboard design indicate that the ASIC chips from any of the four qualifying vendors should be capable of a 50-MHz clock rate.

The use of gate array technology to construct the brassboard system has been assumed, for reasons of cost and capability. Recent advances in programmable gate array technology could permit the use of these devices for the system. This would further reduce NRE but also limit performance somewhat. The splitting of the QRNS parallel rings into different chip types could be done without incurring excessive NRE and thus reduce chip pin counts. Module layout could be divided also into the parallel rings and thus reduce module pin counts. Further study is needed to determine the feasibility of using these devices.

## 2.8 SYSTEM INTERFACE AND TEST ISSUES

The design of the digital beamformer subsystem cannot be entirely separated from the design of the rest of a digital, adaptive and surveillance beamforming system. For example, paragraph 2.2.4 presents an architecture for combining adaptive nulling in element space or beam space using selection networks for both element space and beam space adaptation control. This design presents many more system interface issues than does the recommended brassboard system design.

In particular the number of degrees of freedom that the adaptive controller can process in real time sets a limit on the channels that need to be sampled by the controller. A selection network to control this process would be advisable, and update of only the adaptation weights could reduce the weight update time. The brassboard assumes that all channels are sampled by the controller and all weights for a given beam are updated together.

Calibration requirements produce different modes of steering vector calibration depending on the operational scenario of the beamformer as a surveillance or tracking instrument. This control must be considered in applications systems. Overall system control for various application systems may present

different system interface requirements. Recognition of and allowance for these requirements needs to be included in the design goals of the surveillance and adaptive beamforming system of which the digital beamformer suosystem is a part.

Design of an overall system with built-in-test and fault-isolation capabilities, as well as system reconfigurability for fault-tolerance is desirable. System maintainability must be achieved in any viable design. The use of QRNS in the architecture presents additional advantages in these areas. The small independent word widths of the QRNS rings allows easier testing by greatly reducing test vector requirements. The use of redundant rings in the QRNS processing system can permit design of a system with Fault-Tolerance capability. System failure, can be replaced with graceful degradation with this capability. Further study of design with fault-tolerance capability should be pursued in future programs.

An issue of particular concern to far-term systems is the great number of parallel inputs to both the beamformer and beam controller subsystems produced by the antenna elements. Multiplexing these inputs to substantially reduce their number by increasing the input clock speed will be particularly difficult with high bandwidth far-term signals. Use of optical interconnection methods, however, may still permit this achievement to be realized. Some progress in this area is needed to alleviate the I/O difficulties presented by large number of parallel inputs to the beamformer system.

Of more immediate concern, are system test issues for the brassboard demonstration system. Requirements for component and subassembly testing in the recommended brassboard design are recognized in Section 3, and development with these test methods is emphasized in the brassboard development and test plan in Section 4.

## 2.9   MODULARITY AND FAR-TERM GOALS

The objective of this task was to study how the modular nature of beamforming architecture can be extended to large planar arrays. As specified in the statement of work, the following three array types were investigated:

- 256 element linear array

- 64 x 8 planar array

- 64 x 64 planar array.

The DFT implementation using QRNS arithmetic was considered for the digital beamformers. Both silicon and GaAs based processor implementations were considered. For silicon based processor, a 50-MHz clock rate (processing speed for a pipeline stage) was considered. For GaAs based processor, 1-GHz clock rate was considered feasible in the near future. The input signal sampling rate of 25 MHz was assumed for far-term implementation of digital beamforming.

DFT digital manifolds of the future were considered to be built using the following processor chips:

- Binary to QRNS conversion chip (BQRNS)

- Two way complex multiply and accumulate chip (MUL)

- Four way real adder chip (ADD)

- QRNS to binary conversion chip (QRNSB)

The digital beamformer requirements for the above large arrays were cast in terms of the number of above processor chips required for its implementation. The two-way complex multiply and accumulate chip will have a set of programmable weights stored in a register. This processor chip is designed to multiplex through these weights during every sample period. For a clock rate of 1-GHz and an input sampling rate of 25 MHz, 32 different multiply and accumulate functions can be carried out during one sample period. Figure 2-17 shows an example of a 8-way digital manifold using these four basic chip sets.

The architecture, multiple beam capability, and hardware complexity for the far-term digital beamformers are discussed below.

2.9.1 Digital Beamforming for 256-Element Linear Array — Figure 2-18 shows the beamformer architecture for 256-element linear array. Four 64-way combiners are used. Each of these combiners can generate 32 partial beam outputs for GaAs based processor and 2-beam outputs for silicon based processors. The outputs of these beamformers are next combined in a set of four-way beamformers. Thirty-two of these four-way beamformers would be needed or GaAs based processor and only two for a silicon based processor.

Table 2-14 shows the multiple beam capability and hardware requirements for GaAs and silicon based processors. The composition of the DFT beamformers and the number of processor chips required and the corresponding cost are shown this table.

RECEIVERS &
A/D CONVERTERS

I & Q CHANNELS

BINARY TO QRNS
CONVERSION CHIP

2 CHANNEL
WEIGHTED COMBINED
CHIP

4 WAY ADDER CHIP

QRNS TO BINARY CONVERSION
CHIP

BEAM OUTPUT

Figure 2-17.   Example of 8-Way DFT Manifold Using
Four Types of Processor Chips

Figure 2-18. 256-Element Linear Array Beamformer Architecture

TABLE 2-14. DICITAL BEAMFORMER CHARACTERISTICS
FOR 256 ELEMENT LINEAR ARRAY

| Processor Technology | Beamformer Construction QTY | Type | Processor Chips BQRNS | MUL | ADD | QRNSB | No. of Beams |
|---|---|---|---|---|---|---|---|
| GaAs | 4 | 64 way BFM | 64 | 128 | 121 | 32 | 32 |
| | 1 | 4 way adder | | | | | |
| Si | 4 | 64 way BFM | 64 | 128 | 91 | 2 | 2 |
| | 1 | 4 way adder | | | | | |

2.9.2 Digital Beamforming for 64 x 8 Element Planar Array - A beamformer architectures for planar arrays is shown in Figure 2-19. Using number of column manifolds equal to the number of beams from each row manifold, an area coverage of the output beams can be achieved. Using only a single column, a line coverage is achieved within a sample period. Both the area and linear coverages can be changed within a time period required to update the weights in the beamformer.

Figure 2-19. Beamformer Architecture for Planar Arrays

Table 2-15 shows the multiple beam capability, and hardware requirements and the cost for such a beamformer based on GaAs and silicon technologies.

TABLE 2-15.  DIGITAL BEAMFORMER CHARACTERISTICS
FOR 64 X 8 PLANAR ARRAY

| Processor Technology | Beamformer Construction QTY     Type | | Processor Chips | | | | No. of Beams |
|---|---|---|---|---|---|---|---|
| | | | BQRNS | MUL | ADD | QRNSB | |
| GaAs | Area Coverage<br>8    64 way BFM<br>32     8 way SFM | | 512 | 384 | 240 | 1024 | 32 x 32 |
| GaAs | Line Coverage<br>8    64 way BFM<br>1     8 way BFM | | 512 | 260 | 178 | 32 | 1 x 32 |
| Si | Area Coverage<br>8    64 way BFM<br>2     8 way BFM | | 512 | 264 | 180 | 4 | 2 x 2 |
| Si | Line Coverage<br>8    64<br>1     8 | | 512 | 260 | 178 | 2 | 1 x 2 |

2.9.3 Digital Beamforming for 64 x 64 Element Beamformer - Just as in the previous case, two beamformer types were considered: one to provide an area coverage and the other to provide a line coverage. Table 2-16 shows the multiple beam capabilities, and hardware complexity associated with the digital beamformer for this size array.

TABLE 2-16.   DIGITAL BEAMFORMER CHARACTERISTICS
FOR 64 X 64 PLANAR ARRAY

| Processor Technology | Beamformer Construction QTY    Type | Processor Chips BQRNS | MUL | ADD | QRNSB | No. of Beams |
|---|---|---|---|---|---|---|
| GaAs | Area Coverage 64  64 way BFM   32  64 way BFM | 4096 | 3072 | 2112 | 1024 | 32 x 32 |
| GaAs | Line Coverage 64  64 way BFM   1  64 way BFM | 4096 | 2048 | 1430 | 32 | 1 x 32 |
| Si | Area Coverage 64  64 way BFM   2  64 way BFM | 4096 | 2112 | 1452 | 4 | 2 x 2 |
| Si | Line Coverage 64  64 way BFM   1  64 way BFM | 4096 | 2080 | 1430 | 2 | 1 x 2 |

## 2.10 GALLIUM ARSENIDE BEAMFORMING DESIGN

One of the study tasks was to formulate a digital beamforming design using gallium arsenide devices, asses its performance and compare it with the silicon version. The following paragraphs summarize the results of that study.

2.10.1 Processor Design - Gallium arsenide (GaAs) material provides the potential for increased performance for any processor architecture. The increased speed is obtainable as the result of better carrier mobility in the gallium arsenide. Carrier mobility in GaAs is approximately five times better than it is in silicon (Si). However, the technology for processing GaAs material is not as advanced as it is for silicon. In particular, the ability to implement structures similar to silicon CMOS and ECL are not available for GaAs production devices at the current time. Recent advances in silicon bipolar technology now promises to provide silicon ECL devices with increased speed and reduced power. The switching speeds for the new silicon ECL devices is about 250 picoseconds. Hence if GaAs devices are to realize a 5X speed increase over silicon, for the same power dissipation, then gate delays of 50

83

picoseconds must be realized. Such speeds have been obtained in laboratory devices, but production devices are not yet capable of these speeds. However, if it is assumed that the technology will advance sufficiently to permit these speeds, then it is proper to project the performance which can be expected from a digital beamformer using GaAs technology.

First assume that gate delays of 50 ps are possible. The minimum number of gate delays for the multipliers and adders is six. Hence the minimum gate delay time is 300 picoseconds, which supports a maximum clock rate of approximately 2 GHz. However, this is the on-chip clock rate, and even this will be difficult to achieve. The technology for operating a module at such clock rates is still not practical. However, the speed may be utilized to multiplex operations so that a single chip can process several channels. If the sample rate is assumed to be 100 MHz, then perhaps 16 channels could be processed by one chip. However, if the word widths are assumed to be 12 bits, the number of pins would be prohibitive, i.e., 12 X 16 = 194 for input alone. Hence, another architecture is needed to exploit the speed obtainable with GaAs chips.

If the sample rate is assumed to be 100 MHz and the number of bits per sample is assumed to be 12, then the samples can be converted to serial form and loaded at a serial rate of 1200 MHz. However, the decomposition of the signal into QRNS format will result in a wide-word output. Hence assume that there is one decomposition chip for each I/O element pair. This means that the number input lines for each chip will be 24. Also assume that the decomposition chip performs a parallel to serial conversion operation. If eight rings are used in the far-term system to achieve 37-bit precision, then the total number of outputs is 41 real and 41 imaginary bits. This is too many to multiplex (41 X 100 MHz = 4100 MHz), even for GaAs. Hence assume that there are six 16-to-1 multiplexers to perform the parallel-to-serial conversion. This results in a serial transfer rate of 1600 MHz, which is supported by the GaAs technology, but may be difficult to accomplish for chip-to-chip transfers. However, assume for the moment that this is possible. Three of the output channels are for real values and three are for imaginary values. Hence to multiplex each processor to handle 16-channels, it will be necessary to provide 3 X 16 = 48 serial inputs. Each input must be transferred to its own serial-to-parallel converter, which is then followed by a register for holding each word for subsequent multiplication. Each input word is multiplied by the appropriate weight value (previously stored in a register), and the results added to the accumulator. After 16 clock cycles (10 ns), the accumulator contains the weighted sum of either 16 real or 16 imaginary antenna elements as a 41-bit wide word. Hence 41 pins are required for output. If the weight vectors are loaded as decomposed numbers, one ring at a time, then six pins are needed for the weight vectors. Hence a total of 48 + 6 + 41 = 97 pins

are needed for I/O. With 16 bits for address and 8 bits for control, the total pin count is 121. If power and ground account for 12 lines, then the package size is still within the size of the pin grid array packages. However, these packages will not support the GHz speeds needed for the GaAs devices. Current chip carrier packages are available for pin outs of 80 to 100. However, even these packages will not readily support speeds up to 1 GHz. Since 48 of the pins must accommodate 1.6 GHz clock rates, the package must be such as to support these frequencies. This means that the packages must have controlled-impedance I/O. Although devices which have clock frequencies in this range (e.g., shift registers and counters) exist today, the packages are rather small compared to those needed for the processor. Hence even if a GaAs processor could be implemented today with 50-picosecond gate delays and 1.6-GHz clock rates, it is not likely that it could be fully exploited because of current package limitations. However, with silicon technology now capable of supporting much higher speeds and much denser circuits, large packages which will support speeds up to at least 1 GHz will almost certainly be available for far-term applications, i.e., 5 to 10 years from now.

Assume for the moment that GaAs technology and chip packaging technology will progress to the point where 50-picosecond gate delays and clock rates of 1600 MHz are achievable. Also, assume that circuit board technology will support short runs (e.g., from one chip to an adjacent chip) at serial clock rates of 1600 MHz. Then, what type of architecture is possible to form 256-element modules which operate at 100-MHz sample rates? One possible architecture is shown in Figure 2-20.

Figure 2-20.   256-Element GaAs Processor Module

In this configuration, there is one processor chip for each of 16 antenna elements, i.e., 16 I/O channels. The A/D converters are operated at a sample rate of 100 MHz and the word widths are 12 or 13 bits. However, the A/Ds are assumed to provide a 16:1 parallel to serial multiplexer which outputs the sample at a 1600-MHz serial data rate. Hence 32 1600-MHz serial channels are required for inputs to the processor chip. The processor chip performs decomposition of the I/O inputs signals, multiplies each channel by the appropriate complex weight and accumulates the products. The output from each chip is an 82-bit QRNS format word, multiplexed as six 16-bit words at 1600 MHz. The output from up to 16 other processor chips can be summed with this output to produce a 256-element beam. After adding the 16 real and 16 imaginary values together, the result is converted back to integer arithmetic. The summing and recomposition operation is performed by one chip. The input consists of 96 1600-MHz serial input bit streams, and the output consists of a 37-bit real and a 37-bit imaginary part for a total of 170 I/O pins. (It should be noted that the output lines need only operate at 100-MHz rates.) Hence a 256-element beamformer consists of 16 processor chips and an adder/recomposition chip for a total of 17 chips. In addition, it is expected that external memory will be required for the recomposition operation. Although the multiplexed processor operation reduces the recomposition rate requirement to 100 MHz, this implies that memory access times on the order of 5 nanoseconds are required. Hence the memories will need to be GaAs to support such access times. (A possible alternative is the new silicon bipolar ECL memories.) An additional 16 memory chips may be required for the recomposition operation; however, these are small chips and will require minimum board space. Thus it is conceivable that a beamformer to combine 256 antenna elements into a single beam could be implemented in GaAs on a single module having an area of 100 square inches, i.e., one double-sided SEM-E size module. The sample rate supported would be 100 MHz and the word size (both A/D word width and the weight accuracy) would be 13 bits. The processor power dissipation for such a module is expected to be about 100 watts. The throughput of such a module would be equivalent to more than 50 billion complex operations per second or 200 billion real operations per second.

2.10.2 <u>Comparison with Silicon Design</u> - Table 2-17 shows the projected performance parameters achievable in the 1990s for Silicon and Gallium Arsenide technologies. Silicon technology is expected to be the best technology for implementing chips for beamformers through 1995 because:

a. recent advances in Si promise very high gate densities and good speed

b. GaAs requires several technology developments and possibly a "breakthrough" in gate densities

c. the large I/O requirements combined with limited speed for module implementations negate the chip speed advantages of GaAs

d. projected costs of GaAs remain high.


TABLE 2-17.  GaAs vs Si COMPARISON:
PERFORMANCE PROJECTIONS FOR THE 1990s

| PARAMETER | Si DESIGN | GaAs DESIGN |
|---|---|---|
| Gates per chip | 150K – 200K | 20K – 40K On- |
| chip clock rate | 240 MHz – 400 MHz | 1.5 GHz – 2.0 GHz |
| Relative power | SAME | SAME |
| Estimated chip costs | $500 | $3K – $5K |
| Relative size of processor | EQUAL | EQUAL |
| Development cost per chip | $50K – $100K | $500K – $700K |

# SECTION 3

## RECOMMENDED BRASSBOARD DESIGN

### 3.1 SYSTEM ARCHITECTURE

As a result of the comparative study of architectural choices for both near and far-term digital beamforming, the architecture selected for the brassboard demonstration design is a direct form implementation of the DFT beamforming method using QRNS system arithmetic. This architecture is directed toward the use of beamforming in the element space, although beamforming by the beam space method can also be achieved by suitable interconnection and control of the hardware modules. The design is comprised of 4 sets of beamforming hardware using five modules each. One control and interface module makes a total of 21 modules in the system. Each set will be capable of producing up to 8 interleaved beams when operating in a time division multiplexed mode. Thus 32 simultaneous output beams can be achieved in the demonstration system after the outputs are de-interleaved. Goals include capability of producing 32 beams with 3 MHz bandwith , or 16 beams with 6 MHz bandwith , or 8 beams with 12 MHz bandwith , or 4 beams with 24 MHz bandwith each.

The beamformer ASIC chips shall be implemented in Si CMOS gate arrays using established technology thereby reducing both risk and cost. The chips will actually be capable of supporting a 50 MHz clock rate to further enhance future system capability without redesign of the chips. However, the system modules will only be targeted toward a 25 MHz capability. The achievement of 50 MHz modules is not required for the demonstration system and would require special module construction and interconnection techniques that would adversely impact the demonstration system budget. The hardware when completed shall exceed the capability of producing output beams with a signal bandwidth of greater than 10 MHz as required by near term design goal from the statement of work.

The architecture for the beamformer demonstration system has been selected to produce a system with maximum throughput capability while maintaining a reasonable hardware complexity. There are several reasons for this choice. The far-term system goals of signal bandwidth of 25 to 50 MHz cannot be achieved without an architecture capable of supporting a clock rate of at least this order or higher. Although slower hardware may be used by distributing the processing over multiple sets of hardware the resultant complexity is prohibitive. The potential for faster

hardware in future systems through advances in Si CMOS technology or use of faster Si ECL or GaAs technology, will then present capability of even higher bandwidth or allow the multiplexing of the system hardware to reduce the hardware complexity while still achieving the bandwidth stated for the far term system goal.

Design o' the brassboard system includes several functional efforts. Foremost is the definition and partitioning of the QRNS architecture into the system chip set logic design. The logic definition and chip partitioning have been extensively studied in Phase I design effort and transfer of this design into the actual chip set design will thereby proceed smoothly during the early stages of phase II. Chip packaging shall be in pin grid arrays for the brassboard, for reasons of both cost and effective use of discrete wire circuit board technology. Socket adaptors will be required for mounting the pin grid arrays on standard circuit boards designed for the use of standard DIP chips. The use of leadless chip carriers and surface mount technology would be the preferred configuration for high density far term applications using printed wiring boards.

The beamformer system presents an unusually high input requirement due to the 128 channels of 9-bit input words. Module layout and interconnection have been designed to permit use of standard boards and connectors, although special mounting of an additional connector will be required to satisfy the module I/O requirements of the beamformer system. Multiplexing of the input lines into the system would alleviate this problem considerably. However, this alternative is not practical for the high input signal bandwidth required.

Additional functional efforts required include the system interface and control, beam weight loading, module level built-in tests, host processor interface, and design of hardware test support equipment. Details of the design efforts for each of these functional areas are presented in the remainder of Section 3 and in Appendix A.

## 3.2 SILICON BEAMFORMER SYSTEM CHIP SET LOGIC DESIGN

The digital beamformer system has been partitioned into two chip types that allow the construction of the demonstration system with a minimum cost for nonrecurring engineering effort associated with the chip production process. These chips are the input conversion chip and the beamformer processor chip. The output conversion shall not be implemented as a chip but instead will be constructed from discrete parts for the demonstration system. The processor chip will serve a dual role in the demonstration system. It will contain both the logic for beamweight application for 4 channels and an add-tree to

combine these 4 channels. As such, development of a separate add-tree chip can be avoided by providing for use of the processor chip in an add-tree only mode for the further accumulation of the required 64 input channels of both the inphase and the quadrature data.

Figure 3.2-1 illustrates the input conversion chip. This chip accepts 9-bit digital input data from both the inphase (I) and quadrature (Q) channels of an antenna element and produces the QRNS channel outputs for all 6 rings in the QRNS system. The chip is functionally subdivided into 3 sections. The two sections at the top of the figure perform conversion of the I and Q data from binary integer representation into the 6 independent rings comprising the RNS representation. These rings total 29 output lines from these two sections for each channel. In the third section at the bottom of the figure the I and Q data from each RNS ring interact and are transformed into the QRNS rings, Sum and Difference Channels. There is no interaction between different rings, but only between the I and Q channels of each ring. The last logic block in each channel performs the modulo logarithmic mapping of the channels to prepare the data for logarithmic multiplication by exponent addition in the processor chips.

The input conversion chip is pipelined such that only 6 gate delays are required between pipeline registers to allow maximum throughput to be achieved by the chip. The number of equivalent 2 input nand gates for each block are included for reference purposes in the figure, either to the immediate left or right of the blocks. The functional purpose of each block in the figure will be described next.

Each block labeled as a register is simply a parallel configuration of type D flip-flops (DFF) which are clocked by the system clock to store the intermediate results of the processing in a pipelined manner to achieve maximum throughput. Each individual DFF is implemented with an equivalent of 7, 2-input nand gates and provides both a true and an inverted sense of the stored bit at the output, for use in subsequent processing. This avoids the need for inverters when both or the opposite sense of the data bit is required in the subsequent processing.

Since the 9-bit binary input is required in the decomposition of all of the 6 RNS rings, line drivers are provided to prevent excessive delay due to high signal fanout in the MSB and LSB RESIDUE blocks. All subsequent processing is now independent for each of the 6 different RNS rings. For simplicity only one block is used in the figure to represent the processing for all o rings.

Figure 3-1.  Complex Integer to Complex QRNS Converter Chip:
8K Gates, 76 I/O

The MSB RESIDUE blocks provide a logic reduction sums of products implementation of a table lookup of the most significant four bits of the binary inputs to produce the modulo remainders for each RNS ring. Similarly, the LSB RESIDUE blocks provide the modulo remainders for the least significant five bits of the binary inputs. The MSB and LSB residues then must be combined by modulo addition to produce the RNS residues for the 9-bit binary inputs.

The blocks labeled BINARY ADDERS, MOD CARRY OUTS, MOD ADDER FIXUPS and DATA SELECTORS taken together perform the modulo addition. The BINARY ADDERS perform a fast carry lookahead addition of the residues to produce binary outputs of the same bit width as the respective rings. Any overflows from these are ignored. Instead the overflows for the respective rings are determined by the MOD CARRY OUTS whenever the modulus of that ring is exceeded in performing the binary sum. The MOD ADDER FIXUPS provide the binary addition of a constant for each ring to the BINARY ADDERS outputs in the event that an overflow of the modulus occurs. The constant required is the next higher power of 2 minus the respective modulus. The DATA SELECTORS then select the final residue outputs according to whether the MOD CARRY OUTS determined an overflow for the respective rings occurred or did not occur. At this point the decomposition of the input data into the six RNS rings has been completed. Next transformation of the RNS I and Q channels to the QRNS SUM and DIFFERENCE channels is accomplished in the bottom section of Figure 3-1.

The third section of the converter chip performs the QRNS transform of the RNS residues into other RNS residues in which the multiplication of complex numbers is performed in independent channels requiring only half the number of physical multiplications. The transform equations (Appendix A, Equations A-1 through A-5) require a sum and a difference and hence the outputs are referred to here as the QRNS SUM and QRNS DIFFERENCE channels.

The logic block labeled QRNS XFORM provides the multiplication of the input residue for each ring by a constant for that ring. This constant represents the square root of $-1$ in that ring, which is not an imaginary number for the QRNS rings and thus the product is again a residue in the respective RNS ring. The QRNS XFORM is implemented by a logic reduction sums of products table lookup of the product outputs.

The modulo sums and differences of the RNS I channel with the QRNS XFORM output are formed next. The logic blocks for the modulo sum are identical to those in the first two sections of Figure 3-1. The logic blocks for the modulo difference work similarly to those for the modulo sum. The BINARY SUBTRACTS are performed by the binary addition of the true outputs from the RNS I channel and the inverted outputs from the QRNS XFORM block.

The BINARY COMPARES determine if the magnitude of the RNS I channel or the QRNS XFORM output is larger. When the RNS I channel output is greater than or equal to the QRNS XFORM output then the output of the BINARY SUBTRACTS are selected by the DATA SELECTORS block. If not then the MOD SUBTRACT FIXUPS outputs are selected. The MOD SUBTRACT FIXUPS are formed by addition of the modulus for each ring to the outputs of the BINARY SUBTRACTS. The outputs from the two sets of DATA SELECTORS are the QRNS transformed channels.

Circuitry is also included on the converter chip to prepare the QRNS transformed channels for logarithmic multiplication which is performed by the processor chips. This is accomplished by logic reduction sums of products table lookup in the MOD LOGARITHMS blocks. These blocks determine the exponents corresponding to the input RNS residues for each of the QRNS rings. The base of the logarithm used for each ring has been selected to produce a minimum logic gate count for that particular ring.

The final outputs of the converter chips are registered on the chip so that chip-to-chip interconnection is achieved without additional allowance for logic function delay. Similarly the inputs to the processor chips are first registered before any logic functioning is performed.

Figure 3-2 illustrates the beamformer processor chip. This chip includes four multipliers as indicated by the four sections in the top half of the figure, and an add-tree to combine these four outputs into a single sum. Since the QRNS transformed channels are independent, the processor chips may combine either four of the QRNS SUM or I channels or four of the QRNS DIFFERENCE or Q channels. Not included in Figure 3-2 is the circuitry necessary to use the processor chip as an add-tree only chip. This circuitry shall allow the inputs to each of the multipliers to be registered either for multiplication or to be registered instead in the output registers of the multipliers for direct accumulation by the add-tree circuitry. This requires additional data selectors for the inputs to both sets of registers and an additional input pin on the chip to control this data selection. Alternatively this selection could also be made by fuse programmable selection circuitry allowing programming of the chip as either an add-tree or a processor chip before installation into the beamformer system. The total gate count given for the chip has included allowance for the additional gates necessary to achieve this dual purpose usage of the chip.

Figure 3-2.   RNS Four Channel Beamweight Combiner Chip:
16K Gates, 160 I/O

The add-tree section of Figure 3-2 consists of three modulo adders that are identical to the modulo adders found in the converter chip of Figure 3-1. They are interconnected to form the sum of the four outputs from the multipliers. The final output is registered as in the converter chip to provide maximum throughput operation of the beamformer system.

Each of the four multiplier sections at the top of Figure 3-2 are identical. These multipliers accept one input from off chip which is multiplied by a coefficient stored on chip in a coefficient register file. The COEFFICIENT REGISTER FILE is organized as a circulating file that provides eight different coefficients in turn to be applied to the incoming signal data. This assumes that the input data will be the same for eight consecutive clocks so that eight interleaved output beams will be produced. If the same coefficient is loaded into all eight registers in the register file then an input which changes at each clock interval will produce only one output beam with a maximum bandwidth. Thus the system is capable of either multiplexing multiple beams with reduced bandwidth signals or providing a signal output beam with bandwidth corresponding to the maximum clock rate at which the hardware will operate. Intermediate configurations are also possible. By alternating two coefficients in the register files, two interleaved beams may be produced with an input signal that changes every two clock intervals. Similarly, a set of four interleaved beams may also be produced.

Control of the coefficients is provided by the COEF.LOAD CONTROL block in Figure 3-2. This block will contain a holding register and a data selector to allow recirculation of the data in the register file or to select a new coefficient from the holding register to be entered into the register file. The holding register will allow new coefficients to be entered for each tap weight with sequential operations and then to load all of them simultaneously without loss of any output data while loading is accomplished. Control of this loading operation will be external to the chip with only a single input selector pin to determine when a new coefficient shall be passed into all of the circulating register files.

The total pin count given for the processor chip assumes that only one ring will be loaded to each tap at a time. This will require additional circuitry in the COEF. LOAD CONTROL block to address the particular ring of the holding register that is being loaded. Additionally, external circuitry will be required to split off the individual rings for loading in this manner. Alternatively, the total pin count may be raised to allow for loading all rings simultaneously for a given tap. The simplicity of operation in this manner would probably justify the additional pins, providing that the resulting chip does not significantly

impact the chip packaging NRE. A decision on this issue shall be made early in Phase II.

Other additional load control circuitry not shown in Figure 3-2 will be necessary to select which holding register of the four multipliers is being loaded. This will consist essentially of only a 2 to 4 decoder with gated outputs a d occupying only an additional 15 equivalent gates.

The multiplier cells of Figure 3-2 assume that both the input and coefficient data have been preexpressed in modulo logarithmic representation. As such, to complete the multiplication, these logarithms must be added and then the anti-logarithm of the result determined. Since the logarithm of zero does not exist, additional circuitry is provided for zero detection. The SUBRING MOD ADDERS perform the modulo addition of the logarithms. These adders are formed from subrings of the QRNS moduli after zero is removed, and consist of bit widths no wider than four. As such, they are implemented in the six gate delay maximum with unique circuitry for each subring modulus. The RING ZERO PRODUCTS force the result to zero for a particular ring if the RING ZERO DETECTS detect the encoded zero state for that ring. The MOD ANTILOGARITHMS are implemented with a logic reduction sums of products table lookup of the anti-logarithm outputs. The final outputs of each multiplier cell are the QRNS ring representations of the multiplication products.

## 3.3 CHIP PACKAGING

In the assembly of the beamformer brassboard demonstration system, packaging options for the ASIC chips are restricted by the size of the chips to either leadless chip carriers or pin grid arrays. For a demonstration system, the costs associated with use of mounting leadless chip carriers include the necessity of having special purpose modules constructed with I/O pads on the modules for contacts with the leadless chip carriers. Such modules must also include the chip interconnection wiring, which implies that printed wiring boards with leadless chip carrier I/O pads provide the only reasonable solution. This provides little flexibility for development of the demonstration system. However, such boards would be the proper choice for a final application system.

Therefore, the use of pin grid array packaging for the demonstration system is recommended. These packages come in a variety of sizes, and for most of these sizes, socket adapters are available to permit them to be mounted on standard wire wrap boards. For the converter chip, an 84-pin ceramic pin grid array should be sufficient to provide enough pins for the 76 functional I/O pins plus power and ground pins. This does not, however, leave much margin for additional test pins which may be

necessary. For the processor chip a 180-pin ceramic pin grid array is currently planned. However, if all rings of the coefficients are to be loaded simultaneously, a larger package will be necessary. Final decisions on these issues cannot be made until the ASIC chip vendor is selected and the number of power, ground, test, and control pins are firmly identified for each chip.

## 3.4  MODULE DESIGN

The breadboard system is partitioned into several module types. Each module is a composed of a 14.4-inch by 11.0-inch board based on DIN specifications. Because of the large number of I/O lines required for each module, the board must be modified by using four 96-pin DIN type connectors instead of the normal three for connection to the backplane. Additionally a fifth 96-pin connector will be available at the front of the board. The board uses a Unilayer (Augat brand name for a planar wiring technique) design that features a high-density, plated-through hole pattern on a 0.100- by 0.150-inch grid. Voltage and ground planes are individually plated and etched on each side of the double-sided board. The discrete wire layer is constructed with insulated #38 gage wire that is bonded to the board surface using a thermosetting adhesive.

Figure 3-3 illustrates the digital beamformer hardware modules. The beamforming hardware is partitioned into four sets of modules, where each set corresponds to one beamformer. A set consists of four identical processor modules and one recomposition module. The whole system is controlled by one controller module. Each set produces 8 interleaved output beams when operating in the multiplexed mode, or one output beam when operating in the full bandwidth mode.

Figure 3-3. Beamformer Hardware Modules

The block diagram of the processor module is shown in Figure 3-4. Each processor module handles 16 I and Q channels. A channel consists of 18 input lines divided equally between I and Q. The samples are initially passed through line receivers and latched into the decomposition chips. After transformation to QRNS format, the samples are passed to the processor chips where they are multiplied by the beam tap weights. The beam tap weights are loaded into the processor chips through 18 data input lines and five tap select lines. A tap select decoder block routes the tap weights to the appropriate processor chip.

Finally, the output is passed to the add chips. The rest of the module consists of the distribution of the system clock and the interface to the controller bus. Because of the large number of chips requiring the system clock, the clock input is buffered to provide the necessary fan-out capability. The controller interface consists of control/status registers and bidirectional buffers.

An example layout of the processor module is shown in Figure 3-5. Because the board uses a 0.1-inch by 0.15-inch grid pattern, special adapters are used to mount the pin grid components. Regular DIPs are placed directly on the panel. The components are arranged such that the input beam samples enter the panel through connectors P1, P2, and P3, and the module output is passed thought connector P4. Connector P5 is reserved for the controller bus interface.

Figure 3-4. Processor Module Block Diagram

EP 0 480 737 A2

Figure 3-5. Brassboard Processor Module

102

The block diagram of the recomposition module is given in Figure 3-6. The module takes the output of the four processor modules and feeds them into two final Add chips. The result is then transformed back to normal arithmetic by a table lookup algorithm. The table is made up of a number of PROMs of various sizes. To maintain the pipelining of the system, registered PROMs are used where possible. After unregistered PROMs, and at various intermediate points, discrete registers are used. The rest of the module is identical to the processor module. The system clock is buffered onto the module, and a controller bus interface is implemented using registers and bidirectional buffers. An example layout of the recomposition module is given in Figure 3-7.

Figure 3-6. Recomposition Module Block Diagram

Figure 3-7. Brassboard Recomposition Module

The controller module initializes and monitors the system. The block diagram is given in Figure 3-8. The proposed controller for the beamformer system is a TMS320C25 microprocessor having 16K words of program memory and 16K words of data memory.

The TMS320C25 has access to several interfaces. The first interface is a RS232-C serial port implemented with a UART and line drivers and line receivers. This interface allows an external monitor or personal computer (PC) to display system status and provides a secondary host interface. The second interface is the controller bus interface that connects with the processor modules and the recomposition module. This is a general purpose bus containing 16 address lines, 16 data lines, and several control lines. Initialization commands, BIT commands, status words, and sample data allow the TMS320C25 to control and monitor the system. The third interface is the host interface. The host is assumed to be a VAX minicomputer with a DR11-W Direct Memory Interface Module. Messages and data are exchanged between the VAX and the TMS320C25 through the use of a Dual-Ported RAM and a standard software protocol.

The TMS320C25 also controls the loading of the beamformer tap weights into the processor modules. If the tap weights are received from the VAX, the TMS320C25 funnels the data to the tap weight storage memory which is implemented with Dual-Ported RAM. If the tap weights are received from a beamcontroller, the TMS320C25 switches the multiplexer so that the beamcontroller has access to the weight storage memory. The actual loading of the weights into the processor modules is performed by a discrete controller/sequencer circuit. The controller/sequencer generates addresses for the weight storage memory and control signals that facilitates the routing of the weights to the appropriate processor chip. Note that an additional path is present that allows the beamcontroller to bypass the tap weight storage memory and directly load the weights into the processor chips. An example layout of the controller module is shown in Figure 3-9.

Figure 3-8. Controller Module Block Diagram

Figure 3-9.  Brassboard Controller Module

## 3.5 SYSTEM INTERFACE AND CONTROL

The beamformer subsystem will be mounted in a standard aluminum card cage that conforms to the DIN 41494 specification. The backplane is loaded with 96-pin, press-fit, DIN connectors for each module. Each connector has 3-level wire-wrap tail pins for intermodule connection. Once all the modules are seated in the card cage, an external ribbon cable connects all the modules through the 96-pin connector at the front of each module.

The card cage will be installed in a standard 19-inch rack. The 64 I and Q channel input lines and the beamformer output lines are routed from the backplane to front panel connectors. The serial RS232-C interface and the parallel host interface of the controller module are likewise routed to the front panel.

The system may be controlled in three ways. The first alternative is by a personal computer (PC) via the serial port. Commands and simulated tap weight data may be downloaded to the controller module. The controller module then fans out the data to the appropriate modules. The second alternative is control of the system by the Host. In this case, commands and data are transferred to the controller module through the VAX DR11-W Interface Module. The final alternative is a hardware only operation. The controller module places the system in a mode where it operates at full speed without host intervention.

## 3.6 BUILT-IN TEST

The built-in test (BIT) for the brassboard will attempt to isolate faults to at least major sub-blocks at the module level. The controller module has the responsibility to test its program and data memory, serial and parallel interfaces, and the tap weight memory storage block. The processor modules are tested by sending a command to each of the decomposition chips on the module to output a particular embedded test vector. Simulated tap weights are then loaded into the processor chips. After combining the processor chip outputs with the add chips, the final output sample is read back by the controller. The result is compared with the correct value to determine if a fault is present. If a fault occurs, the sample value can be used to determine which of the decomposition-processor-add chip combination is not functioning correctly. If the result is correct, the recomposition module is enabled. As with the processor module, the result of the recomposition module is compared with the correct result. If a fault is present, the output result is used to determine sub-block faults.

## 3.7 VAX INTERFACE

The VAX interface is implemented through a DR11-W Direct Memory Interface Module. This module plugs into the VAX BUS and an external cable connects it to the front panel of the brassboard rack. Software on the VAX makes use of the DR11-W interface driver (XADRIVER) to communicate with the brassboard.

## 3.8 HARDWARE TESTS

To test the brassboard system, it is necessary to provide a simulated digital element input signal. This can be done by generating a set of I/Q data words for each element to represent a particular source location. This requires 64 I and 64 Q data words for each spatial point to be simulated. These data words will be generated by the VAX and transferred to a separate test box. The block diagram of this test box is given in Figure 3-10.

The VAX interface is another DR11-W module. The simulated data samples are downloaded to a storage memory made up of 64 8K x 9 RAMs. After all samples are stored, the VAX passes control to the output controller. The output controller is essentially a sequencer/state machine that cycles through the memory and generates the appropriate control signals to load the contents into the beamformer in parallel.

Figure 3-10. System Test Box Block Diagram

## SECTION 4

## BRASSBOARD DEVELOPMENT

The brassboard development can be divided into three tasks. The first task is the development of the chip types given in Section 3.2. The second task is the development of the six module types and the overall system design as outlined in paragraphs 3.4 and 3.5. The third task is the development of the software to run the brassboard. Although the three tasks are listed separately, they are all interdependent.

## 4.1 CHIP DEVELOPMENT

The initial step in the development of the required chips is the finalization of the architecture. A RFQ will then be generated and distributed to the various ASIC chip vendors. From the received quotes, a final vendor selection will be made based on criteria given in paragraph 2.7.

Once the vendor is selected, the chip design will be entered into a workstation (e.g., Daisy workstation) using the vendor's logic library. Extensive logic simulations and timing analysis will be performed using previously generated test vectors. After verification, the design will then be released to the vendor. Chip development subtasks include:

- Finalize architecture

- Generate RFQ

- Select vendor

- Enter design on workstation

- Optimize and test design

- Verification and release of design to manufacture.

## 4.2 MODULE DEVELOPMENT

A baseline design for each of the module types was given in paragraph 3.4. However, the detailed design is dependent on the

finalized ASIC chip architecture and chip packaging. This is especially true of the processor module and recomposition modules. The controller module, on the other hand, is essentially a general purpose microprocessor board and its design should be straightforward. A design review of all the modules will be held to ensure that the system requirements are satisfied. The majority of the components will be ordered after the design is finalized. However, long-lead items will be ordered as soon as they are identified.

Although the physical dimensions of the selected board is standard, a customized board will be developed because of the number of I/O connectors required. A board layout and wiring node list will be generated and released to the board vendor. Depending on the pin count of the selected ASIC chip package, a customized pin grid array adapter may also have to be developed. The board vendor currently supports a maximum of 132 pins for its UNILAYER PGA adapters.

The beamformer modules will be housed in a suitable card cage and rack. An interconnect list will be generated and sent to the board vendor for the wire-wrapping of the backplane. Initially, one set of beamformer modules will be made using standard wire-wrapping techniques. The boards will be tested and any design errors corrected. After the wiring list has been updated, the deliverable modules will be made using the UNILAYER wiring technique.

Concurrent with the chip and board manufacture, the physical setup of the system will be assembled. This subtask includes the modification of the 19-inch rack (if any), assembly of the front panel, mounting of power supplies, mounting of fans, and the manufacture of connectors and wiring harnesses. Module development subtasks include:

- Finalize system definition

- Manufacture of custom board and PGA adapter

- Design modules

- Generate board and backplane wirelists

- Order wire-wrap boards

- Order parts

- Complete ra k assembly

- Assemble modules

- Test wire-wrap boards

- Update wirelist

- Order unilayer boards


## 4.3 SOFTWARE DEVELOPMENT

In general, the software development will consist of a planning phase, a requirement definition phase, a design phase, a code and unit test phase, an integration phase, and finally a system test phase. After each phase, a review is conducted to keep the development on the correct path. This cycle is repeated for the three programmable devices in the beamformer system (VAX, TMS320C25 microprocessor, and PC).

The major software blocks required for the VAX are:

- Generation of steering vectors

- Calibration of steering vectors

- Generation of simulated antenna samples

- Adaptive algorithm simulation

- Beamformer output analysis

- Brassboard interface

- System test and control.

The major sofware blocks required for the TMS320C25 microprocessor are:

- Module initialization

- BIT

- VAX interface

- External monitor(PC) interface

- Beam weight loading.

A personal computer provides an alternative to the VAX for system test and control. It will be used extensively in the hardware/ software integration phase because of its convenience and availability for lab use. In the final system, it will provide a secondary method for monitoring the system.

The major software blocks required for the PC are:

- Brassboard interface

- System test and control

- Downloading of simulated data.

## 4.4 TEST PLAN

4.4.1 Built-In-Test (BIT) - Both chip development and module development for the beamformer brassboard design have included consideration of the need for hardware testability and fault isolation. The control processor for BIT will be the TMS320C25 microprocessor located on the brassboard control module. When the beamformer system is supplying interleaved output beams in the multiplexed mode the capability to use one or more of the interleaved output slots to perform on-line BIT could be added to the system control software in applications systems in which multiplexed hardware operation is the normal mode. However, for the brassboard system BIT will be an off-line system function.

Fault isolation capability is planned to allow BIT to isolate faults to individual modules and within data paths on that module. The system test box will be used to supply known inputs to the beamformer modules. Loading of known beamforming weights can be tested against the known input patterns.

Interface access to the the output data from any processor module or recomposition module will be supplied to the control processor to complete the test paths. Analysis will be completed by comparing test data with expected results and recording any discrepencies. Combinations of test results in some cases may allow isolation of faults to the chip level.

The large input and output pin requirements for the beamformer system do not allow the inclusion of many pins dedicated to test purposes, on either the modules or the chips. However, the parallel structure of the QRNS architecture allows data path isolation to the small QRNS ring word widths in the testing of the hardware. The system test box when loaded with known patterns can stimulate portions of the hardware with non-zero test patterns while holding all other inputs to zero. This

greatly reduces the number of required test patterns, and therefore allows a better covering of possible fault conditions.

BIT will also include the verification of system control and interface functions. System initialization will normally execute BIT on power up, or system interrupt control will execute BIT upon request from the Vax host processor.

4.4.2 Chip Tests - Chip test functional verification can either be done by the chip manufacturer prior to delivery of the chips, or by TI upon receipt of the chips, or both, depending on Phase II beamformer program requirements and chip manufacturer procedures. The need for building a chip test "burn-in" board could be avoided since MIL-STD screening will not be required. However, the convenience of such a test board for both chip acceptance from the manufacturer and for fault isolation testing after system installation will speed both development and maintenance procedures.

The chip functional tests will include the verification of control of the chip and the examination for correct outputs in response to known test vector conditions. The test vectors for the QRNS component blocks have been developed along with their design during Phase I and only need be translated to the appropriate format during the design entry process to the chip manufacturer. Test vectors for chip control and QRNS component interconnection will be developed during the design entry process.

Verification of maximum on chip clock speed capability will not be readily achieved in the brassboard system and may have to be supplied by the chip manufacturer.

4.4.3 Module Tests - Module tests include two board types. First wirewrap boards will be used to test the module layout and interconnection wiring. An automatic wiring machine will prepare the wirewrap boards for each of the three module types. A wire-wrap list drives the machine. As the first chips become available from the chip manufacturer the module and its parts will be assembled for testing by laboratory test equipment. This will involve the trouble shooting of the wiring list to correct any errors or deficiencies.

The functionality of interface and communications between the modules will be tested. Control module testing of the TMS320C25 processor will be performed. Limited software testing will verify control of the hardware. Any resulting corrections will be applied by altering the wirewrap boards and a verified wirewrap list will then be created, for each module type.

The verified wirewrap lists will be used for the wiring of the UNILAYER type boards. These boards will increase the system reliability as well as reduce the system volume. Again a laboratory test setup will be used to reverify the application of the wirewrap lists to the UNILAYER boards.

The final aspect of module stand alone testing will be evaluation of the performance clock rate capability of the individual modules. The laboratory test setup will be extended to include this evaluation.

4.4.4 Test and Verification Software - Software for analyzing the brassboard outputs will be developed for the host VAX computer. This software (described in paragraph 4.3) will load the system test box with simulated input signals for each of the 64 I and 64 Q antenna channels, and control or simulate the adaptive weight update process. Beamformer output analysis software will be developed and tested on the VAX for the purpose of brassboard system performance verification by the VAX.

4.4.5 Processor Performance Verification Tests Using Vax - Test scenarios will be generated for performance testing of the various functions of dispersion correction, beam scanning and adaptive pattern nulling. These scenarios will be applied to the brassboard input channels through the system test box. Output beams will be captured for performance evaluation and passed to the VAX through the system interface bus for analysis.

Verification of the ability to generate 4 output beams using a 12.5-MHz sample rate for the input signals will be tested. The maximum sample rate capability of the brassboard system will be ascertained. The capability to update a given weight vector within 10 microseconds will be verified.

4.4.6 Acceptance Tests - A suitable set of test scenarios will be generated to fulfill the requirements of acceptance testing. An acceptance test procedure will be agreed on. After the brassboard installation and checkout the acceptance tests will be performed. These tests will provide for the demonstration of the various functions of antenna control as mentioned above. Successful completion of the tests will require the demonstration of 10.0 MHz bandwidth capability for four independent simultaneous beams and adaptive weight update capability of less than 10 microseconds. Demonstration of beam scanning and adaptive pattern nulling with this weight update rate will be performed with the use of signal inputs from the system test box and with weight update inputs from the weight memory buffer provided on the control module.

## 4.5 DEVELOPMENT SCHEDULE

Figure 4-1 shows the development schedule for the Phase II Beamformer Program brassboard demonstration system. In order to meet the scheduling requirements several tasks will need to proceed in parallel at various points in the program effort as indicated in the figure. This results in some risk in meeting the schedule but sufficient allowance for some delay is present. In particular, acquisition of a sufficient chips to populate a module in order to perform the wirewrap module layout testing will be done as rapidly as possible. Procurement of the full set of chips needed for the brassboard system, however, will follow at a much slower pace while other module and software development tasks are proceeding at full pace. System assembly and test will be accomplished along with software/hardware integration and tests.

Delivery and installation of the hardware will be followed by delivery of the final report concluding the program effort.

117

Figure 4-1.    Program Schedule

# SECTION 5

## CONCLUSIONS

All of the objectives for Phase I have been achieved. A breadboard design was defined, based on the near-term requirements and silicon technology. The DFT approach was selected, and element space nulling was preferred for the near-term implementations using the DFT approach. The processor architecture selected is based on integer arithmetic using the Quadratic Residue Number System (QRNS) for the computations. Two chip designs were defined to meet the processor requirements for the brassboard. Seven ASIC vendors were contacted to provide quotes for chip fabrication. At least four possible sources have been identified. Chip development costs were verified, and performance estimates from the various vendors were consistently much better than the minimum requirements. (Some estimates exceed minimum requirements by a factor of five.) A brassboard processor was designed based on the chips defined for the brassboard. A design plan was completed for Phase II. No major problems which might impact the successful outcome of Phase II were identified.

The recommendation is to proceed with Phase II. The brassboard will include provisions for multiplexing the beamformer hardware so that 32 beams can be formed when the input sample rate is less than 2 MHz. Four beams will be demonstrated for a clock rate of 12.5 MHz. A goal for the brassboard chips is to achieve an on-chip clock speed of 50 MHz while the goal for the brassboard system is to demonstrate clock rates of 25 MHz. The probability for achieving a practical digital beamformer which meets the near-term goals is very high. Phase II objectives should be achieved with minimum risk.

## APPENDIX A

## QRNS COMPONENT DESIGN AND MODELING

### A.1 INTRODUCTION

This appendix summarizes the development of the logical gate structure implementation of the digital beamformer QRNS components. The baseline QRNS arithmetic system includes six modulo arithmetic rings. The far-term QRNS system includes eight modulo arithmetic rings. For each of the rings, components required include: RNS converters, QRNS transforms, mod multipliers, mod adders, and inverse QRNS transforms. A final component performs binary recomposition of the RNS residues for the output beams.

Development of near optimal gate structures for the QRNS components has been accomplished by first developing and tailoring the methods of logic design and modeling to the particular needs of the implementing the QRNS components. This methodology has been applied to develop the logic gate structures for the mod multipliers and mod adders. Logic model verification of these components has also been accomplished.

### A.2 METHODOLOGY

Three basic methodology developments have been accomplished. The first is a technique for multiple output logic reduction providing an improvement in reduction of approximately 15 percent for most cases compared to results achieved with individual output logic reduction techniques normally used in developing programmable cell structures such as used in programmable array logic (PAL) chip technology. The second is a technique for the realization of fast carry modulo arithmetic adders. The third is a multi-pipeline technique allowing pipelining within operations as well as between operations to double system throughput capability at only the cost of the additional gates necessary for the extra pipeline registers.

The QRNS beamformer baseline design accomplishes modulo multiplication by the technique of logarithmic mapping of the multiplier QRNS inputs, modulo addition of the logarithms and zero detection within each ring, and antilogarithmic mapping of the result to produce the multiplication output. These mappings have been accomplished by sums of products logic reduction by the first technique of the above paragraph. The converter and transform components also require use of the logic reduction

120

mapping technique. Factorization of the implicants derived from the logic reduction methodology can permit some further reduction of the gates required. This factorization has not yet been applied to the modulo logarithmic tables implicants, but has been applied to all other logic reduction outputs. Application to the modulo logarithm tables will be accomplished early in Phase II.

The design of fast carry modulo arithmetic adders for the QRNS baseline rings as well as for rings of modulus 53 and 61 for far-term system requirements have been completed by the use of the second methodology technique mentioned above. These adders may be pipelined within the operation itself as well as between operations producing a double pipelined implementation with only six gate delays in the worst case path. Similarly, modulo subtractors needed in the transform components have also been developed. This mid-operation pipelining may also be applied to the modulo multipliers as well. Pipeline stages may be employed between the logarithm mappings, the modulo subring additions, and antilogarithm mappings to produce triple pipelined multipliers also with only six gate delays in the worst case path. Similarly, the converter and transform components may be pipelined between mappings, and within their modulo additions and subtractions to the same six gate delay level.

The binary recomposition component still presents a challenge to achieve the same pipeline delay performance. Methodology to accomplish this implementation has not yet been developed. Multiplexing of the output streams into two recomposition sections may be necessary to maintain the six gate delay level of throughput performance achievable in the rest of the QRNS system. Since a recomposition chip is not being developed in this program effort, further effort toward optimizing gate structure to be employed in chip implementation has not been made.

The residue class core function of Akushskii, Burcev, and Pak presents another alternative that may enable development of an efficient recomposition component with minimum gate delay level capability. This function permits scaling, magnitude, parity, and sign detection calculations to be performed within the residue rings of the RNS system and one additional ring, that of the residue class core function. Calculations involving each ring of the RNS are performed within the modulus of the core function to produce a core characteristic of an input RNS value. Further modulo arithmetic operations involving both the RNS rings and core ring on one or a pair of RNS numbers can accomplish the operations noted above.

For recomposition component development one approach would be to use scaling methods based on the core function to first scale the output stream to a new RNS system value just encompassing the reduced dynamic range of the output stream that

EP 0 480 737 A2

is actually required for further processing. For example, a system with 46-dB dynamic processing range for near/far signal reception and 50-dB null depth capability against the far signal would need 96-dB total dynamic range and require 16 bits for the output signal word width. This could be covered by only three rings of the RNS system and thus rescaling would need only be applied to those three rings and output conversion based upon table lookup using a 256K by 16-bit word memory would produce the final output. The rescaling process and a logic reduction implementation of the table lookup could well be accomplished with a single ASIC chip. This analysis, however, is not part of the scope of the Digital Beamformer Program demonstration development since an off-the-shelf parts implementation of the recomposition function is planned for demonstration to defray further custom chip development expenses.

A.2.1 <u>Multiple Output Logic Reduction Methodology</u> - As previously mentioned, several components of the baseline beamformer system design require 2-level or sums-of-products logic reduction. The problem is usually stated in terms of an input logic table and a corresponding output table. The variables expressed by these tables correspond to the address and data lines of memory chips in a memory table lookup implementation. The memory lookup method uses the so called minterm implicants consisting of all combinations of the variables from the input logic table. For each minterm address all outputs are retrieved as the corresponding data values for that address. Logic reduction reduces the number of minterm addresses which must be implemented by examining the set of all implicants composed of true or inverted values of one or more of the input logic table variables.

For an n input table there are 2n minterms and 3n possible implicants. From the set of 3n possible implicants there exists, in general, several subsets of these implicants which cover all of the true values of the outputs present in the output logic table. The total subsets possible from a set of 3n possible implicants is staggering even for small n. However, only the subsets of the set of implicants which cover the outputs required need be examined to find the minimum possible solution. Still, when four to six inputs and outputs are involved the set of implicants contains many possible subsets. Logic reduction algorithms such as the Quine-McCluskey method simplify the problem considerably for single output logic reduction by deriving a set of prime implicants from the minterm set by nearest neighbor comparisons. This set of prime implicants may contain more than the necessary number of implicants to cover the output but will have eliminated all implicants which are also covered by any individual implicant from the set of prime implicants. Following the restriction of the implicants to only the prime implicants by the Quine-McCluskey method, next the

122

minimum covering subset from the prime implicant set is desired to be found.

No general method short of an exhaustive search for finding this subset is known. The problem is again simplified by identifying some of the prime implicants as essential in that they must be included in the output implicant set since no other implicant covers at least one output that is covered by the prime implicant in question. Finally, from the set of remaining nonessential prime implicants, an examination of subsets of these implicants is made to select enough further implicants to cover the output. The nonessential prime implicants may be grouped into several cyclic tables from each of which at least two prime implicants must be included in the final output covering. The cyclic groupings may be examined by arbitrarily picking an implicant and then reexamining all other nonessential prime implicants to see if inclusion of the arbitrary selection covers any remaining nonessential prime implicants. If so then they may be eliminated, and the further reduced set is reexamined for essential terms given the arbitrary selection. This process is repeated until a full covering is achieved. Cost criteria rules may be devised for governing the arbitrary selection process. Still a minimum optimization cannot be guaranteed in the general problem unless all possible branches of the arbitrary selection tree are examined.

For multiple output reduction the situation is significantly worse. Prime implicants now include all prime implicants from each individual output and also some new prime implicants for the multiple output problem that are not prime implicants of any of the individual outputs. These additional multiple output prime implicants arise because an implicant necessary for one individual output may be covered by an implicant containing an additional input variable. If this same implicant also arises in the same manner for another individual output except with a different additional input variable then the new implicant replaces two individual reduction implicants. An extended Quine—McCluskey method can be used to find the full set of prime implicants for the multiple output case. A description of the multiple output case is best first preceded by the individual output case.

In the individual output reduction case prime implicants are generated with respect to the combinations in the input table for which the output is true. These prime implicants express the sums of products logic implementation form. Conversely the prime implicants may also be generated with respect to the combinations in the input table for which the output is false. These prime implicants express the products of sums logic implementation form. The sums of products form is preferable for CMOS ASIC implementation, since it is expressable as NAND—NAND two-level logic and NAND gates have better delay properties than do nor

123

gates for CMOS ASIC gates. The products of sums implicants express the NOR-NOR two-level logic form. Either set of implicants, however, can be used with the nand-nand logic implementation. The sums of products form produces the true, logic one, value of the output, while the product of sums form produces the false, logic zero, value of the output.

In the multiple output case an analogous situation occurs. For multiple output reduction prime implicants are generated for each possible output combination except zero. For individual reduction there is only one such output combination that being when the individual output is true. This generalizes to all non-zero output combinations for multiple output reduction. There are $2n - 1$ non-zero output combinations for which prime implicants must be generated. This set of prime implicants is then the set in which the minimal logic implementation subset must be contained. However, this set of implicants can approach the upper limit of all possible $3n$ implicants from the input table if the number of outputs needed is relatively large. With the number of outputs equal to the number of inputs the complexity of the multiple output problem grows by over a magnitude with respect to performing the reduction of each output individually. Additionally, another order of magnitude in complexity is added to the multiple output problem by the consideration of the output "sense" combination. Again this is an analogous situation to the individual output reduction problem. There the "true" output "sense" produced those implicants which defined the true output as a sums of products NAND-NAND implementation, and the "false" output "sense" produced those implicants which defined the inverted output when the products of sums implicants are implemented with a NAND-NAND form. Now with multiple outputs each output can be considered in either true or inverted form. Any particular input minterm can be excluded from the prime implicant generation by taking the output combination "sense" choice that corresponds to that minterm. In other words every one of the $2n$ output combination sense choices produces another multiple output reduction problem that eliminates a different minterm from the prime implicant generation process. All implicants may be generated by the NAND-NAND gate form and the final outputs are either the true or inverted values of the output depending on the output combination sense choice that was used to produce the prime implicants from the $2n - 1$ non-zero possible output combinations.

The above discussion of the multiple output logic reduction problem was necessary in order to understand the methodology used to generate multiple output logic reductions for the logic mappings required in the digital beamformer QRNS design. The methodology really just consists of a compromise between the vastly superior run time needed to perform individual logic reductions compared to multiple output reductions. This compromise improves the multiple output reduction performance in

two ways by basing the multiple cases upon prior determination of the minimal individual output reductions performed for both true and false senses of the individual outputs.

An existing program for multiple output logic reduction by the extended Quine-McCluskey method war used for all of the logic reductions. The methodology consists of first using the program with each output singly in both true and inverted form. For a six input table this requires only about a minute of TI business pro run time for each individual output. From the listing of the individual output implicants a gate count for all choices of true and inverted outputs may be calculated. These choices producing the lowest gate totals for all outputs combined can then be used as the multiple output combina ion output "sense" choices to be examined in multiple output runs. A single multiple output "sense" choice for a six input and six output logic reduction takes on the order of three hours of TI business pro run time. Thus the process of limiting the output sense combinations to be examined is essential. Discussions of considering all output sense combinations in the multiple output reduction were not found in any literature examined in this study effort. The "hest" output combination sense choice can sometimes produce up to a 20-percent improvement over that attained by arbitrary selection of the "zero" output combination sense.

This limitation of the output sense combinations considered is one compromise obtained by first examining the individual reductions. This procedure can greatly reduce the choices considered from 2n output combination sense choices to only a few candidates to be considered for multiple output reduction. However, the second compromise of the methodology is the more important. As was discussed above when large numbers of possible prime implicants are available as is the case with multiple output reductions, situations in which many nonessential prime implicants from cyclic subsets arise. Resolution of these cyclic subsets of implicants requires the selection of many arbitrary implicants in generating a covering from the prime implicant set.

The examination of many branches of arbitrary choices may be necessary to find an implicant set that performs only as well as the individually derived implicants. This fact suggests the second compromise. The implicants produced from the individual reductions are saved and when arbitrary selection is required in the multiple output reduction problem at least that arbitrary selection may pick an implicant needed by one of the individual outputs. This method thus examines only arbitrary selection trees which will produce at least as good a result as the individual reductions. This technique was found to be essential in the avoidance of many poor arbitrary selections made when performing the multiple output logic reduction in an unconstrained manner.

The two-level NAND-NAND gate arrangement specified by the logic reduction methods above, cannot actually be implemented in two gate delays except when the largest nand gate required has at most four inputs. With four input systems this is usually the case, but for five and six input systems there are often gates with more than four inputs in each of the two NAND-NAND levels. For available CMOS ASIC implementation four input fan-in is the standard single gate maximum. An eight-input NAND gate must then be realized by the logical OR of two NAND gates each with four inputs. The OR must be implemented as a NOR followed by an invert. Thus the total levels of logic becomes three for a single eight-input NAND gate. The performance delay, however, is closer to that of two typical gate delays when implemented with the three gate structure composed in close proximity to each other. This can be attained by the use of a gate macro structure in the CAD layout specification in the ASIC implementation. Thus the two-level NAND-NAND logic reduction gate structure for the typical component used in the digital beamformer baseline design will have a performance of four nominal gate delays.

A final note of application to the implementation of the NAND-NAND reduction structure is that of factorization. Dependent upon the implicants of any reduction there exits a factorization of those implicants which will minimize the gates required in the implementation structure. This factorization may require many more levels of delay for implementation. However, control of exactly how much factoring is performed allows the designer to control the number of gate delay levels used in the structure, to match the level of performance to that of other components of the system. As an example a NAND-NAND logic representation for an adder can also be factored into the ripple carry add structure thereby using far less gates but at the expense of considerably more delay. Conversely, the ripple carry add structure may be expanded through Boolean algebraic multiplication to produce a two level NAND-NAND structure. The particular NAND-NAND structure produced depends upon the output combination sense used. Control of the factorization can produce a structure with delay and gate count between the extremes of the two structures and that may be more favorable in terms of overall throughput per gate used in the implementation. Thus the logic reduction NAND-NAND structures serve as a beginning point for further architectural optimization through possible advantageous factorizations of the implicants. For some system situations further advantageous factorizations may not be possible in which case the NAND-NAND structure is the optimum overall throughput per gate structure possible for that system situation.

A.2.2 Module Adder Development Methodology - The exploration of structural implementation possibilities for the efficient implementation of module arithmetic produces many possible options. One such option is the representation format of the numbers by the bits in each word. Normal binary

representation may not be the best choice. Indeed, for mod 5, an implementation using deficit one notation, in which each number is represented by one less than its normal binary equivalent and zero is represented by binary 100, does yield an implementation that is more efficient for both multiplication and addition. Some time has been spent analyzing alternate bit representations for other moduli as well. However, the lack of a systematic procedure to explore those possibilities doomed this path to failure. The ideal would be to achieve the best representations of the operands within the overall optimization problem of performing both multiplication and addition with a minimal adjustment of representation between the requirements for the two different operations.

The ideal mentioned above does motivate the structure proposed for the digital beamformer QRNS implementation. The multiplier and adder are both accomplished by data representations conducive to efficient adder implementations, and the adjustment between representations is the modulo logarithmic function which is implemented by logic reduction table lookup. It may be surmised that this does produce the optimum data representation scheme for the system, but it is known that for a small dynamic range RNS system using only certain 4-bit wide or less moduli that direct implementation of the multiplications instead of logarithmic representation produces the more optimal implementation.

However, for a larger dynamic range system as required for the digital beamformer the QRNS logarithmic multiplication appears to produce the best implementation choice. This is partly because this scheme presents an efficient method for pipelining within the multiplications both before and after each table lookup for the logarithm and antilogarithm. The multiplications are thus produced after three pipeline delays and can achieve the throughput of the worst pipeline section. As highlighted above the table, lookups can be achieved in four delays, although factorization to greater delay may improve their efficiency. The modulo additions performed between the logarithmic operations are not in the modulus of the multiplication but, instead, in a modulus one less than the modulus of the multiplication. These are thus composite numbers allowing further factorization into RNS subrings for the implementation of these adders. A zero detect is necessary to complete the multiplication. For the moduli of the baseline QRNS beamformer system the subrings required are all small moduli and, thus, can be implemented with a smaller number of gate delays required in the worst case path. The moduli required for the baseline subrings are 3, 4, 5, 7, 8, 9, and 16, all of which can be implemented with worst case gate delay paths of six or less gate delays. The larger moduli of 17, 29, 37, and 41 cannot be efficiently implemented in only six gate delays. However, a 12-gate delay implementation for these adders, which can be

pipelined to six gate delays in mid-operation, presents an implementation for the QRNS adders that matches the capability of the QRNS pipelined multipliers.

Thus, two types of modulo adder arithmetic architecture are presented. One allows for only six gate delays in the smaller subring moduli, while the other allows for 12 gate delays, double pipelined to six, for the QRNS addition moduli. The methodology for the moduli 4, 8, and 16, simply, is to implement them with standard binary adders, using fast carry only to the extent necessary to minimize the delay path to six gate delays, and is needed only for one carry bit in mod 16. Mod 3 presents no problems, being achievable with only three gate delays. For mod 5 and mod 7, efficient seven-gate delay implementations were devised before the six-gate delay double-pipelined idea was developed. These can be improved to six delays by logic reduction and subsequent factorization, if by no other method. Mod 9 can be achieved as a ripple carry of two mod 3 sections, since 9 is the square of 3. Since mod 3 is achieved with three gate delays, the mod 9 implementation using the ripple of two mod 3 sections take six gate delays. For far-term systems also incorporating moduli 53 and 61 into the QRNS system, additional subring moduli of 13 and 15 are needed. The use of 15 can be avoided by factoring it into subrings 3 and 5, however, at the expense of increasing the total bit width. The use of subring mod 13 cannot be avoided if mod 53 is included in the QRNS system. Efficient single-pipeline six-gate delay implementations for either mod 13 or mod 15 adders have not yet been explored. Again, logic reduction followed by subsequent factoring will permit the result of six gate delays to be achieved, but this method may not produce a very efficient implementation.

The use of logic reduction and factorization can also be applied to the implementation of the larger QRNS adders, but this has not been found to be. a satisfactory method. A variation on this method was devised. First, form all NAND and NOR gate combinations of the corresponding input bit positions. Then, apply logic reduction to find the fast carry implicants from combinations of the NAND and NOR gates and their inverted values, the AND and OR gates. This method presents large logic reductions to be performed and a more direct procedure was desired. The development of this direct procedure has been achieved, and used to produce the fast carry mod overflow detect implementations used in the six-delay double-pipeline mod adders.

This method is based upon defining partitions of the size of the bit width of the modulus that are weighted by one of three values. These values are $0 \cdot 2n$, $1 \cdot 2n$ and $2 \cdot 2n$ where n is the bit position starting with $n=0$ for the least significant bit. The generation of the adder carry implicants is achieved by generating the partition sum associated with each combination of the weights, then selecting those combinations that produce the

carry implicants, and then decoding the bit position weights to identify the carry implicant associated with the selected combination. The selection and decoding process is outlined below. Using these three weights for each bit position allows the generation of all of the possible 3n combinations of implicants having either a NAND gate or a NOR gate or no gate at the corresponding bit positions of the inputs to the adder. Or, alternatively, the 3n combinations may be decoded as either an AND gate or an OR gate or no gate at the corresponding bit positions. Thus, two types of implicants may be tested. General implicants consisting of mixtures of NANDs, ANDs, NORs, ORs or no gates are not considered by the method.

A partition is selected as being needed for the generation of an essential implicant for the nth carry bit position, if the weights used for that partition are just sufficient to cause it to either just exceed or just fall short of certain test values for that bit position. Just exceed (fall short) means that, by reducing (increasing) the value of the weight at any bit position, the partition sum is then less than (greater than) the test value. The test values are a function of the bit position of the carry and of the modulus and, also, the next greater power of 2 of each. The method can generate either the noninverted or inverted form of the carry bits. Neither is preferable in the subsequent implementation of the rest of the mod adder circuitry and, hence, the more optimal should be chosen.

The implicants produced by this method have been tested for both nonredundancy and correct production of the carry bits and have passed in all cases. These implicants are believed to be the optimal NAND-NAND implicants for two-level generation of the fast carries for any modulo adder. Indeed, when the modulus is a power of 2 mod adder is just a binary adder of bit width equal to the bit width of the modulus. The same implicants that are typically used in standard parts for fast binary carry adders are produced by the method in this case. This lends a high level of confidence to the optimal production of the other modulo carry bits as well.

In the partition selection and implicant decoding process, first consider generation of the most significant carry out of the mod adder. The most significant carry out indicates that the sum of the inputs to the adders exceeds the modulus and that wraparound fixup addition is necessary to produce the correct output for the modulo sum. The partitions that just exceed or are equal to the modulus select the implicants for the noninverted most significant carryout. The modulus is the test value in this case. The partitions which pass the selection criteria are then decoded as implicants. Bit positions with weight $0*2n$ contribute no gate, those with weight multiplier $1*2n$ contribute the OR gate of the nth bits of the inputs to the adder to the implicant and those with weight $2*2n$ contribute the AND

gate of the nth bits of the inputs to the adder to the implicant. For the inverted form of the most significant carryout the partitions that just fall short of the modulus are selected. They are decoded from their weight combinations by $0*2n$ indicating inclusion of a NOR gate, $1*2n$ for inclusion of a NAND gate, and $2*2n$ indicating no gate for that bit position of the implicant.

For the carry positions less than the most significant, the situation is slightly more complicated. Both noninverted and inverted forms now require two test values, and two sets of implicants are produced and must be appropriatly combined in each case to correctly produce the carry bit. For the inverted form the logical or of the two set of implicants produces the carry out. This means that both sets of implicants may be included in the second level of the NAND-NAND implementation and that two levels of logic still suffice. For the noninverted form the logical AND of the NAND-NAND implementation of the first set of implicants and of the inverted value of the NAND-NAND implementation of the second set of implicants is required. This means that another level of logic is needed for this case.

For the inverted form's first set of implicants, the same selection test and decoding is used as above for the most significant carry bit's inverted form, except with the test value changed. The test value is expressed as the modulus minus the sum of 2n for all n between the modulus width and the position of the carry out, except not including in the sum those n for which 2n is less than the shortfall of the modulus from the next power of 2. The inverted form's second set of implicants are found using another test value which is formed by adding 2n for the nth carry bit to the test value described immediately above. The selection and decoding criteria used here is the same as for the noninverted form of the most significant carryout. Thus, the final NAND-NAND form includes both implicants with only NAND and NOR gates and implicants with only AND gates and OR gates.

For the noninverted form's first set of implicants, the selection and decoding is the same as for the most significant carryout's noninverted form with the test value being the first of the two test values described in the paragraph above. For the second set of implicants the test value, selection, and decoding criteria are all the same as for the second set of implicants in the above paragraph. The difference is in the application of the inverted value of the NAND-NAND implementation of these implicants being logically ANDed to the NAND-NAND implementation of the first set of implicants.

As mentioned earlier in conjunction with the logic reduction methodology, the implicants produced in the NAND-NAND sums of product form may be factored by Boolean algebra to produce a final form that is preferable for actual implementation. This is

definitely the case for the implicants producing the mo adder carry bits derived by the partition method described here. These factorizations are not achievable by any known, general method and must be applied within the capabilities of gate fan-in and fan-out of the technology in which the implementation is being executed.

## A.3 IMPLEMENTATION ACCOMPLISHMENTS

This section summarizes the implementation accomplishments for the QRNS components of the baseline beamformer system. The use of pipeline stages internal to the QRNS component operations has established a pipelined six-gate delay arrangement of the QRNS architecture as a practical choice for implementation of the beamformer system. Both the logic reduction and mod adder carry implicant methodologies described in Section 2 have been used extensively in the generation of the internally pipelined six-gate delay components.

The internal pipelining of the QRNS components is performed in a manner such that each system operation is always at the same stage in the pipeline sequence. Note that this does not have to be the case when internal pipelining is employed. For example, pipelining may be employed after each bit in a systolic implementation of a ripple carry adder. For adder circuitry, this can be an efficient method. However, it does not provide a reasonable implementation for direct multiplication. This systolic bit ripple technique requires that the input bits must be delayed by n delays for the nth bit before processing, and output bits must be realigned bit-wise with corresponding delays after processing for subsequent system use. The internal pipelining of the QRNS components is employed across the full bit width, and ripple alignments and realignments are not necessary.

A.3.1 **QRNS Component Results** – Components include those for conversion to QRNS representation, those for QRNS arithmetic operation, and those for reconversion from QRNS to binary representation.

The conversion to QRNS representation process includes first the decomposition to RNS residues and then the transformation of the two complex RNS residue channels into two QRNS residue channels. The decompositions are dependent upon the near-term and far-term requirements in terms of the input signal word widths and also in the number of QRNS rings employed in the system. The transforms and subsequent QRNS arithmetic operations are dependent only on the number of QRNS rings employed in the system.

A.3.1.1 Decomposition Logic Reductions - Near-term and far-term input signal word-width requirements are examined for 9-bit and 13-bit inputs, respectively. It is assumed that the inputs are 2s complement integer binary base representations. The 9-bit RNS decomposition components will require three pipeline stages. The first stage will be a logic reduction implementation of a table lookup of the four higher-order bits reduced to their modulo residue, and the five lower-order bits reduced to their modulo residue. These residues are added in two pipeline stages using a double pipelined mod adder. The mod adders are described later.

The 13-bit RNS decomposition components will require five pipeline stages. The 13-bit inputs are broken into three segments for residue lookup and requires two modulo adders for adding the segment residues. Logic reduction implementations of table lookups of the four highest-order bits, the next four higher-order bits, and the five lower-order bits, each reduced to their modulo residues, are all performed in the first stage. Two stages are required for each of the modulo adders. Extra pipeline registers are required to maintain alignment of the third residue to the second modulo adder.

Table A-1 summarizes the results of the logic reduction lookups for both the 9-bit and 13-bit input word width cases. All eight moduli needed for far-term dynamic range requirements are included.

TABLE A-1.  LOGIC REDUCTION LOOKUPS

| | GATE COUNTS 9-BIT INPUTS | | | GATE COUNTS 13-BIT INPUTS | | | |
|---|---|---|---|---|---|---|---|
| MODULUS | LSB | MSB | TOTAL | LSB | NSB | MSB | TOTAL |
| 5 | 70 | 32 | 102 | 70 | 26 | 32 | 128 |
| 13 | 54 | 31 | 85 | 54 | ?9 | 35 | 118 |
| 17 | 25 | 12 | 37 | 25 | 24 | 0 | 49 |
| 29 | 23 | 39 | 62 | 23 | 40 | 48 | 111 |
| 37 | 0 | 42 | 42 | 0 | 43 | 43 | 86 |
| 41 | 0 | 40 | 40 | 0 | 43 | 35 | 78 |
| 53 | 0 | 41 | 41 | 0 | 45 | 48 | 93 |
| 61 | 0 | 31 | 31 | 0 | 13 | 42 | 55 |

A.3.2 QRNS Transform Logic Reductions - The QRNS transform and inverse transform components will both require three pipeline stages. One stage again will be used for logic reduction implementation of a table lookup function and two stages will be needed for the double pipelined mod adder or mod subtracter that will be required to complete the transform equation operations.

The QRNS transform equations remove the dependence on the square root of negative one in making complex calculations. This is possible since the equation

$$j^2 = -1 \bmod m_i \qquad \text{(A-1)}$$

has a nonimaginary solution for QRNS moduli $m_i$. QRNS moduli must be integers whose factorization includes only prime numbers that leave a remainder of 1 when divided by 4.

The transform equations produce residue components S and D in the QRNS residue system from the I and Q residues of each modulus that were obtained from the RNS decompositions.

$$S = (I + Qj) \bmod m_i \qquad \text{(A-2)}$$

$$D = (I - Qj) \bmod m_i \qquad \text{(A-3)}$$

The inverse transform equations regenerate the I and Q RNS residues that can be recomposed to binary integer representation of the I and Q output channels.

$$I = (S + D)(m_i + 1)/2 \bmod m_i \qquad \text{(A-4)}$$

$$Q = (D - S)j(m_i + 1)/2 \bmod m_i \qquad \text{(A-5)}$$

Implementation of the transform equations requires multiplication of the Q residue of each respective modulus by the factor j (a constant for each modulus), followed by modulo addition or subtraction for Equation A-4 or A-5, respectively. Alternatively, multiplication by -j, followed by modulo subtraction or addition for Equation A-4 or A-5, respectively, can be implemented. The best choice for each modulus can be selected for the implementations.

Implementation of the inverse transform equations requires first modulo addition or subtraction, then multiplication by the residue constants $(m_i + 1)/2$ or $j(m_i + 1)/2$ for each modulus. Reversing the subtraction order in Equation A-5 allows using instead the constant $-j(m_i + 1)/2$ for that equation. Again the best choice for each modulus can be selected for the implementations.

The multiplications using the transform and inverse transform equation constants shall be implemented using logic reduction sums of products gate structures. Table A-2 lists the residue constant multipliers needed for the transform and inverse transform equations for each of the eight QRNS prime moduli of 6-bit or smaller width. Table A-3 gives the logic reduction gate counts needed for implementation of these constant multiplications.

TABLE A-2.   QRNS TRANSFORM EQUATION CONSTANT MULTIPLIERS

| MODULUS | $j$ | $-j$ | $(m_i + 1)/2$ | $j(m_i + 1)/2$ | $-j(m_i + 1)/2$ |
|---|---|---|---|---|---|
| 5 | 2 | 3 | 3 | 1 | 4 |
| 13 | 3 | 8 | 7 | 9 | 4 |
| 17 | 13 | 4 | 9 | 15 | 2 |
| 29 | 12 | 17 | 15 | 6 | 23 |
| 37 | 6 | 31 | 19 | 3 | 34 |
| 41 | 9 | 32 | 21 | 25 | 16 |
| 53 | 30 | 23 | 27 | 15 | 38 |
| 61 | 11 | 50 | 31 | 36 | 25 |

TABLE A-3.   QRNS TRANSFORM EQUATION CONSTANT
MULTIPLIER LOGIC REDUCTION GATE COUNTS

| MODULUS | $j$ | $-j$ | $(mi + 1)/2$ | $j(mi + 1)/2$ | $-j(mi + 1)/2$ |
|---|---|---|---|---|---|
| 5 | 5 | 5 | 5 | 0 | 3 |
| 13 | 25 | 28 | 16 | 23 | 21 |
| 17 | 27 | 27 | 18 | 25 | 17 |
| 29 | 97 | 87 | 28 | 89 | 89 |
| 37 | 117 | 121 | 36 | 112 | 119 |
| 41 | 126 | 131 | 37 | 129 | 119 |
| 53 | 166 | 207 | 51 | 196 | 213 |
| 61 | 287 | 258 | 42 | 265 | 272 |

A.3.1.3 Modulo Logarithm Logic Reductions — The QRNS system multipliers will require three pipeline stages for operation at the six-gate delay level in each stage. The operations performed are logarithm, then addition, and then antilogarithm in the three stages. The logarithm and antilogarithm are implemented by logic reduction table lookup. The adders needed here are small modulus, subring mod adders that can be performed in one pipeline stage.

The multiplier logic reductions have been completed for each of the six moduli of the baseline system, and for two additional far-term moduli. In each modulus there are several candidates for possible use as the base for the logarithmic operation. These elements are referred to as primitive elements of the particular ring. By taking successive powers of any primitive element, all elements of the ring are generated, and, hence, these elements are also often referred to as generator elements.' Any primitive element of a ring may be used for the logarithmic base in that ring. The best choice for implementation may be selected after examining all of the possibilities.

Different primitive elements could be used for the logarithm and for the antilogarithm, but a change of logarithmic base would then also have to be implemented by another logic reduction. The base change reduction would be inherently smaller than the other reductions since some elements will always map to themselves. However, the use of three, instead of two, reductions would not result in less circuitry. Thus, the same primitive element is selected for both logarithm and antilogarithm table reductions.

Many candidate primitive elements were eliminated by applying individual output reduction techniques. The best candidate individual primitive element reductions were chosen for multiple output reductions based upon the best output combination sense choices as provided by the individual reductions. The best results of these reductions provide the implicants needed to implement the logarithmic operations. Gate counts required for the various candidates for individual and multiple reductions as performed are summarized in Table A-4.

These gate counts are based upon direct form implementation of the NAND-NAND structure. Some further reduction can be achieved by factorization of the implicants. The columns under INDIV in Table A-4 give gates determined by individual output reductions. Only a few primitive elements were selected for multiple reduction. Several output combination senses were tried in each multiple reduction and only the best result is listed in the columns under MULTI in Table A-4.

### TABLE A-4. GATE COUNTS FOR MODULO LOGARITHM LOGIC REDUCTIONS

| MODULUS | PRIMITIVE ELEMENT | LOGARITHM GATES (INDIV/MULTI) | | ANTILOGARITHM GATES (INDIV/MULTI) | | TOTAL GATES (INDIV/MULTI) | |
|---|---|---|---|---|---|---|---|
| 5 | 2 | 4 | 4 | 6 | 6 | 10 | 10 |
|   | 3 | 2 | 2 | 2 | 2 | 4 | 4 |
| 13 | 2 | 25 | 22 | 22 | 21 | 47 | 43 |
|   | 6 | 25 | | 22 | | 47 | |
|   | 7 | 22 | 21 | 22 | 18 | 44 | 39 |
|   | 11 | 22 | | 22 | | 44 | |
| 17 | 3 | 36 | 29 | 29 | 25 | 65 | 54 |
|   | 5 | 39 | | 42 | | 81 | |
|   | 6 | 50 | | 41 | | 91 | |
|   | 7 | 40 | | 46 | | 86 | |
|   | 10 | 48 | | 36 | | 84 | |
|   | 11 | 45 | | 38 | | 83 | |
|   | 12 | 46 | | 48 | | 94 | |
|   | 14 | 33 | 29 | 30 | 28 | 63 | 57 |
| 29 | 2 | 77 | 66 | 102 | 97 | 179 | 163 |
|   | 3 | 72 | 67 | 89 | 76 | 161 | 143 |
|   | 8 | 75 | 69 | 87 | 81 | 162 | 150 |
|   | 10 | 80 | | 100 | | 180 | |
|   | 11 | 77 | | 102 | | 179 | |
|   | 14 | 72 | 69 | 89 | 76 | 161 | 145 |
|   | 15 | 75 | | 87 | | 162 | |
|   | 18 | 80 | | 100 | | 180 | |
|   | 19 | 77 | | 102 | | 179 | |
|   | 21 | 72 | | 89 | | 161 | |
|   | 26 | 75 | | 87 | | 162 | |
|   | 27 | 80 | | 100 | | 180 | |
| 37 | 2 | 153 | | 133 | | 286 | |
|   | 5 | 147 | | 140 | | 287 | |
|   | 13 | 151 | | 120 | | 271 | |
|   | 15 | 150 | | 139 | | 289 | |
|   | 17 | 151 | 119 | 120 | 106 | 271 | 225 |
|   | 18 | 153 | | 133 | | 286 | |
|   | 19 | 150 | | 145 | | 295 | |
|   | 20 | 154 | 127 | 117 | 98 | 271 | 225 |
|   | 22 | 147 | | 140 | | 287 | |
|   | 24 | 154 | | 117 | | 271 | |
|   | 32 | 150 | | 134 | | 264 | |
|   | 35 | 150 | | 145 | | 295 | |

TABLE A-4.  GATE COUNTS FOR MODULO
LOGARITHM LOGIC REDUCTIONS (continued)

| MODULUS | PRIMITIVE ELEMENT | LOGARITHM GATES (INDIV/MULTI) | | ANTILOGARITHM GATES (INDIV/MULTI) | | TOTAL GATES (INDIV/MULTI) | |
|---|---|---|---|---|---|---|---|
| 41 | 6 | 147 | | 139 | | 286 | |
| | 7 | 171 | | 129 | | 300 | |
| | 11 | 157 | | 140 | | 297 | |
| | 12 | 143 | 124 | 171 | 105 | 263 | 229 |
| | 13 | 169 | | 129 | | 298 | |
| | 15 | 142 | | 135 | | 277 | |
| | 17 | 143 | | 148 | | 291 | |
| | 19 | 149 | | 160 | | 309 | |
| | 22 | 162 | | 150 | | 312 | |
| | 24 | 156 | | 140 | | 296 | |
| | 26 | 129 | | 146 | | 275 | |
| | 28 | 161 | | 126 | | 287 | |
| | 29 | 151 | | 125 | | 276 | |
| | 30 | 165 | | 135 | | 300 | |
| | 34 | 163 | | 134 | | 297 | |
| | 35 | 160 | | 143 | | 3.. | |
| 53 | 2 | 254 | | 225 | | 479 | |
| | 3 | 212 | | 241 | | 453 | |
| | 5 | 230 | | 217 | | 447 | |
| | 8 | 221 | | 240 | | 445 | |
| | 12 | 240 | | 204 | | 444 | |
| | 14 | 220 | | 212 | | 432 | |
| | 18 | 200 | 185 | 202 | 182 | 402 | 367 |
| | 19 | 211 | | 211 | | 422 | |
| | 20 | 210 | | 213 | | 423 | |
| | 21 | 236 | | 213 | | 449 | |
| | 22 | 246. | | 194 | | 440 | |
| | 26 | 240 | | 215 | | 455 | |
| | 27 | 237 | | 230 | | 467 | |
| | 31 | 249 | | 197 | | 444 | |
| | 32 | 239 | | 213 | | 452 | |
| | 33 | 207 | | 229 | | 436 | |
| | 34 | 208 | | 209 | | 417 | |
| | 35 | 203 | 178 | 185 | 170 | 388 | 348 |
| | 39 | 223 | | 219 | | 442 | |
| | 41 | 2?3 | | 211 | | 454 | |
| | 45 | 224 | | 212 | | 436 | |
| | 48 | 233 | | 215 | | 448 | |
| | 50 | 209 | | 224 | | 433 | |
| | 51 | 251 | | 218 | | 469 | |

137

TABLE A-4. GATE COUNTS FOR MODULO
LOGARITHM LOGIC REDUCTIONS (continued)

| MODULUS | PRIMITIVE ELEMENT | LOGARITHM GATES (INDIV/MULTI) | | ANTILOGARITHM GATES (INDIV/MULTI) | | TOTAL GATES (INDIV/MULTI) | |
|---|---|---|---|---|---|---|---|
| 61 | 2 | 316 | | 268 | | 584 | |
| | 6 | 276 | 255 | 245 | 219 | 521 | 474 |
| | 7 | 316 | | 268 | | 584 | |
| | 10 | 303 | | 245 | | 548 | |
| | 17 | 303 | | 245 | | 548 | |
| | 18 | 289 | | 259 | | 548 | |
| | 26 | 289 | | 259 | | 548 | |
| | 30 | 289 | | 259 | | 548 | |
| | 31 | 276 | | 245 | | 521 | |
| | 35 | 276 | | 245 | | 521 | |
| | 43 | 276 | | 245 | | 521 | |
| | 44 | 316 | | 268 | | 584 | |
| | 51 | 316 | | 268 | | 584 | |
| | 54 | 303 | | 245 | | 548 | |
| | 55 | 289 | | 259 | | 548 | |
| | 59 | 303 | | 245 | | 548 | |

A.3.1.4 **Subring Mod Adder Development** - The subring mod adders used in the logarithmic modulo multipliers have been defined and modeled for all subrings needed for the baseline QRNS system. Table A-5 summarizes the results of this design work.

TABLE A-5. SUBRING MOD ADDER GATE COUNTS

| MODULUS | GATES | # GATE DELAYS | # NEEDED IN BASELINE |
|---|---|---|---|
| 3 | 12 | 3 | 1 |
| 4 | 9 | 4 | 4 |
| 5 | 39 | 6 | 1 |
| 7 | 28 | 6 | 1 |
| 8 | 18 | 5 | 1 |
| 9 | 38 | 6 | 1 |
| 16 | 29 | 5 | 1 |

These components are implemented with gate structures derived by a combination of logic reduction and engineering judgment. The power of 2 moduli are simply standard binary adder ripple carry implementations. The other modulo adders are implemented with unique gate structures. Mod 3 is easily derived by logic reduction. Mod 9 is efficiently implemented with ripple carry based upon cascading two mod 3 implementations. This

realizes mod 9 as mod 32. Mod 7 is 1 less than a power of 2 and, as such, is implemented by using logic reduction derivation of the mod 7 carry out combined with binary addition with a carry in bit, the carry in bit being supplied by the mod 7 carry out. Mod 5 is 1 more than a power of 2 and, as such, the binary adder carry bit ripple is adjusted to perform carries assuming -1 is included in the sum. Again, logic reduction derivation generates the mod 5 carry out, but here no carry out indicates to include a carry in to the modified binary adder with carry in bit. Other possibilities for implementing these mod adder structures were tried, including using different bit assignments than standard binary representations of the residue magnitudes. For instance, it was found that mod 5 is efficiently implemented using a 1 deficit representation with only 25 gates. However, to be consistant with the other moduli the standard representation is planned for implementation.

For the far term moduli QRNS rings of 53 and 61 two additional subring mod adders will be needed. These are mod 13 and mod 15, respectively. These moduli have 4-bit wide words. Thus, they produce 8-bit wide logic input tables if implementation with logic reduction methods is performed. Using this method, the six-gate delay criteria can be satisfied. Estimated gate counts for these implementations are about 150 gates for either modulus. Using techniques similar to the QRNS ring adders in Section A.3.1.5 permit achievement of seven gate delays for either modulus with counts of 96 gates for mod 13 and 115 gates for mod 15.

A.3.1.5 QRNS Mod Adder and Subtraction Development — The double pipelined mod adders needed for the implementation of the add tree components, as well as in the implementation of the RNS convert and QRNS transform components, have been designed for all rings of the baseline, as well as for the far-term rings of 53 and 61. The design of these adders was formulated by trying many arrangements of the subparts making up the modulo addition. Fast carry bits were generated as described in the adder carry bit methodology in paragraph A.2.2. From these were also generated the implicants needed for adding the modulo fixup when the inputs to the adder produce a sum equal to, or exceeding, the modulus. The selected scheme consists of forming the binary sum and the modulo carryout bit in the first pipeline stage, and in the second stage adding the modulo overflow fixup to the binary sum, and then selecting between the modulo fixup output and the binary sum as indicated by the modulo carryout bit. It is assumed that the inputs to the adders are available from D type flip-flops (DFF), and either the noninverted or inverted form of each input may be used from the DFF. This applies also to the second pipeline stage. Double-pipelined mod subtracts needed for the implementation of the QRNS transforms have been designed following a method analogous to the mod adder implementations.

Table A-6 summarizes the gate counts for the modulo adders. The gates required for the pipeline stages are included in the counts as well. It may be noted that the six-gate delay limit appears to be an optimum for these adder structures. Decreasing the latency below this level can only be obtained at the expense of many more gates required. Relaxing the criteria to a seven-gate delay limit does not allow an appreciable further reduction in the gate counts.

Table A-7 summarizes the gate counts for the modulo subtracts. The high level logic simulation by test pattern generation and verification for these logic designs has been completed, as well.

### TABLE A-6. DOUBLE PIPELINE FAST MOD ADDER GATE COUNTS (6 DELAY)

| MODULUS | FIRST PIPELINE REGISTER | BINARY SUM | MODULO CARRYOUT BIT | SECOND PIPELINE REGISTER | FIXUP AND SELECT | TOTAL GATES |
|---|---|---|---|---|---|---|
| 5 | 30 | 17 | 6 | 20 | 12 | 85 |
| 13 | 40 | 29 | 13 | 25 | 19 | 126 |
| 17 | 50 | 43 | 18 | 30 | 26 | 167 |
| 29 | 50 | 43 | 18 | 30 | 26 | 167 |
| 37 | 60 | 59 | 24 | 35 | 35 | 213 |
| 41 | 60 | 59 | 24 | 35 | 36 | 214 |
| 53 | 60 | 59 | 33 | 35 | 39 | 226 |
| 61 | 60 | 59 | 28 | 35 | 33 | 215 |

### TABLE A-7. DOUBLE PIPELINE FAST MOD SUBTRACT GATES (6 DELAY)

| MODULUS | FIRST PIPELINE REGISTER | BINARY DIFF | BINARY COMPARE | SECOND PIPELINE REGISTER | FIXUP AND SELECT | TOTAL GATES |
|---|---|---|---|---|---|---|
| 5 | 30 | 17 | 5 | 20 | 12 | 84 |
| 13 | 40 | 29 | 8 | 25 | 18 | 120 |
| 17 | 50 | 43 | 12 | 30 | 25 | 160 |
| 29 | 50 | 43 | 12 | 30 | 25 | 160 |
| 37 | 60 | 60 | 17 | 35 | 37 | 209 |
| 41 | 60 | 60 | 17 | 35 | 34 | 206 |
| 53 | 60 | 60 | 17 | 35 | 34 | 206 |
| 61 | 60 | 60 | 17 | 35 | 32 | 204 |

# REFERENCES

[1]  V. F. Gabriel, "Using Spectral Estimation Techniques in Adaptive Processing Antenna Systems," IEEE Transactions on Antennas and Propagation, Volume AP-34, No. 3, pp 291-300, March 1986.

[2]  D. F. Elliott and K. R. Rao, Fast Transforms: Algorithms, Analyses, Applications, Academic Press, Inc., 1982.

[3]  J. T. Mayhan and F. W. Floyd, "Factors Affecting the Performance of Adaptive Antenna Systems and Some Evaluation Techniques," MIT Lincoln Lab Technical Note 1979-14, August 1979.

[4]  W. E. Rodgers and R. T. Compton, "Adaptive Array Bandwidth with Tapped Delay-Line Processing," IEEE Transactions on Aerospace and Electronic Systems, Volume AES-15, No. 1, pp 21-27, January 1979.

[5]  J. Capon, "High Resolution Frequency-Wavenumber Spectrum Analysis," Proceedings IEEE, Volume 57, No. 8, pp 1408-18, August 1969.

[6]  J. P. Burg, "Maximum Entropy Spectral Analysis, "Proceedings of the 37th Meeting of the Society of Exploration Geophysicists, pp 34-40, 1967.

[7]  R. O. Schmidt, "Multiple Emitter Location and Signal Parameter Estimation," IEEE Trans. of Antennas and Propagation, Volume AP-34, No. 3, pp 276-280, March 1986.

[8]  A. V. Oppenheim and R. W. Schafer, Digital Signal Processing, Prentice-Hall, Inc., 1975.

[9]  R. Nitzberg, "Effect of Computational Errors on Adaptive Processing when Using a Convariance Estimation Procedure," RADC Symposium on Adaptive Arrays, Volume 1, pp 250-269, 1980.

[10] M. A. Soderstrand, W. K. Jenkins, G. A. Jullien, and F. J. Taylor, editors, Residue Number System Arithmetic: Modern Applications in Digital Signal Processing, IEEE Press, 1986.

[11] H. J. Nussbaumer, Fast Fourier Transform and Convolution Algorithms, Springer-Verlag, 1981.

## Claims

1.  A digital radar system for digitally encoding inputs and outputs associated with radar signals, comprising:
    a transmit/receive module for transmitting and receiving the radar signals, said module comprising an analog antenna and an amplifier;
    an analog-to-digital converter in direct communication with said transmit/receive module for converting between analog and digital formats radar signal phase, amplitude, and timing signals; and
    a digital beamforming processor in communication with said converter for generating a plurality of digital beamforming control signals and communicating said digital beamforming control signals with said transmit/receive module for digitally controlling input and output characteristics of the radar signals.

2.  The system of Claim 1, wherein said digital beamforming processor comprises a digital database for radar signal analyses.

3.  The system of Claim 1, further comprising a digital beam-steering processor and synchronizer for proces-

141

sing a plurality of beam-steering signals and generating a plurality of synchronizing signals.

4.  The system of Claim 1, further comprising a fiber-optics manifold for transmitting said digital beamforming control signals.

5.  The system of Claim 1, further comprising:
    a digital-to-analog frequency synthesizer for synthesizing a plurality of analog radar signals, said synthesizer further comprising a plurality of subarrays in communication with said transmit/receive module for synthesizing a plurality of independent radar signals.

6.  The system of Claim 5, further comprising a switch matrix in communication with said subarrays for selectively controlling a predetermined number of said subarrays.

7.  The system of Claim 6, wherein said beamforming processor comprises control circuitry for independently dedicating a predetermined number of said subarrays to perform a prescribed set of radar operations.

8.  The system of Claim 1, further comprising:
    a Hilbert transform filter in communication with said converter for transforming digital signals from said converter to a plurality of digital complex sample signals;
    a baseband transform filter in communication with said Hilbert transform filter for transforming said digital complex sample signals to a plurality of baseband complex sample signals; and
    low-pass filter in communication between said Hilbert transform filter and said beamforming processor for filtering a predetermined aspect of said complex sample signals and communicating a plurality of filtered sample signals to said beamforming processor.

9.  The system of Claim 1, wherein said digital beamforming processor controls beamforming in one plane, and said system further comprises an analog beamforming circuit for providing analog beamforming control.

10. A digital radar system, comprising:
    a transmit/receive module for transmitting and receiving radar signals, said module comprising an antenna and an amplifier;
    an analog-to-digital converter in direct communication with said transmit/receive module for converting between analog and digital signals to digitally encode radar signal phase, amplitude and timing inputs and outputs; and
    a digital beamforming processor in communication with said converter for generating digitally-encoded inputs to control operation of a portion of said transmit/receive module and digitally-encoded outputs representing the radar signals.

11. The system of Claim 10, wherein said digital beamforming processor comprises a digital database for analysis of radar signals.

12. The system of Claim 10, further comprising a digital beam-steering processor and synchronizer for processing a plurality of beam-steering signals and generating a plurality of synchronizing signals.

13. The system of Claim 10, further comprising an optical network manifold for optically transmitting said digital beamforming control signals.

14. The system of Claim 10, further comprising:
    a digital-to-analog frequency synthesizer in communication with said transmit/receive module for synthesizing a plurality of analog radar signals and communicating said independent radar signals to said transmit/receive module.

15. The system of Claim 14, wherein said transmit/receive module further comprises:
    a plurality of subarrays for transmitting and receiving separate portions of the radar signals; and
    a switch matrix in communication between said subarrays and said converter for selectively controlling a predetermined number of said subarrays.

16. The system of Claim 15, wherein said beamforming processor comprises control circuitry for independently controlling a predetermined number of said subarrays.

17. The system of Claim 10, further comprising:
a Hilbert transform filter in communication with said converter for transforming digital signals from said converter to a plurality of digital complex sample signals;
a baseband transform filter in communication with said Hilbert transform filter for transforming said digital complex sample signals to a plurality of baseband complex sample signals; and
at least one low-pass filter in communication between said Hilbert transform filter and said beamforming processor for filtering a predetermined aspect of said complex sample signals and communicating a plurality of filtered sample signals to said beamforming processor.

18. The system of Claim 10, wherein said digital beamforming processor controls beamforming in one plane, and said system further comprises an analog beamforming circuit for providing analog beamforming control.

19. A method of digitally encoding inputs and outputs associated with radar signals within a radar system, comprising the steps of:
receiving and amplifying the radar signals using a transmit/receive module;
converting amplified analog radar phase, amplitude, and timing signals directly from said transmit-/receive module to digital radar phase, amplitude, and timing signals using an analog-to-digital converter; and
generating a plurality of digital beamforming control signals in response to said digital radar signals.

20. The method of Claim 19, further comprising the step of filtering a predetermined aspect of said digital radar signals.

21. The method of Claim 19, further comprising the steps of processing a plurality of beam-steering signals and generating a plurality of synchronizing signals.

22. The method of Claim 19, further comprising the step of synthesizing a plurality of analog radar signals in response to said digital beamforming control signals using a digital-to-analog synthesizer.

23. The method of Claim 22, further comprising the steps of:
synthesizing a plurality of independent radar signals using said synthesizer;
communicating between a plurality of subarrays and said synthesizers; and
selectively controlling a predetermined number of said subarrays.

24. The method of Claim 23, further comprising the step of independently dedicating a predetermined number of said subarrays to perform a prescribed set of radar operations.

25. The method of Claim 19, wherein said digital beamforming processing step further comprises the step of analyzing radar signal from said subarrays using a digital database.

26. The method of Claim 19, further comprising the steps of:
transforming digital signals from said converter to a plurality of digital complex sample signals;
transforming said digital complex sample signals to a plurality of baseband complex sample signals;
filtering a predetermined aspect of said complex sample signals; and
communicating a plurality of filtered sample signals to said beamforming processor.

27. A method of digitally encoding radar signal phase, amplitude and timing inputs and outputs, comprising the steps of:
transmitting and receiving analog signal inputs and outputs using a transmit/receive module having an antenna and an amplifier;
converting said analog signal inputs and outputs directly from said transmit/receive module to digital signal inputs and outputs; and
generating digitally encoded inputs and outputs to control radar signal phase, amplitude, timing, and radio frequency operation of said transmit/receive module.

**28.** The method of Claim 27, further comprising the step of analyzing the radar signal inputs and outputs using said a digital database.

**29.** The method of Claim 27, further comprising the step of digitally processing a plurality of beam-steering signals and generating a plurality of synchronizing signals.

**30.** The method of Claim 27, further comprising the step of optically transmitting said transmit/receive module digital control inputs and outputs.

**31.** The method of Claim 27, further comprising the steps of:
synthesizing a plurality of independent radar signals; and
emitting said independent radar signals from a plurality of independent radar subarrays, said subarrays being within said transmit/receive module.

**32.** The method of Claim 27, further comprising the step of:
communicating between a plurality of subarrays and said processor; and
selectively controlling a predetermined number of said subarrays.

**33.** The method of Claim 27, further comprising the step of independently dedicating a predetermined number of said subarrays to perform a prescribed set of radar operations.

**34.** The method of Claim 27, further comprising the steps of:
transforming digital signals from said converter to a plurality of digital complex sample signals;
transforming said digital complex sample signals to a plurality of baseband complex sample signals; and
filtering a predetermined aspect of said complex sample signals.

**35.** A digital radar system for digitally encoding inputs and outputs associated with radar signals, comprising:
a transmit/receive module for transmitting a set of transmitted radar signals and receiving a set of received radar signals, said module comprising a bandpass filter for filtering a predetermined aspect of said received radar signals;
an analog-to-digital converter for bandpass sampling the output of said bandpass filter from said transmit/receive module and converting said predetermined aspect of said received radar signals into digital representation of said radar signals, whereby said converter samples said predetermined aspect of said received radar signals at the information rate of said received radar signals to eliminate the need for conversion of said signals to I.F. signals in order to former to said digital representations; and
a digital beamforming processor in communication with said converter for generating a plurality of digital beamforming controls signals and communicating said digital beamforming control signals with said transmit/receive module for digitally controlling input and output characteristics of the the radar signals.

144

*FIG. 1*

EP 0 480 737 A2

FIG. 2

FIG. 3

FIG. 4

ARRAY

RADAR

*FIG. 5a*

LARGE
ARRAY

RADAR

*FIG. 5b*

ARRAY

UWB
RADAR

*FIG. 5c*

ARRAY

$T_2$

$T_1$

MULTI
BEAM

*FIG. 5d*

SENSOR
SPACE

$S_1$

$S_2$

$S_3$

$S_N$

*FIG. 6a*

$T_1$

TARGET
SPACE

$T_2$

$T_3$

$T_M$

*FIG. 6b*